# EUROPÄISCHE PATENTSCHRIFT

(11) **EP 4 019 194 B1**
(45) Veröffentlichungstag und Bekanntmachung des Hinweises auf die Patenterteilung: **22.10.2025**
(21) Anmeldenummer: 21209764.6
(22) Anmeldetag: 23.11.2021
(51) Int. Cl.: B25F 5/02, A01G 3/00

(54) **BETÄTIGUNGSVORRICHTUNG FÜR EINE, INSBESONDERE STABGEBUNDENE, WERKZEUGMASCHI-NE, WERKZEUGMASCHINE, VERFAHREN ZU EINEM BETÄTIGEN DER WERKZEUGMASCHINE**
MACHINE TOOL, ACTUATING DEVICE FOR A MACHINE TOOL, IN PARTICULAR A ROD-MOUNTED MACHINE TOOL, METHOD FOR OPERATING THE MACHINE TOOL
DISPOSITIF D'ACTIONNEMENT POUR UNE MACHINE-OUTIL, EN PARTICULIER LIÉE À LA BARRE, MACHINE-OUTIL, PROCÉDÉ DE FONCTIONNEMENT DE LA MACHINE-OUTIL

(30) Priorität: 23.12.2020 DE 102020216563
(43) Veröffentlichungstag der Anmeldung: 29.06.2022
(73) Patentinhaber: Robert Bosch GmbH, 70442 Stuttgart (DE)
(72) Erfinder: HARRIS, Alex, IP 142RJ Suffolk Stowmarket (GB); ZADOR, Endre, IP 38DH Ipswich, Suffolk (GB); BISSELL, John, IP6 0AN Claydon, Suffolk (GB)

(56) Entgegenhaltungen:
- CN-B- 102 396 351
- DE-A1- 102011 089 717
- US-A- 4 760 646

## Beschreibung

### Stand der Technik

Es ist bereits eine Betätigungsvorrichtung für eine Werkzeugmaschine, mit zumindest einer zumindest im Wesentlichen stabförmigen Grundeinheit, mit zumindest zwei beabstandet voneinander angeordneten Handgriffeinheiten, die jeweils dazu vorgesehen sind, von zumindest einer Hand eines Benutzers zumindest größtenteils umgriffen zu werden, wobei die zwei Handgriffeinheiten jeweils an der Grundeinheit angeordnet sind oder zumindest teilweise als Teil der Grundeinheit ausgebildet sind, und mit zumindest einer Schalteinheit zu einer Steuerung von zumindest einer Funktion der Werkzeugmaschine, vorgeschlagen worden. Ferner sei auf die Druckschrift DE 10 2011 089 717 A1 verwiesen.

### Offenbarung der Erfindung

Die Erfindung betrifft eine Betätigungsvorrichtung mit den Merkmalen des Anspruchs 1. Zweckmäßige Weiterbildungen ergeben sich aus den abhängigen Ansprüchen.

Vorzugsweise ist das Betätigungselement zu einer Bewegung entlang der zumindest zwei unterschiedlichen Bewegungspfade vorgesehen, wobei insbesondere jedem der unterschiedlichen Bewegungspfade eine unterschiedliche Funktion, bevorzugt ein unterschiedlicher Schaltvorgang der Schalteinheit, zugeordnet ist. Bevorzugt ist das Betätigungselement dazu vorgesehen, bei einem Betätigen zumindest teilweise entlang eines der zumindest zwei Bewegungspfade bewegt zu werden. Insbesondere schneiden sich die zumindest zwei unterschiedlichen Bewegungspfade nicht. Bevorzugt verlaufen die zumindest zwei unterschiedlichen Bewegungspfade an keiner Stelle entlang einer gemeinsamen Strecke.

Besonders bevorzugt sind die zumindest zwei unterschiedlichen Bewegungspfade über zumindest ein Anfang/Ende aneinander angeordnet. In einer Ausgestaltung der Betätigungsvorrichtung, wobei das Betätigungselement entlang mehr als zwei unterschiedlichen Bewegungspfaden relativ zur Grundeinheit und/oder der weiteren Handgriffeinheit beweglich gelagert ist, ist jeder Bewegungspfad der unterschiedlichen Bewegungspfade jeweils über zumindest ein Anfang/Ende des jeweiligen Bewegungspfads an zumindest einem Anfang/Ende eines anderen Bewegungspfads der unterschiedlichen Bewegungspfade angeordnet. Die zumindest zwei Bewegungspfade unterscheiden sich vorzugsweise zumindest über eine Haupterstreckungsrichtung relativ zur Längsachse der Grundeinheit, über eine Krümmung und/oder über eine Grundform. Vorzugsweise unterscheiden sich die zumindest zwei Bewegungspfade nicht ausschließlich über eine Verschiebung relativ zu, insbesondere um oder entlang, der Längsachse der Grundeinheit. Insbesondere ist das Betätigungselement dazu vorgesehen, zu einer Betätigung einer Funktion der Werkzeugmaschine, insbesondere der Schalteinheit, entlang eines der Bewegungspfade bewegt zu werden. Vorzugsweise ist die Handgriffeinheit zumindest im Wesentlichen vollständig durch das Betätigungselement ausgebildet. Insbesondere ist die weitere Handgriffeinheit zumindest im Wesentlichen vollständig über zumindest ein, insbesondere genau ein, Griffstück ausgebildet, welches insbesondere an der Grundeinheit befestigt ist oder als Teil der Grundeinheit ausgebildet ist. Alternativ ist denkbar, dass die weitere Handgriffeinheit durch eine Mehrzahl von Handgriffelementen ausgebildet ist, welche jeweils an der Grundeinheit angeordnet, insbesondere befestigt, sind. Insbesondere unterscheiden sich die zwei Handgriffeinheiten von zwei relativ zueinander bewegbaren Betätigungselementen einer Werkzeugmaschine, beispielsweise einer Kombination aus einem betätigbaren Entsperrschalter und einem betätigbaren Trigger-Schalter. Die zwei Handgriffeinheiten sind insbesondere ausschließlich durch die bewegbare Lagerung des Betätigungselements, welches die Handgriffeinheit ausbildet, entlang der zwei unterschiedlichen Bewegungspfade relativ zueinander bewegbar. Die zwei Handgriffeinheiten sind bevorzugt entlang der Längsachse der Grundeinheit beabstandet voneinander an der Grundeinheit angeordnet.

Bevorzugt folgt der zumindest eine Bewegungspfad einer Rotationsbewegung um die Längsachse der Grundeinheit, insbesondere im und/oder gegen einen Uhrzeigersinn. Der zumindest eine Bewegungspfad folgt insbesondere einer Rotationsbewegung von mindestens 15°, bevorzugt von mindestens 30° und besonders bevorzugt von mindestens 45°, um die Längsachse der Grundeinheit. Vorzugsweise folgt der zumindest eine Bewegungspfad einer Rotationsbewegung von höchstens 120°, vorzugsweise höchstens 90° und besonders bevorzugt höchstens 60°, um die Längsachse der Grundeinheit. Besonders bevorzugt folgt der zumindest eine Bewegungspfad einer Rotationsbewegung innerhalb einer zumindest im Wesentlichen senkrecht zur Längsachse der Grundeinheit und/oder der Betätigungseinheit ausgerichteten Ebene. Unter "im Wesentlichen senkrecht" soll insbesondere eine Ausrichtung einer Geraden, einer Ebene oder einer Richtung, insbesondere der oben genannten Ebene, relativ zu einer anderen Geraden, einer anderen Ebene oder einer Bezugsrichtung, insbesondere der Längsachse der Grundeinheit, verstanden werden, wobei die Gerade, die Ebene oder die Richtung und die andere Gerade, die andere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2°, aufweist. Alternativ ist denkbar, dass der zumindest eine Bewegungspfad schräg zu einer zumindest im Wesentlichen senkrecht zur Längsachse der Grundeinheit und/oder der Betätigungseinheit ausgerichteten Ebene ausgebildet ist. Bevorzugt folgt zumindest ein weiterer Bewegungspfad der zumindest zwei Bewegungspfade einer von einer Rotationsbewegung verschiedenen Bewegung. Alternativ ist vorstellbar, dass der Bewegungspfad und der weitere Bewegungspfad unterschiedlichen Rotationsbewegungen folgen. Vorzugsweise ist das Betätigungselement durch eine Bewegung des Betätigungselements entlang des Bewegungspfads, insbesondere durch eine Rotationsbewegung, entlang des weiteren Bewegungspfads oder entlang eines anderen Bewegungspfads entsperrbar, insbesondere aus einer Sperrstellung herausbewegbar. Insbesondere ist durch eine Bewegung des Betätigungselements entlang des Bewegungspfads, insbesondere durch eine Rotationsbewegung, eine weitere Bewegung des Betätigungselements entlang des weiteren Bewegungspfads und/oder des anderen Bewegungspfads freigebbar. Alternativ ist durch eine Bewegung des Betätigungselements entlang des weiteren Bewegungspfads und/oder entlang des anderen Bewegungspfads eine weitere Bewegung des Betätigungselements entlang des Bewegungspfads freigebbar.

Bevorzugt ist das Betätigungselement dazu vorgesehen, bei einem Bedienen der Betätigungsvorrichtung von einer Hand des Benutzers gegriffen, insbesondere zumindest größtenteils umgriffen, zu werden. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist das Betätigungselement dazu vorgesehen, zu einem Betätigen und/oder zu einem Bedienen der Betätigungsvorrichtung um die Längsachse des Betätigungselements zumindest im Wesentlichen vollständig von der Hand des Benutzers übergriffen zu werden. Bevorzugt ist das Betätigungselement derart ausgebildet und/oder angeordnet, dass die Hand des Benutzers das Betätigungselement zum Betätigen und/oder zum Bedienen der Betätigungsvorrichtung um die Längsachse der Grundeinheit und/oder des Betätigungselements zumindest größtenteils, insbesondere zumindest im Wesentlichen vollständig, umschließt. Bevorzugt ist das Betätigungselement relativ zu der weiteren Handgriffeinheit und relativ zu der Grundeinheit beweglich gelagert. Insbesondere ist das Betätigungselement dazu vorgesehen, zu einem Betätigen über die zumindest zwei unterschiedlichen Bewegungspfade relativ zu der weiteren Handgriffeinheit und/oder relativ zu der Grundeinheit bewegt zu werden. Vorzugsweise ist das Betätigungselement dazu vorgesehen, auf dem Bewegungspfad, der einer Rotationsbewegung folgt, um die Grundeinheit, insbesondere die Längsachse der Grundeinheit, bewegt zu werden. Insbesondere ist das Betätigungselement derart angeordnet und/oder ausgebildet, dass es bei einer Bewegung auf dem Bewegungspfad entlang einer Außenfläche der Grundeinheit bewegt wird. Es ist denkbar, dass das Betätigungselement einteilig ausgebildet ist oder aus einer Mehrzahl von, insbesondere genau zwei, Teilstücken zusammengesetzt ist, welche vorzugsweise in einer Anordnung an oder um die Grundeinheit aneinander befestigt sind und insbesondere das Betätigungselement bilden.

Vorzugsweise ist die Längsachse der Grundeinheit als eine Haupterstreckungsachse der Grundeinheit ausgebildet und/oder zumindest im Wesentlichen parallel zur Haupterstreckungsachse der Grundeinheit ausgerichtet. Unter "im Wesentlichen parallel" soll insbesondere eine Ausrichtung einer Geraden, einer Ebene oder einer Richtung, insbesondere der Längsachse der Grundeinheit, relativ zu einer anderen Geraden, einer anderen Ebene oder einer Bezugsrichtung, insbesondere der Haupterstreckungsachse der Grundeinheit, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2°, aufweist. Bevorzugt ist die Längsachse der Grundeinheit zumindest im Bereich der zumindest einen Handgriffeinheit als eine Mittelachse der Grundeinheit ausgebildet. Unter einer "Haupterstreckungsachse" eines Bauteils, insbesondere der Grundeinheit, soll dabei insbesondere eine Achse verstanden werden, welche parallel zu einer längsten Kante eines kleinsten geometrischen Quaders verläuft, welcher das Bauteil gerade noch vollständig umschließt, und welche vorzugsweise durch einen geometrischen Mittelpunkt des Quaders verläuft. Vorzugsweise ist die Grundeinheit im Bereich der Handgriffeinheit zylinderförmig ausgebildet. Vorzugsweise ist die Längsachse des Betätigungselements als eine Haupterstreckungsachse des Betätigungselements ausgebildet und/oder zumindest im Wesentlichen parallel zur Haupterstreckungsachse des Betätigungselements ausgerichtet. Bevorzugt ist die Längsachse des Betätigungselements als eine Mittelachse des Betätigungselements ausgebildet, welche insbesondere das Betätigungselement nicht schneidet und/oder zumindest größtenteils von dem Betätigungselement umschlossen ist. Insbesondere ist das Betätigungselement entlang der Längsachse des Betätigungselements hohl ausgebildet. In einer bevorzugten Ausgestaltung ist das Betätigungselement zumindest im Wesentlichen stabförmig ausgebildet. Unter "im Wesentlichen stabförmig" soll insbesondere ein Bauteil, insbesondere die Grundeinheit, verstanden werden, wobei eine längste Kante eines kleinsten geometrischen Quaders, welcher das Bauteil gerade noch vollständig umschließt, mindestens viermal, vorzugsweise mindestens fünfmal, bevorzugt mindestens sechsmal und ganz besonders bevorzugt mindestens siebenmal, so groß ist wie zwei senkrecht zueinander und jeweils senkrecht zu der längsten Kante ausgerichtete Kanten des Quaders.

Insbesondere kann die Schalteinheit zumindest eine Elektronikeinheit umfassen. Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt umfasst die Schalteinheit zumindest ein Schaltelement zu einer Steuerung der zumindest einen Funktion der Werkzeugmaschine, insbesondere zu einer Ansteuerung einer Antriebseinheit der Werkzeugmaschine und/oder zu einer Freischaltung einer Energieversorgung der Antriebseinheit. Vorzugsweise ist das zumindest eine Schaltelement in Abhängigkeit von einer Bewegung des Betätigungselements von dem Betätigungselement mittelbar, insbesondere über zumindest ein Unterbetätigungselement der Schalteinheit, und/oder unmittelbar betätigbar, insbesondere mechanisch, elektrisch und/oder magnetisch betätigbar. Das zumindest eine Schaltelement kann insbesondere als ein elektrischer Schalter, als ein Potentiometer, als ein Hall-Sensor oder als ein anderes, einem Fachmann als sinnvoll erscheinendes Schaltelement ausgebildet sein. Vorzugsweise ist das zumindest eine Schaltelement derart angeordnet und/oder ausgebildet, dass das zumindest eine Schaltelement von dem Betätigungselement nach einer Bewegung des Betätigungselements entlang von den zumindest zwei, insbesondere genau zwei, unterschiedlichen Bewegungspfaden betätigbar ist. Es ist denkbar, dass das Betätigungselement entlang von mehr als zwei unterschiedlichen Bewegungspfaden beweglich gelagert ist, beispielsweise zusätzlich entlang des anderen Bewegungspfads. Vorzugsweise kann die Schalteinheit eine Mehrzahl von Schaltelementen, insbesondere eine Anzahl von Schaltelementen entsprechend einer Anzahl von unterschiedlichen Bewegungspfaden, entlang von denen das Betätigungselement beweglich gelagert ist, aufweisen, wobei die Antriebseinheit in Abhängigkeit von einer Betätigung jedes Schaltelements ansteuerbar ist. Insbesondere ist das Betätigungselement dazu vorgesehen, bei einer Bewegung entlang eines der zwei Bewegungspfade, insbesondere entlang des Bewegungspfads oder entlang des weiteren Bewegungspfads, jeweils zumindest, insbesondere genau, ein Schaltelement der Schalteinheit zu betätigen. Die Elektronikeinheit ist vorzugsweise dazu eingerichtet, in Abhängigkeit von zumindest einem Schaltsignal eines Schaltelements der Schalteinheit und/oder in Abhängigkeit von zumindest einem Signal von zumindest einem Positionssensorelement der Schalteinheit, das zu einer Erfassung einer Position einer Bearbeitungseinheit der Werkzeugmaschine und/oder eines Werkzeugmaschinensystems eingerichtet ist, eine Antriebsrichtung und/oder eine Antriebsgeschwindigkeit der Antriebseinheit zu ermitteln. Vorzugsweise ist die Prozessoreinheit der Elektronikeinheit, insbesondere zumindest ein Mikroprozessor, zumindest eine Schaltung, insbesondere eine anwendungsspezifische integrierte Schaltung, o. dgl., zu einer Ermittlung einer Antriebsrichtung, insbesondere einer Soll-Antriebsrichtung, und/oder einer Antriebsgeschwindigkeit, insbesondere einer Soll-Antriebsgeschwindigkeit, der Antriebseinheit eingerichtet. Vorzugsweise ist die Prozessoreinheit auf zumindest einer Leiterplatte der Elektronikeinheit angeordnet. Insbesondere sind Schaltelemente der Schalteinheit und/oder das zumindest eine Positionssensorelement signalübertragungstechnisch mit der Prozessoreinheit verbunden, insbesondere über die Leiterplatte. Bevorzugt weist die Schalteinheit für jeden Bewegungspfad des Betätigungselements zumindest eine Schaltkonfiguration auf, wobei insbesondere in jeder Schaltkonfiguration jeweils eine andere Kombination von Schaltelementen der Schalteinheit betätigt ist.

Bevorzugt sind die zumindest zwei unterschiedlichen Bewegungspfade mechanisch durch zumindest eine Führung, insbesondere eine Kulissenführung, der Schalteinheit vorgegeben. Bevorzugt sind die Bewegungspfade, insbesondere direkt, angrenzend aneinander ausgebildet. Vorzugsweise ist das Betätigungselement lediglich entlang der von der zumindest einen Führung vorgegebenen Bewegungspfade bewegbar, insbesondere in einer von der zumindest einen Führung vorgegebenen Abfolge von Bewegungen. Alternativ ist vorstellbar, dass das Betätigungselement entlang von einer Mehrzahl von Bewegungspfaden bewegbar, insbesondere frei beweglich gelagert, ist und dass die zumindest zwei unterschiedlichen Bewegungspfade elektronisch und/oder digital, insbesondere durch die Elektronikeinheit, vorgegeben sind. Insbesondere ist denkbar, dass die Schalteinheit zumindest ein Sensorelement umfasst, das dazu eingerichtet ist, Positionen des Betätigungselements zu erfassen. Insbesondere kann in der Speichereinheit der Elektronikeinheit eine Abfolge von Positionen des Betätigungselements entsprechend Bewegungen des Betätigungselements entlang der zumindest zwei Bewegungspfade hinterlegt sein. Insbesondere kann die Elektronikeinheit dazu eingerichtet sein, eine Abfolge von von dem zumindest einen Sensorelement erfassten Positionen des Betätigungselements mit der in der Speichereinheit hinterlegten Abfolge von Positionen zu vergleichen und insbesondere in Abhängigkeit von einer Übereinstimmung die Antriebseinheit anzusteuern.

Bevorzugt bildet die Grundeinheit zumindest teilweise ein Gehäuse der Betätigungsvorrichtung und/oder der Werkzeugmaschine aus. Insbesondere ist das Betätigungselement beweglich an der Grundeinheit, insbesondere an einer Außenseite der Grundeinheit, gelagert. Insbesondere bildet das Betätigungselement einen Handgriff der stabgebundenen Werkzeugmaschine aus. Vorzugsweise weist die Grundeinheit, insbesondere in einem Bereich des Betätigungselements, eine sich zumindest im Wesentlichen senkrecht zu der Längsachse der Grundeinheit erstreckende elliptische, kreisförmige, ovale, polygonale, kreissegmentförmige oder ellipsensegmentförmige Querschnittsfläche auf. Bevorzugt weisen/weist die Handgriffeinheit und/oder die weitere Handgriffeinheit parallel zur Längsachse der Grundeinheit eine maximale Längserstreckung von mindestens 10 cm, vorzugsweise mindestens 15 cm, bevorzugt mindestens 20 cm, ganz bevorzugt mindestens 30 cm und ganz besonders bevorzugt mindestens 40 cm, auf.

Bevorzugt sind die zumindest zwei Handgriffeinheiten jeweils zumindest teilweise röhrenartig und/oder zylinderförmig ausgebildet. Vorzugsweise sind die zwei Handgriffeinheiten zumindest im Wesentlichen koaxial zueinander an der Grundeinheit angeordnet. Unter "im Wesentlichen koaxial" soll insbesondere verstanden werden, dass die zwei Handgriffeinheiten zumindest eine gemeinsame Achse umfassen, die parallel zur Längsachse der Grundeinheit angeordnet ist, und welche jede der zwei Handgriffeinheiten zumindest teilweise schneidet. Vorzugsweise sind die zwei Handgriffeinheiten derart angeordnet, dass Haupterstreckungsachsen der zwei Handgriffeinheiten zumindest im Wesentlichen parallel zueinander ausgerichtet sind und entlang der Längsachse der Grundeinheit betrachtet einen minimalen Abstand von höchstens 4 cm, vorzugsweise höchstens 3 cm, bevorzugt höchstens 2 cm und ganz besonders bevorzugt von unter 1 cm, aufweisen. Vorzugsweise ist die weitere Handgriffeinheit unbeweglich an der Grundeinheit angeordnet, insbesondere befestigt, und/oder einteilig mit der Grundeinheit ausgebildet. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Alternativ ist denkbar, dass die weitere Handgriffeinheit über eine Schraub- oder Klebeverbindung an der Grundeinheit befestigt ist. Insbesondere bildet die weitere Handgriffeinheit einen Handgriff der Werkzeugmaschine aus. Bevorzugt sind die zwei Handgriffeinheiten dazu vorgesehen, zu einem Bedienen der zumindest einen Funktion der Werkzeugmaschine, insbesondere einem Antrieb eines Werkzeugs der Werkzeugmaschine und/oder eines Werkzeugmaschinensystems, und zu einem Halten der Werkzeugmaschine jeweils von einer Hand eines Benutzers umgriffen zu werden. Insbesondere ist die Betätigungsvorrichtung dazu vorgesehen, von zwei Händen eines Benutzers bedient zu werden, wobei jeweils eine Hand des Benutzers an einer der zwei Handgriffeinheiten angeordnet ist.

Durch die erfindungsgemäße Ausgestaltung der Betätigungsvorrichtung kann eine vorteilhaft intuitive Bedienung ermöglicht werden. Vorteilhaft kann eine Bedienung einer motorisch angetriebenen, insbesondere stabgebundenen, Werkzeugmaschine einer Bedienung eines manuellen stabgebundenen Werkzeugs für ein ähnliches Benutzererlebnis nachempfunden werden. Es kann eine vorteilhaft komfortable Bedienung einer Werkzeugmaschine erreicht werden, vorzugsweise in mehreren unterschiedlichen Griffhaltungen. Es kann ein vorteilhaft einfaches und intuitives Führen einer Werkzeugmaschine ermöglicht werden, insbesondere ohne ein versehentliches Aktivieren einer Antriebseinheit. Es kann eine vorteilhaft hohe Benutzersicherheit bei einem Verstauen oder einem Transport der Betätigungsvorrichtung erreicht werden, insbesondere da ein ungewolltes und/oder zufälliges Betätigen des Betätigungselements zu einer angetriebenen Bewegung eines Werkzeugs vorteilhaft erschwert werden kann.

Des Weiteren wird vorgeschlagen, dass zumindest ein weiterer Bewegungspfad der zumindest zwei unterschiedlichen Bewegungspfade einer Linearbewegung folgt, welche zumindest im Wesentlichen parallel zu einer Längsachse der Grundeinheit und/oder des Betätigungselements ausgerichtet ist und welche bevorzugt als Zug- und/oder Druckbewegung ausgebildet ist. Vorteilhaft kann eine nutzerintuitive kombinierte Rotations- und Linearbewegung zu einer Betätigung des zumindest einen Schaltelements bereitgestellt werden. Bevorzugt ist das Betätigungselement ausgehend von zumindest einer Stellung auf dem zumindest einen Bewegungspfad entlang des weiteren Bewegungspfads relativ zur Grundeinheit und/oder relativ zu der weiteren Handgriffeinheit bewegbar, insbesondere verschiebbar. Alternativ oder zusätzlich ist denkbar, dass das Betätigungselement ausgehend von zumindest einer Stellung dem zumindest einen weiteren Bewegungspfad entlang des zumindest einen Bewegungspfads relativ zur Grundeinheit und/oder relativ zu der weiteren Handgriffeinheit bewegbar, insbesondere verschiebbar, ist. Alternativ oder zusätzlich ist denkbar, dass das Betätigungselement durch eine Linearbewegung, insbesondere entlang des Bewegungspfads, an eine Ausgangsposition des Bewegungspfads, der einer Rotationsbewegung folgt, verschiebbar ist. Bevorzugt ist das Betätigungselement dazu vorgesehen, in zumindest einem Betriebszustand zu einer Betätigung entlang des weiteren Bewegungspfads in Richtung der weiteren Handgriffeinheit gedrückt zu werden und/oder in zumindest einem Betriebszustand zu einer Betätigung entlang des weiteren Bewegungspfads in eine von der weiteren Handgriffeinheit abgewandte Richtung gezogen zu werden. Es ist denkbar, dass das Betätigungselement dazu vorgesehen ist, aus einem Grundzustand des Betätigungselements, insbesondere zu einem Betätigen eines Schaltelements der Schalteinheit und/oder zu einem Auslösen zumindest einer Funktion, erst entlang des Bewegungspfads bewegt zu werden und anschließend, insbesondere zu einem Betätigen eines weiteren Schaltelements der Schalteinheit und/oder zu einem Auslösen zumindest einer weiteren Funktion, entlang des weiteren Bewegungspfads bewegt zu werden. Alternativ ist denkbar, dass das Betätigungselement dazu vorgesehen ist, aus einem Grundzustand des Betätigungselements, insbesondere zu einem Betätigen eines Schaltelements der Schalteinheit und/oder zu einem Auslösen zumindest einer Funktion, erst entlang des weiteren Bewegungspfads bewegt zu werden und anschließend, insbesondere zu einem Betätigen eines weiteren Schaltelements der Schalteinheit und/oder zu einem Auslösen zumindest einer weiteren Funktion, entlang des Bewegungspfads bewegt zu werden. Vorzugsweise beträgt eine maximale Längserstreckung des weiteren Bewegungspfads, welcher insbesondere einer Linearbewegung folgt, mindestens 1 cm, vorzugsweise mindestens 2 cm und bevorzugt mindestens 3 cm. Insbesondere ist die maximale Längserstreckung zumindest im Wesentlichen parallel zur Längsachse der Grundeinheit und/oder des Betätigungselements ausgerichtet.

Zudem wird vorgeschlagen, dass die Schalteinheit zumindest ein Rückstellelement umfasst, das dazu vorgesehen ist, das Betätigungselement gegen zumindest eine Bewegung entlang zumindest einem Bewegungspfad der zumindest zwei Bewegungspfade mit einer Rückstellkraft zu beaufschlagen. Es kann eine vorteilhaft einfache und intuitive Bedienung der Betätigungsvorrichtung ermöglicht werden, insbesondere da eine betätigte und eine unbetätigte Position des Betätigungselements durch die Rückstellkraft direkt über die das Betätigungselement umgreifende Hand unterscheidbar sind. Es kann eine vorteilhaft schnelle und flüssige Bedienung der Betätigungsvorrichtung über mehrere Betätigungen des Betätigungselements hinweg ermöglicht werden. Es kann ein vorteilhaftes haptisches Bediengefühl vermittelt werden. Das Rückstellelement ist insbesondere dazu vorgesehen, das Betätigungselement entlang des Bewegungspfads in eine Grundposition des Betätigungselements auf dem Bewegungspfad und/oder entlang des weiteren Bewegungspfads in die/eine weitere Grundposition des Betätigungselements, insbesondere auf dem Bewegungspfad und/oder dem weiteren Bewegungspfad, mit einer Rückstellkraft zu beaufschlagen. Es ist denkbar, dass die Schalteinheit zumindest ein weiteres Rückstellelement umfasst, wobei das Rückstellelement dazu vorgesehen ist, das zumindest eine Betätigungselement entlang des Bewegungspfads in eine Grundposition des Betätigungselements mit einer Rückstellkraft zu beaufschlagen und wobei das weitere Rückstellelement dazu vorgesehen ist, das zumindest eine Betätigungselement entlang des weiteren Bewegungspfads in eine Grundposition des Betätigungselements mit einer Rückstellkraft zu beaufschlagen. Das zumindest eine Rückstellelement und/oder das weitere Rückstellelement sind/ist vorzugsweise als eine Schraubenfeder, insbesondere als eine Druckfeder, ausgebildet. Alternativ oder zusätzlich ist vorstellbar, dass das zumindest eine Rückstellelement und/oder das weitere Rückstellelement als ein magnetisches Rückstellelement, insbesondere als ein Elektromagnet, als ein Gummielement oder als ein anderes, einem Fachmann als sinnvoll erscheinendes Rückstellelement ausgebildet sind/ist. Vorzugsweise ist das zumindest eine Rückstellelement dazu vorgesehen, das Betätigungselement in einem, insbesondere durch einen Benutzer, betätigungsfreien Zustand in eine Position entsprechend einer Deaktivierung der Antriebseinheit, insbesondere in die Grundposition des Betätigungselements, zu bewegen, insbesondere entlang der Bewegungspfade, insbesondere entgegen einer Betätigungsrichtung des Betätigungselements. Das zumindest eine Rückstellelement ist insbesondere innerhalb der Grundeinheit angeordnet. Vorzugsweise umfasst die Schalteinheit zumindest ein Kopplungselement, das dazu vorgesehen ist, das zumindest eine Rückstellelement mechanisch mit dem Betätigungselement, mit dem Unterbetätigungselement und/oder mit dem Führungselement zu koppeln. Alternativ, insbesondere in einer bevorzugten Ausgestaltung, umfasst die Schalteinheit ein einziges Rückstellelement, das dazu vorgesehen ist, das Betätigungselement entlang der zwei Bewegungspfade mit einer Rückstellkraft in eine Grundposition des Betätigungselements, insbesondere entsprechend einer Deaktivierung der Antriebseinheit, zu beaufschlagen. Insbesondere ist das einzelne Rückstellelement dazu vorgesehen, zumindest zwei quer zueinander gerichtete Rückstellkraftkomponenten auf das Betätigungselement auszuüben, welche jeweils entlang einer der zwei Bewegungspfade wirken. Bevorzugt ist das Rückstellelement an dem Unterbetätigungselement angeordnet. Insbesondere ist das Rückstellelement, vorzugsweise zusammen mit dem Unterbetätigungselement," innerhalb der Grundeinheit, insbesondere dem von dem Betätigungselement umschlossenen Bereich der Grundeinheit, angeordnet.

Ferner wird vorgeschlagen, dass die Betätigungsvorrichtung und/oder die Werkzeugmaschine, insbesondere die Grundeinheit, zumindest eine Verbindungsvorrichtung zu einer Aufnahme zumindest eines Werkzeugsaufsatzes und/oder eines Verlängerungsstücks oder Adapterstücks umfasst, wobei die zumindest eine Handgriffeinheit der zumindest zwei Handgriffeinheiten, welche als Betätigungselement der Schalteinheit ausgebildet ist, von der Verbindungsvorrichtung aus betrachtet hinter einer weiteren Handgriffeinheit der zumindest zwei Handgriffeinheiten an der Grundeinheit angeordnet ist. Es kann eine vorteilhaft intuitive Betätigung des Betätigungselements unabhängig von einer Führung der Betätigungsvorrichtung ermöglicht werden. Eine zum Halten und Führen der Betätigungsvorrichtung erforderliche Kraft kann vorteilhaft auf die zwei Handgriffeinheiten verteilt werden, wobei durch eine Betätigung des Betätigungselements als Teil der Handgriffeinheit möglichst keine Stabilität der Betätigungsvorrichtung verloren geht. Es kann eine zum Halten und Führen der Betätigungsvorrichtung erforderliche Kraft zu einem vorteilhaft großen Teil auf die weitere Handgriffeinheit verteilt werden, wobei die Handgriffeinheit insbesondere auf ein Stabilisieren der Betätigungsvorrichtung und ein Betätigen des Betätigungselements ausgelegt werden kann. Die Grundeinheit umfasst entlang der Längsachse der Grundeinheit betrachtet einen Endbereich und einen dem Endbereich gegenüberliegenden weiteren Endbereich. Insbesondere sind/ist der Endbereich und/oder der weitere Endbereich jeweils als eine entlang der Längsachse der Grundeinheit äußerste Außenseite der Grundeinheit gebildet. Vorzugsweise ist das Betätigungselement der Schalteinheit zumindest abschnittsweise in einem Nahbereich des weiteren Endbereichs an der Grundeinheit angeordnet. Insbesondere ist das Betätigungselement in einem maximalen Abstand von höchstens 20 cm, bevorzugt in einem maximalen Abstand von höchstens 15 cm, besonders bevorzugt in einem maximalen Abstand von höchstens 10 cm und ganz besonders bevorzugt in einem maximalen Abstand von höchstens 5 cm von dem weiteren Endbereich der Grundeinheit an der Grundeinheit angeordnet. Bevorzugt ist das Betätigungselement in Abhängigkeit von einer Linearbewegung, insbesondere entlang des weiteren Bewegungspfads, in Richtung des Endbereichs oder in Richtung des weiteren Endbereichs der Grundeinheit zu einer Betätigung des zumindest einen Schaltelements vorgesehen. Vorzugsweise beträgt ein parallel zur Längsachse der Grundeinheit ausgerichteter minimaler Abstand der zwei Handgriffeinheiten mindestens 10 cm, vorzugsweise mindestens 20 cm und bevorzugt mindestens 30 cm. Es ist denkbar, dass die Verbindungsvorrichtung als Teil eines Werkzeugmaschinensystems ausgebildet ist und zumindest teilweise an der Werkzeugmaschine angeordnet ist. Alternativ ist auch denkbar, dass die zumindest eine Handgriffeinheit der zumindest zwei Handgriffeinheiten, welche als Betätigungselement der Schalteinheit ausgebildet ist, von der Verbindungsvorrichtung aus betrachtet vor der weiteren Handgriffeinheit der zumindest zwei Handgriffeinheiten an der Grundeinheit angeordnet ist.

Des Weiteren wird vorgeschlagen, dass das Betätigungselement die Grundeinheit in zumindest einer senkrecht zu einer, insbesondere der vorher genannten, Längsachse der Grundeinheit ausgerichteten Ebene um die Längsachse der Grundeinheit zumindest größtenteils, insbesondere hülsenartig, umschließt. Es kann eine vorteilhaft hohe Kraftübertragung von einer Hand auf das Betätigungselement erreicht werden. Es kann eine vorteilhaft flexible Handhabung des Betätigungselements hinsichtlich eines benutzerspezifischen Greifens des Betätigungselements ermöglicht werden. Es kann eine ungewollte Verschmutzung und damit auch Beschädigung der Schalteinheit, insbesondere einzelner Kontakte und/oder Schaltelemente der Schalteinheit, welche zumindest teilweise von dem Betätigungselement verdeckt werden können, durch das Betätigungselement vorteilhaft verhindert werden. Es können ungewollte Verletzungen des Benutzers durch ein Einklemmen o.dgl. zwischen dem Betätigungselement und einer Außenwand der Handgriffeinheit und/oder der Grundeinheit vorteilhaft verhindert werden. Vorzugsweise umschließt das Betätigungselement die Grundeinheit in zumindest einer senkrecht zur Längsachse der Grundeinheit ausgerichteten Ebene um die Längsachse der Grundeinheit um einen Punkt innerhalb der Ebene auf der Längsachse der Grundeinheit um mindestens 70 %, vorzugsweise mindestens 80 %, bevorzugt mindestens 90 % und ganz besonders zumindest im Wesentlichen vollständig. In einer beispielhaften Ausgestaltung ist das Betätigungselement zumindest abschnittsweise als ein Hohlzylinder ausgebildet. Insbesondere ist das Betätigungselement als eine Betätigungshülse ausgebildet. Insbesondere erstreckt sich die Längsachse des Betätigungselements zumindest im Wesentlichen parallel zur Längsachse der Grundeinheit. Bevorzugt begrenzt das Betätigungselement entlang und/oder um eine Mittelachse bzw. eine Längsachse des Betätigungselements eine, insbesondere zumindest im Wesentlichen zylinderförmige und/oder zumindest im Wesentlichen stabförmige, Ausnehmung. Bevorzugt ist das Betätigungselement dazu vorgesehen, über die Ausnehmung an der Grundeinheit angeordnet zu werden, wobei insbesondere ein Bereich der Grundeinheit von dem Betätigungselement umschlossen wird. Vorzugsweise kann das Betätigungselement Einbuchtungen, insbesondere Fingerrillen, einen rutschhemmenden, insbesondere gummierten, Einsatz, eine Oberflächenstrukturierung, eine Oberflächenbeschichtung o. dgl. zur Realisierung einer hohen Griffigkeit aufweisen. Vorzugsweise weist die Grundeinheit in dem von dem Betätigungselement zumindest größtenteils umschlossenen Bereich der Grundeinheit eine maximale Quererstreckung von mindestens 20 mm, vorzugsweise mindestens 25 mm und bevorzugt mindestens 30 mm, auf, die sich insbesondere senkrecht zur Längsachse der Grundeinheit erstreckt. Bevorzugt beträgt die maximale Quererstreckung der Grundeinheit in dem von dem Betätigungselement zumindest größtenteils umschlossenen Bereich der Grundeinheit höchstens 50 mm, vorzugsweise höchstens 40 mm und bevorzugt höchstens 32 mm. Bevorzugt beträgt ein Verhältnis einer maximalen radialen Dicke des Betätigungselements, insbesondere in einem Hauptgriffbereich des Betätigungselements, und der maximalen Quererstreckung der Grundeinheit in dem von dem Betätigungselement zumindest größtenteils umschlossenen Bereich der Grundeinheit zwischen 0,05 und 0,2, vorzugsweise zwischen 0,075 und 0,15 und bevorzugt zumindest im Wesentlichen 0,1.

Zudem wird vorgeschlagen, dass das Betätigungselement eine maximale Längserstreckung aufweist, welche, insbesondere in einem an der Grundeinheit angeordneten Zustand des Betätigungselements, zumindest im Wesentlichen parallel zu einer, insbesondere der vorher genannten, Längsachse der Grundeinheit ausgerichtet ist, wobei die maximale Längserstreckung des Betätigungselements mindestens zweimal, vorzugsweise mindestens dreimal, bevorzugt mindestens viermal, aber auch mindestens drei- bis sechsmal oder auch mehr als sechsmal und ganz besonders bevorzugt mehr als achtmal, so groß ist wie eine maximale Quererstreckung des Betätigungselements, welche insbesondere zumindest im Wesentlichen senkrecht zur maximalen Längserstreckung des Betätigungselements ausgerichtet ist. Es kann eine vorteilhaft intuitive Bedienung der Betätigungsvorrichtung ermöglicht werden. Es kann eine vorteilhaft hohe Flexibilität einer Haltung der Betätigungsvorrichtung durch den Benutzer an dem Betätigungselement ermöglicht werden. Vorzugsweise ist die maximale Quererstreckung des Betätigungselements an einer Stelle entlang der Längsachse des Betätigungselements größer als eine, insbesondere parallel zur maximalen Quererstreckung des Betätigungselements ausgerichtete, maximale Quererstreckung der Grundeinheit an dieser Stelle. Insbesondere erstreckt sich die maximale Quererstreckung der Grundeinheit zumindest im Wesentlichen senkrecht zur Längsachse der Grundeinheit. Bevorzugt entspricht die maximale Quererstreckung des Betätigungselements einer maximalen Quererstreckung der Handgriffeinheit. Vorzugsweise beträgt die maximale Längserstreckung des Betätigungselements mindestens 10 cm, vorzugsweise mindestens 20 cm, bevorzugt mindestens 30 cm und besonders bevorzugt mindestens 40 cm. Bevorzugt beträgt die maximale Längserstreckung zwischen 10 cm und 70 cm, vorzugsweise zwischen 20 cm und 50 cm und bevorzugt zwischen 30 cm und 40 cm.

Ferner wird vorgeschlagen, dass das Betätigungselement in zumindest einer eine, insbesondere die vorher genannte, Längsachse des Betätigungselements umfassenden Schnittebene, insbesondere an zumindest einer Seite von der Längsachse des Betätigungselements aus betrachtet oder spiegelsymmetrisch zur Längsachse des Betätigungselements, eine zumindest im Wesentlichen hantelförmige Grundform aufweist. Es kann ein Abrutschen einer Hand eines Benutzers am Betätigungselement vorteilhaft verhindert werden. Durch einen verbesserten Formschluss mit einer Hand des Benutzers kann eine vorteilhaft hohe Kraftübertragung auf das Betätigungselement entlang der Längsachse der Grundeinheit ermöglicht werden. Es können vorteilhaft robuste Bereiche am Betätigungselement ausgebildet werden, in denen vorzugsweise Führungselemente anordenbar sind. Dadurch kann bevorzugt ein Zwischenbereich des Betätigungselements vorteilhaft schmal ausgebildet werden, ohne eine Stabilität des Betätigungselements bei einer Betätigung zu beeinträchtigen. Unter "im Wesentlichen hantelförmig" soll insbesondere eine Form eines Körpers, insbesondere des Betätigungselements, verstanden werden, welche in zwei entlang einer Längserstreckung der Form ausgebildeten Endbereichen der Form senkrecht zur Längserstreckung der Form eine größere maximale Quererstreckung aufweist als in einem zwischen den zwei Endbereichen angeordneten Zwischenbereich der Form. Vorzugsweise bildet die Form des Körpers in einem Zwischenbereich eine Verjüngung aus. Bevorzugt ist eine maximale Erstreckung des Zwischenbereichs entlang einer maximalen Längserstreckung des Körpers wesentlich größer, insbesondere mindestens doppelt so groß, vorzugsweise mindestens dreimal so groß und bevorzugt mindestens viermal so groß, als/wie eine maximale Längserstreckung der Endbereiche entlang der maximalen Längserstreckung des Körpers. Vorzugsweise weist das Betätigungselement in zwei entlang der Längsachse des Betätigungselements ausgebildeten Endbereichen des Betätigungselements eine größere maximale Quererstreckung auf als in einem zwischen den zwei Endbereichen angeordneten Zwischenbereich des Betätigungselements. Bevorzugt weist das Betätigungselement in Übergangsbereichen jeweils zwischen den Endbereichen und dem Zwischenbereich zumindest eine schräg zur Längsachse des Betätigungselements ausgerichtete Außenfläche auf, die insbesondere einen Winkel zwischen 10° und 80°, vorzugsweise zwischen 20° und 70° und bevorzugt zwischen 30° und 60°, zur Längsachse des Betätigungselements aufspannt. Bevorzugt weist das Betätigungselement, insbesondere in einem der zwei Endbereiche und/oder in dem Zwischenbereich, eine radiale Dicke von mindestens 0,5 cm, vorzugsweise mindestens 1 cm und bevorzugt mindestens 1,5 cm, und/oder von höchstens 4 cm, vorzugsweise höchstens 3 cm und bevorzugt höchstens 2,5 cm, auf. Insbesondere bildet die radiale Dicke des Betätigungselements eine von der Längsachse des Betätigungselements in eine radiale Richtung nach außen ausgebildete Materialstärke des Betätigungselements, insbesondere einer zu umgreifenden Außenwand des Betätigungselements, aus. Bevorzugt ist das zumindest eine Führungselement, insbesondere die zwei Führungselemente, in zumindest einem der zwei Endbereichen an dem Betätigungselement fixiert und/oder angeordnet. Bevorzugt sind/ist die Einbuchtungen, insbesondere Fingerrillen, der rutschhemmende, insbesondere gummierte, Einsatz, die Oberflächenstrukturierung und/oder die Oberflächenbeschichtung zur Realisierung einer hohen Griffigkeit des Betätigungselements in dem Zwischenbereich des Betätigungselements angeordnet. Vorzugsweise ist der Zwischenbereich des Betätigungselements als ein Hauptgriffbereich des Betätigungselements ausgebildet. Alternativ oder zusätzlich ist denkbar, dass die Einbuchtungen, insbesondere Fingerrillen, der rutschhemmende, insbesondere gummierte, Einsatz, die Oberflächenstrukturierung, die Oberflächenbeschichtung o. dgl. zur Realisierung einer hohen Griffigkeit des Betätigungselements zumindest teilweise an einer der Außenflächen zwischen einem der Endbereiche und dem Zwischenbereich angeordnet sind/ist. Bevorzugt weist die Grundeinheit in einem von dem Betätigungselement zumindest größtenteils umschlossenen Bereich der Grundeinheit, insbesondere in einer senkrecht zur Längsachse der Grundeinheit ausgerichteten Schnittebene betrachtet, eine zumindest im Wesentlichen runde, insbesondere kreisförmige, ovale oder ellipsenförmige, Grundform auf. Alternativ oder zusätzlich ist denkbar, dass das Betätigungselement, insbesondere in dem Zwischenbereich, in einer senkrecht zur Längsachse des Betätigungselements ausgerichteten Querschnittsebene eine zumindest teilweise eckige Grundform aufweist. Beispielsweise weist das Betätigungselement an einer Oberseite parallel zur Längsachse des Betätigungselements zwei Kanten auf und ist an der Unterseite kreisbogenförmig ausgebildet. Vorzugsweise kann über eine asymmetrische und/oder eine eckige Ausgestaltung des Betätigungselements eine Vermittlung einer Orientierung des Betätigungselements an einen Benutzer bei einem Bedienen der Betätigungsvorrichtung erreicht werden. Zusätzlich ist denkbar, dass die weitere Handgriffeinheit zumindest teilweise eine asymmetrische oder eckige Grundform aufweist. Beispielsweise ist denkbar, dass zumindest eine Ecke und/oder Kante des Betätigungselements in einem, insbesondere unbetätigten, Grundzustand des Betätigungselements relativ zur Grundeinheit koaxial und/oder innerhalb einer gemeinsamen die Längsachse der Grundeinheit umfassenden Ebene mit einer Ecke und/oder Kante der weiteren Handgriffeinheit angeordnet ist. Vorzugsweise kann über eine Ausrichtung der Ecken oder Kanten des Betätigungselements und der weiteren Handgriffeinheit eine Betätigungsstellung des Betätigungselements vorteilhaft intuitiv an einen Benutzer vermittelt werden. Bevorzugt beträgt die maximale Quererstreckung des Betätigungselements, insbesondere in einem der Endbereiche des Betätigungselements, mindestens 50 mm, vorzugsweise mindestens 60 mm und bevorzugt mindestens 65 mm. Vorzugsweise beträgt eine maximale Quererstreckung des Betätigungselements in dem Zwischenbereich und/oder Hauptgriffbereich des Betätigungselements mindestens 35 mm, vorzugsweise mindestens 40 mm und bevorzugt mindestens 43 mm. Es ist denkbar, dass das Betätigungselement in einem der Endbereiche des Betätigungselements eine maximale Quererstreckung aufweist, die zumindest im Wesentlichen einer maximalen Quererstreckung der Grundeinheit in einem entlang der Längsachse der Grundeinheit an den Endbereich angrenzenden Bereich entspricht. Insbesondere schließt sich das Betätigungselement in einem der Endbereiche des Betätigungselements mit Ausnahme eines Spalts zur Bewegung des Betätigungselements zumindest im Wesentlichen bündig an die Grundeinheit an. Bevorzugt weist das Betätigungselement in dem Zwischenbereich in einer senkrecht zur Längsachse des Betätigungselements ausgerichteten Ebene eine Umfangserstreckung von höchstens 150 mm, vorzugsweise höchstens 136 mm und bevorzugt höchstens 130 mm, auf. Vorzugsweise beträgt ein Verhältnis von der Umfangserstreckung des Betätigungselements in dem Zwischenbereich/Hauptgriffbereich zu einer, insbesondere senkrecht zur Längsachse der Grundeinheit ausgerichteten, Umfangserstreckung der Grundeinheit in einem zumindest größtenteils von dem Betätigungselement umschlossenen Bereich der Grundeinheit höchstens 1,6, vorzugsweise höchstens 1,5 und bevorzugt höchstens 1,45.

In einer bevorzugten Ausgestaltung der Betätigungsvorrichtung ist das Betätigungselement derart ausgebildet und/oder angeordnet, dass die Längsachse und/oder die Haupterstreckungsachse des Betätigungselements zumindest im Wesentlichen parallel und versetzt zu der Längsachse der Grundeinheit, zu einer Haupterstreckungsachse der Grundeinheit und/oder zu einer Haupterstreckungsachse eines von dem Betätigungselement umschlossenen Bereichs der Grundeinheit ausgerichtet ist. Vorzugsweise umfasst das Betätigungselement zumindest eine Symmetrieebene, welche die Längsachse und/oder die Haupterstreckungsachse des Betätigungselements umfasst. Bevorzugt weist das Betätigungselement, insbesondere in der bevorzugten Ausgestaltung der Betätigungsvorrichtung und/oder vorzugsweise zumindest in dem Hauptgriffbereich, eine ovale oder elliptische Querschnittsfläche auf, die insbesondere senkrecht zur Längsachse und/oder zur Haupterstreckungsachse des Betätigungselements ausgerichtet ist. Durch die dezentrale Anordnung des Betätigungselements an der Grundeinheit kann insbesondere eine vorteilhafte Masseverteilung zu einer Betätigung des Betätigungselements entlang des gebogenen Bewegungspfads ermöglicht werden, wobei insbesondere eine Hebelwirkung zum Drehen des Betätigungselements erreicht werden kann. Es kann eine vorteilhaft einfache und intuitive Betätigung des Betätigungselements um die Längsachse der Grundeinheit erreicht werden.

Des Weiteren wird vorgeschlagen, dass die Schalteinheit zumindest eine abgewinkelte, vorzugsweise L- oder U-förmige, Kulissenführung umfasst, welche von der Grundeinheit im Bereich der zumindest einen Handgriffeinheit begrenzt wird, wobei die Schalteinheit zumindest ein an dem Betätigungselement fixiertes Führungselement umfasst, welches in der Kulissenführung geführt ist. Vorteilhaft können nutzerintuitive Bewegungspfade mechanisch vorgegeben werden. Es kann ein Verdrehen oder Verkanten des Betätigungselements bei einer Betätigung vorteilhaft verhindert werden. Vorzugsweise weist die Schalteinheit zumindest zwei Kulissenführungen auf, die insbesondere spiegelsymmetrisch um eine zumindest im Wesentlichen parallel zu der und durch die Längsachse der Grundeinheit und/oder des Betätigungselements verlaufende Symmetrieebene angeordnet sind. Alternativ ist vorstellbar, dass die Schalteinheit eine einzige Kulissenführung aufweist. Vorzugsweise sind die Kulissenführungen als Ausnehmungen, insbesondere Schlitze, in zumindest einer Seitenwandung der Grundeinheit ausgebildet. Insbesondere weisen die Kulissenführungen jeweils zumindest zwei Führungsschenkel auf, die unter einem Winkel von größer als 0° und kleiner als 180°, bevorzugt zumindest im Wesentlichen senkrecht, zueinander ausgerichtet sind. Vorzugsweise definiert zumindest ein erster Führungsschenkel den Bewegungspfad, insbesondere eine Rotationsbewegung des Betätigungselements. Der erste Führungsschenkel erstreckt sich vorzugsweise zumindest im Wesentlichen senkrecht zu der Längsachse der Grundeinheit, insbesondere zumindest abschnittsweise um die Längsachse der Grundeinheit herum. Vorzugsweise definiert zumindest ein zweiter Führungsschenkel den weiteren Bewegungspfad, insbesondere eine Linearbewegung des Betätigungselements. Der zweite Führungsschenkel erstreckt sich insbesondere zumindest im Wesentlichen parallel zu der Längsachse der Grundeinheit. Das Führungselement ist vorzugsweise als ein Führungsstift ausgebildet. Das Führungselement erstreckt sich insbesondere zumindest im Wesentlichen senkrecht zu der Längsachse der Grundeinheit und/oder des Betätigungselements, insbesondere zu der Symmetrieebene, durch die Grundeinheit, insbesondere durch die Kulissenführungen. Alternativ oder zusätzlich ist denkbar, dass das Betätigungselement über eine an einer Außenwand der Grundeinheit ausgebildete Führung beweglich gelagert ist. Alternativ ist vorstellbar, dass sich das Führungselement abschnittsweise durch die Grundeinheit und insbesondere durch eine einzelne Kulissenführung erstreckt. Weiterhin alternativ ist vorstellbar, dass die Schalteinheit zwei sich zumindest im Wesentlichen parallel, insbesondere koaxial, zueinander erstreckende Führungselemente aufweist, wobei sich jeweils eines der Führungselemente durch jeweils eine der Kulissenführungen erstreckt. Vorzugsweise ist das Führungselement an einer Innenseite, insbesondere an einer der Grundeinheit zugewandten Seite, des Betätigungselements fixiert. Insbesondere kann das Führungselement stoffschlüssig mit dem Betätigungselement verbunden, insbesondere einteilig mit dem Betätigungselement ausgebildet, sein. Alternativ ist denkbar, dass das Führungselement kraft- und/oder formschlüssig mit dem Betätigungselement verbunden ist. Vorzugsweise ist das Führungselement einteilig mit dem zumindest einen Unterbetätigungselement der Schalteinheit ausgebildet und/oder mit dem Unterbetätigungselement mechanisch gekoppelt. Vorzugsweise ist das Unterbetätigungselement zumindest durch das Führungselement mechanisch mit dem Betätigungselement verbunden. Insbesondere ist das Unterbetätigungselement dazu vorgesehen, einer Bewegung des Betätigungselements zu folgen. Insbesondere ist das Unterbetätigungselement dazu vorgesehen, in Abhängigkeit von einer Bewegung des Betätigungselements das zumindest eine Schaltelement zu betätigen. Vorzugsweise ist das Betätigungselement zumindest zu einer mittelbaren Betätigung des zumindest einen Schaltelements über das Unterbetätigungselement vorgesehen. Das Unterbetätigungselement kann insbesondere als eine Betätigungsstange, als ein Betätigungsstab, als ein Betätigungsstößel oder als ein anderes, einem Fachmann als sinnvoll erscheinendes Unterbetätigungselement ausgebildet sein. Vorzugsweise ist das Unterbetätigungselement innerhalb der Grundeinheit angeordnet, erstreckt sich insbesondere zumindest im Wesentlichen parallel zu der Längsachse der Grundeinheit. Vorteilhaft können nutzerintuitive Bewegungspfade mechanisch vorgegeben werden. Insbesondere weist eine L-förmige Kulissenführung zwei Führungsschenkel auf, die sich zumindest im Wesentlichen senkrecht zueinander erstrecken. Vorzugsweise gibt die L-förmige Kulissenführung eine einzelne mögliche Rotationsrichtung des Betätigungselements, insbesondere im oder gegen den Uhrzeigersinn um die Längsachse der Grundeinheit, vor, entlang von der das Betätigungselement an einen Ausgangspunkt der Linearbewegung und/oder zu einer Betätigung des zumindest einen Schaltelements bewegbar ist. Insbesondere weist eine U-förmige Kulissenführung drei Führungsschenkel auf. Vorzugsweise erstrecken sich zumindest ein erster Führungsschenkel und ein zweiter Führungsschenkel zumindest im Wesentlichen parallel zueinander, insbesondere parallel zu der Längsachse der Grundeinheit. Vorzugsweise verbindet ein dritter Führungsschenkel der U-förmigen Kulissenführung, der sich insbesondere zumindest im Wesentlichen senkrecht zu dem ersten Führungsschenkel und zu dem zweiten Führungsschenkel erstreckt, den ersten Führungsschenkel mit dem zweiten Führungsschenkel. Bevorzugt ist das Führungselement in dem ersten Führungsschenkel und in dem zweiten Führungsschenkel in Abhängigkeit von einer Linearbewegung des Betätigungselements und in dem dritten Führungsschenkel in Abhängigkeit von einer Rotationsbewegung des Betätigungselements bewegbar. Vorzugsweise gibt die U-förmige Kulissenführung zwei mögliche Rotationsrichtungen des Betätigungselements, insbesondere im und gegen den Uhrzeigersinn um die Stablängsachse, vor, entlang von denen das Betätigungselement an einen Ausgangspunkt der Linearbewegung und/oder zu einer Betätigung des zumindest einen Schaltelements bewegbar ist. Alternativ ist vorstellbar, dass das Führungselement in dem ersten Führungsschenkel und in dem zweiten Führungsschenkel in Abhängigkeit von einer Rotationsbewegung des Betätigungselements und in dem dritten Führungsschenkel in Abhängigkeit von einer Linearbewegung des Betätigungselements bewegbar ist. Es ist denkbar, dass die Kulissenführung zumindest einen Fixiervorsprung aufweist, an dem das Führungselement ortsfest fixierbar ist. Insbesondere sind in einer ortsfest fixierten Stellung des Führungselements das Betätigungselement und/oder das Unterbetätigungselement ortsfest fixiert. Vorzugsweise ist der Fixiervorsprung an einem Endbereich eines Führungsschenkels der Kulissenführung angeordnet, wobei eine Position des Führungselements in dem Endbereich einer Betätigung des zumindest einen Schaltelements entspricht. Beispielsweise ist denkbar, dass die Schalteinheit die Antriebseinheit in der an dem Fixiervorsprung ortsfest fixierten Stellung des Führungselements derart ansteuert, dass Bearbeitungswerkzeuge der Werkzeugmaschine und/oder eines Werkzeugaufsatzes eines Werkzeugmaschinensystems in eine geschlossene Stellung, insbesondere frei von exponierten Schneidkanten, bewegt werden und vorzugsweise dort verweilen. Insbesondere ist der Fixiervorsprung zu einer ortsfesten Fixierung des Führungselements in einer Verstaustellung der Bearbeitungswerkzeuge vorgesehen. Der Fixiervorsprung ist insbesondere dazu vorgesehen, einer auf das Betätigungselement wirkenden Rückstellkraft, insbesondere durch das Vorspannelement der Schalteinheit, entgegenzuwirken. In einer bevorzugten Ausgestaltung der Schalteinheit umfasst die Schalteinheit die Kulissenführung und das Führungselement zu einer Betätigung der Schaltelemente über das Unterbetätigungselement in Abhängigkeit einer Bewegung des Betätigungselements und zusätzlich eine weitere Führung, welche eine Bewegung des Betätigungselements entlang der zumindest zwei unterschiedlichen Bewegungspfade relativ zur Grundeinheit begrenzt. Insbesondere ist die weitere Führung an einer, insbesondere dem Betätigungselement zugewandten, Außenwand der Grundeinheit angeordnet. Vorzugsweise ist die weitere Führung einteilig mit der Grundeinheit ausgebildet. Bevorzugt umfasst das Betätigungselement zumindest eine Führungsausnehmung und/oder zumindest ein Formführungselement, welche(s) dazu vorgesehen ist, die Bewegung des Betätigungselements entlang der zumindest zwei unterschiedlichen Bewegungspfade relativ zur Grundeinheit zu begrenzen. Besonders bevorzugt ist die weitere Führung dazu vorgesehen, das Führungselement gegenüber einer Betätigungskraft durch den Benutzer und/oder gegenüber der Rückstellkraft zumindest größtenteils zu entlasten. Vorzugsweise weist die weitere Führung zu der Führungsausnehmung und/oder dem Formführungselement weniger Spiel auf als die Kulissenführung zu dem Führungselement. Insbesondere ist weitere Führung und die Führungsausnehmung und/oder das Formführungselement dazu vorgesehen, bei einer Bewegung des Betätigungselements entlang der zumindest zwei unterschiedlichen Bewegungspfade aufeinander einzuwirken, bevor oder direkt wenn das Führungselement eine die Kulissenführung begrenzende Innenfläche der Grundeinheit berührt.

Zudem wird vorgeschlagen, dass die Schalteinheit zumindest ein, insbesondere als ein Proportional-Schalter ausgebildetes, vorzugsweise weiteres, Schaltelement umfasst, das dazu vorgesehen ist, proportional zu zumindest einer Bewegung des Betätigungselements entlang zumindest eines, insbesondere parallel zu einer, insbesondere der vorher genannten, Längsachse der Grundeinheit und/oder des Betätigungselements ausgerichteten, Bewegungspfads der zumindest zwei Bewegungspfade zumindest ein Schaltsignal auszugeben, wobei das zumindest eine Schaltsignal vorzugsweise zu einer Ansteuerung einer Antriebseinheit der Werkzeugmaschine vorgesehen ist. Es kann eine vorteilhaft intuitive Steuerung der Betätigungsvorrichtung ermöglicht werden, insbesondere da eine Betätigungskraft eines Benutzers proportional in eine Bewegung eines gesteuerten angetriebenen Werkzeugs umgesetzt werden kann. Vorteilhaft kann eine nutzerintuitive Bedienung, insbesondere ähnlich zu einem manuellen Werkzeug, ermöglicht werden. Insbesondere entsprechen unterschiedliche Betätigungsstellungen des Betätigungselements unterschiedlichen Schaltstellungen des weiteren Schaltelements, wobei das weitere Schaltelement insbesondere dazu eingerichtet ist, die Antriebseinheit in Abhängigkeit von unterschiedlichen Schaltstellungen unterschiedlich anzusteuern. Insbesondere ist das weitere Schaltelement dazu eingerichtet, in Abhängigkeit von unterschiedlichen Betätigungsstellungen des Betätigungselements entlang des weiteren Bewegungspfads die Antriebseinheit unterschiedlich anzusteuern. Insbesondere ist das weitere Schaltelement entlang einer zumindest im Wesentlichen senkrecht zu der Längsachse der Grundeinheit um die Längsachse der Grundeinheit verlaufenden Betätigungsrichtung betätigbar, insbesondere freigebbar. Vorzugsweise entspricht eine Freigabe des weiteren Schaltelements einer Betätigung des weiteren Schaltelements. Insbesondere ist das weitere Schaltelement dazu eingerichtet, in Abhängigkeit von unterschiedlichen Betätigungsstellungen des Betätigungselements der Antriebseinheit unterschiedliche Antriebsgeschwindigkeiten, insbesondere Drehzahlen, und/oder Antriebsrichtungen, insbesondere Drehrichtungen, vorzugeben. Vorzugsweise ist eine Bewegungsgeschwindigkeit des zumindest einen Bearbeitungswerkzeugs abhängig von, insbesondere proportional zu, der Antriebsgeschwindigkeit, insbesondere zu der Drehzahl, der Antriebseinheit. Vorzugsweise ist eine Bewegungsrichtung des zumindest einen Bearbeitungswerkzeugs abhängig von einer Antriebsrichtung, insbesondere von einer Drehrichtung, der Antriebseinheit. Insbesondere kann eine erste Antriebsrichtung, insbesondere eine erste Drehrichtung, der Antriebseinheit einer Schließbewegung des zumindest einen Bearbeitungswerkzeugs entsprechen. Insbesondere kann eine zweite, zu der ersten Antriebsrichtung, insbesondere zu der ersten Drehrichtung, gegensinnige Antriebsrichtung, insbesondere Drehrichtung, der Antriebseinheit einer Öffnungsbewegung des zumindest einen Bearbeitungswerkzeugs entsprechen. Das als ein proportionales Schaltelement ausgebildete weitere Schaltelement kann insbesondere als ein Potentiometer, insbesondere als ein Linearpotentiometer oder als ein Rotationspotentiometer, als ein Hall-Sensor, als ein variabler elektrischer Widerstand oder als ein anderes, einem Fachmann als sinnvoll erscheinendes proportionales Schaltelement ausgebildet sein. Vorzugsweise ist das weitere Schaltelement dazu eingerichtet, in Abhängigkeit von einer Reihenfolge und/oder einer Zeitdauer, in der das Betätigungselement die unterschiedlichen Betätigungsstellungen durchfährt, insbesondere in Abhängigkeit von einer Reihenfolge und/oder einer Zeitdauer, in der das weitere Schaltelement in die unterschiedlichen Schaltstellungen geschaltet wird, die Antriebseinheit anzusteuern. Insbesondere kann das weitere Schaltelement dazu eingerichtet sein, je kürzer eine Zeitdauer ist, in der das Betätigungselement die unterschiedlichen Betätigungsstellungen durchfährt, die Antriebsgeschwindigkeit, insbesondere die Drehzahl, der Antriebseinheit desto höher einzustellen. Insbesondere kann das weitere Schaltelement dazu eingerichtet sein, in Abhängigkeit von einem Durchfahren der unterschiedlichen Betätigungsstellungen durch das Betätigungselement in einer ersten Reihenfolge, insbesondere in Abhängigkeit von einer Betätigungsbewegung des Betätigungselements, eine erste Antriebsrichtung, insbesondere eine erste Drehrichtung, der Antriebseinheit einzustellen. Insbesondere kann das weitere Schaltelement dazu eingerichtet sein, in Abhängigkeit von einem Durchfahren der unterschiedlichen Betätigungsstellungen durch das Betätigungselement in einer zweiten, zu der ersten Reihenfolge umgekehrten Reihenfolge, insbesondere in Abhängigkeit von einer Rückstellbewegung des Betätigungselements, eine zweite, zu der ersten Antriebsrichtung, insbesondere zu der ersten Drehrichtung, gegensinnige Antriebsrichtung, insbesondere Drehrichtung, der Antriebseinheit einzustellen.

Das weitere Schaltelement ist vorzugsweise dazu eingerichtet, in Abhängigkeit von einer Betätigung die Antriebseinheit zu einem Antrieb der Bearbeitungseinheit anzusteuern, wobei das zumindest eine Betätigungselement dazu vorgesehen ist, in Abhängigkeit von einer Bewegung entlang eines Bewegungspfads, insbesondere entlang des weiteren Bewegungspfads, das weitere Schaltelement zu betätigen. Alternativ ist denkbar, dass das weitere Schaltelement als ein gewöhnlicher Signalschalter ausgebildet ist. Vorzugsweise ist das Betätigungselement dazu vorgesehen, das weitere Schaltelement mittelbar, insbesondere über das Unterbetätigungselement, zu betätigen. Alternativ oder zusätzlich ist denkbar, dass das Betätigungselement dazu vorgesehen ist, das weitere Schaltelement direkt zu betätigen. Insbesondere ist das weitere Schaltelement in Abhängigkeit von einer Betätigung durch das Betätigungselement, insbesondere durch das Unterbetätigungselement, dazu eingerichtet, das Schaltsignal an die Elektronikeinheit zu senden. Vorzugsweise ist die Elektronikeinheit dazu eingerichtet, in Abhängigkeit von dem Schaltsignal des weiteren Schaltelements der Antriebseinheit zumindest ein Steuersignal, insbesondere hinsichtlich einer Antriebsgeschwindigkeit und/oder einer Antriebsrichtung der Antriebseinheit, bereitzustellen. Alternativ oder zusätzlich ist denkbar, dass das weitere Schaltelement direkt elektrisch, insbesondere signalübertragungstechnisch, mit der Antriebseinheit, insbesondere mit dem Motor, verbunden ist. Vorzugsweise beaufschlagt das zumindest eine Rückstellelement das Betätigungselement, insbesondere das Unterbetätigungselement, in der Sperrstellung derart mit einer Rückstellkraft, dass das Unterbetätigungselement kontaktfrei mit dem weiteren Schaltelement angeordnet ist. Insbesondere entspricht ein kontaktfreier Zustand des weiteren Schaltelements mit dem Betätigungselement, insbesondere mit dem Unterbetätigungselement, einem unbetätigten Zustand des weiteren Schaltelements. Vorzugsweise ist das weitere Schaltelement in dem unbetätigten Zustand dazu eingerichtet, die Antriebseinheit zu deaktivieren, insbesondere der Elektronikeinheit ein Signal entsprechend einer Deaktivierung der Antriebseinheit bereitzustellen. Insbesondere ist ein Kontakt zwischen dem Betätigungselement, insbesondere zwischen dem Unterbetätigungselement, und dem weiteren Schaltelement in Abhängigkeit von einer Bewegung des Betätigungselements entlang des Bewegungspfads oder des weiteren Bewegungspfads, insbesondere in Abhängigkeit von einer Linearbewegung des Betätigungselements, herstellbar. Insbesondere ist das Betätigungselement, insbesondere das Unterbetätigungselement, in Abhängigkeit von einer Bewegung des Betätigungselements entlang des Bewegungspfads oder entlang des weiteren Bewegungspfads, insbesondere in Abhängigkeit von einer Linearbewegung des Betätigungselements, auf das weitere Schaltelement zu bewegbar, insbesondere in Kontakt mit dem weiteren Schaltelement bringbar. Vorzugsweise entspricht ein Kontakt des Betätigungselements, insbesondere des Unterbetätigungselements, mit dem weiteren Schaltelement einer Betätigung des weiteren Schaltelements. Alternativ ist denkbar, dass das Betätigungselement, insbesondere das Unterbetätigungselement, in Abhängigkeit von einer Bewegung des Betätigungselements entlang des Bewegungspfads oder des weiteren Bewegungspfads, insbesondere in Abhängigkeit von einer Linearbewegung des Betätigungselements, außer Kontakt mit dem weiteren Schaltelement bringbar ist, insbesondere zu einer Freigabe des weiteren Schaltelements, wobei insbesondere eine Freigabe des weiteren Schaltelements einer Betätigung des weiteren Schaltelements entspricht. Vorzugsweise ist denkbar, dass die Schalteinheit frei von dem Schaltelement ausgebildet ist, insbesondere lediglich das weitere Schaltelement umfasst. Insbesondere kann das weitere Schaltelement zu einer Freischaltung der Energieversorgung der Antriebseinheit und zu einer Ansteuerung der Antriebseinheit zu einem Antrieb der Bearbeitungseinheit eingerichtet sein. Alternativ ist denkbar, dass die Schalteinheit, insbesondere zusätzlich zu dem weiteren Schaltelement, einen manuellen Schalter, beispielsweise einen Netzschalter, umfasst, der unabhängig von einer Bewegung des Betätigungselements betätigbar und zu einer Freischaltung der Energieversorgung der Antriebseinheit eingerichtet ist.

Außerdem wird ein Werkzeugmaschinensystem mit zumindest einer, insbesondere stabgebundenen, Werkzeugmaschine, bevorzugt einem Hochentaster, vorgeschlagen, wobei die Werkzeugmaschine zumindest eine erfindungsgemäßen Betätigungsvorrichtung umfasst.

Vorzugsweise ist die Werkzeugmaschine als ein stabgebundenes Gartenwerkzeug ausgebildet. Insbesondere kann die Werkzeugmaschine als eine Stab-Gartenschere, insbesondere als eine Stab-Astschere, als eine Stab-Heckenschere, als ein Hochentaster, als eine Stab-Kettensäge oder als eine andere, einem Fachmann als sinnvoll erscheinende Werkzeugmaschine ausgebildet sein. Insbesondere ist die, insbesondere stabgebundene, Werkzeugmaschine zur Durchführung von Arbeiten, insbesondere von Schneidarbeiten, in höhergelegenen Bereichen als einer Körpergröße eines durchschnittlichen Benutzers der Werkzeugmaschine vorgesehen. Insbesondere ist die, insbesondere stabgebundene, Werkzeugmaschine dazu vorgesehen, Äste von Bäumen, Hecken o. dgl. zu schneiden, zu sägen und/oder zu trimmen.

Die Werkzeugmaschine ist vorzugsweise als Teil des Werkzeugmaschinensystems ausgebildet. Das Werkzeugmaschinensystem umfasst das/ein Verlängerungsstück oder Adapterstück und/oder einen/den Werkzeugaufsatz. Die Werkzeugmaschine ist bevorzugt zu einer Verwendung mit dem Verlängerungsstück oder Adapterstück und/oder mit dem Werkzeugaufsatz des Werkzeugmaschinensystems vorgesehen. Der Werkzeugaufsatz umfasst bevorzugt zumindest eine Bearbeitungseinheit. Die Bearbeitungseinheit umfasst vorzugsweise zumindest ein Bearbeitungswerkzeug. Das zumindest eine Bearbeitungswerkzeug kann insbesondere als eine Schneidklinge, insbesondere als eine Scherenklinge, als eine Trimmerklinge, als eine Sägekette, als Sägeschwert oder als ein anderes, einem Fachmann als sinnvoll erscheinendes Bearbeitungswerkzeug ausgebildet sein. Bevorzugt weist die Bearbeitungseinheit zumindest zwei Bearbeitungswerkzeuge, insbesondere Schneidklingen, auf, wobei zumindest eines der Bearbeitungswerkzeuge beweglich, insbesondere schwenkbar, gelagert ist, insbesondere relativ zu zumindest einem weiteren der Bearbeitungswerkzeuge. Die Werkzeugmaschine umfasst bevorzugt die zumindest eine Antriebseinheit. Vorzugsweise ist die Antriebseinheit dazu vorgesehen, insbesondere in einem mit dem Werkzeugaufsatz verbundenen Zustand der Werkzeugmaschine, das zumindest eine Bearbeitungswerkzeug zu einer Bewegung anzutreiben. Die Antriebseinheit umfasst insbesondere zumindest einen Motor, insbesondere einen Elektromotor. Insbesondere ist die Schalteinheit zumindest zu einer, insbesondere elektronischen, Aktivierung und Deaktivierung des Motors eingerichtet. Vorzugsweise umfasst die, insbesondere stabgebundene, Werkzeugmaschine zumindest eine Energieversorgungseinheit, die dazu vorgesehen ist, zumindest der Antriebseinheit, insbesondere dem Motor, und/oder der Schalteinheit, insbesondere der Elektronikeinheit, zu einem Betrieb Energie, insbesondere elektrische Energie, bereitzustellen. Bevorzugt ist die Energieversorgungseinheit zu einer netzunabhängigen Energieversorgung zumindest der Antriebseinheit und/oder der Schalteinheit vorgesehen. Insbesondere kann die Energieversorgungseinheit als ein, insbesondere wechselbarer, Akkumulator, als eine Batterie, als ein Speicherkondensator oder als eine andere, einem Fachmann als sinnvoll erscheinende netzunabhängige Energieversorgungseinheit ausgebildet sein. Alternativ oder zusätzlich ist vorstellbar, dass die Energieversorgungseinheit als eine netzabhängige Energieversorgungseinheit, insbesondere als ein Netzanschluss, ausgebildet ist. Bevorzugt ist die Antriebseinheit dazu vorgesehen, die Bearbeitungseinheit, insbesondere das zumindest eine Bearbeitungswerkzeug, zu einer diskontinuierlichen Bewegung anzutreiben. Vorzugsweise umfasst die Antriebseinheit zumindest ein Getriebe, über das der Motor, insbesondere in dem mit dem Werkzeugaufsatz verbundenen Zustand der Werkzeugmaschine, mit der Bearbeitungseinheit, insbesondere mit dem zumindest einen Bearbeitungswerkzeug, wirkverbunden ist. Alternativ ist denkbar, dass der Motor direkt mit der Bearbeitungseinheit, insbesondere mit dem zumindest einen Bearbeitungswerkzeug, gekoppelt ist. Das Werkzeugmaschinensystem umfasst insbesondere eine Verbindungsvorrichtung zu einer Befestigung des Werkzeugaufsatzes an dem Verlängerungsstück oder Adapterstück oder an der Werkzeugmaschine und/oder zu einer Befestigung des Verlängerungsstücks oder Adapterstücks an der Werkzeugmaschine. Die Verbindungsvorrichtung umfasst zumindest eine Koppeleinheit zu einer Übertragung der Antriebskraft von der Werkzeugmaschine, insbesondere über das Verlängerungsstück oder Adapterstück, an den Werkzeugaufsatz, insbesondere die Bearbeitungseinheit, in einem verbundenen Zustand.

Die Werkzeugmaschine weist vorzugsweise die zumindest eine Grundeinheit auf, an und/oder in der die die Antriebseinheit und die Schalteinheit angeordnet sind. Es ist denkbar, dass die Antriebseinheit und/oder die Schalteinheit abnehmbar ausgebildet sind. Vorzugsweise ist der Werkzeugaufsatz, insbesondere die Bearbeitungseinheit, entlang der Längsachse der Grundeinheit betrachtet über die zumindest eine Verbindungsvorrichtung an dem Endbereich der Grundeinheit anordenbar. Bevorzugt bildet die Grundeinheit zumindest teilweise, insbesondere zumindest im Wesentlichen vollständig, ein Gehäuse der Werkzeugmaschine aus. Vorzugsweise sind die Schaltelemente der Betätigungsvorrichtung und/oder die Elektronikeinheit innerhalb der Grundeinheit angeordnet. Bevorzugt ist die Antriebseinheit zumindest größtenteils zwischen den zwei Handgriffeinheiten innerhalb der Grundeinheit angeordnet. Alternativ ist denkbar, dass die Antriebseinheit von der weiteren Handgriffeinheit aus entlang der Längsachse der Grundeinheit hinter der Handgriffeinheit, insbesondere dem Betätigungselement, angeordnet ist. Die Werkzeugmaschine umfasst insbesondere eine Aufnahmevorrichtung zu einer Befestigung der Energieversorgungseinheit an der Grundeinheit. Vorzugsweise ist die Energieversorgungseinheit über die Aufnahmevorrichtung an dem, dem Endbereich entlang der Längsachse der Grundeinheit gegenüberliegenden weiteren Endbereich der Grundeinheit anordenbar. Es ist denkbar, dass die Energieversorgungseinheit bei einer Befestigung an der Aufnahmevorrichtung zumindest teilweise innerhalb der Grundeinheit angeordnet ist oder von der Grundeinheit aufgenommen wird. Vorzugsweise wird die Energieversorgungseinheit bei einer Anordnung an der Aufnahmevorrichtung über die Schalteinheit energetisch mit der Antriebseinheit verbunden, wobei die Antriebseinheit insbesondere lediglich bei einer Freigabe der Energieversorgung durch die Schalteinheit mit Energie versorgt wird. Vorzugsweise ist die Aufnahmevorrichtung an einem Endbereich der Grundeinheit angeordnet. Bevorzugt ist die Aufnahmevorrichtung von der weiteren Handgriffeinheit aus entlang der Längsachse der Grundeinheit hinter der Handgriffeinheit, insbesondere dem Betätigungselement angeordnet. Alternativ ist denkbar, dass die Aufnahmevorrichtung entlang der Längsachse der Grundeinheit zwischen den zwei Handgriffeinheiten angeordnet ist. Vorzugsweise ist die Koppeleinheit der Verbindungsvorrichtung zu einer form- und/oder kraftschlüssigen Verbindung der Antriebseinheit mit dem zumindest einen Bearbeitungswerkzeug vorgesehen. Insbesondere erstreckt sich die Koppeleinheit entlang der Längsachse der Grundeinheit von der Antriebseinheit bis zu dem zumindest einen Bearbeitungswerkzeug. Insbesondere ist die Koppeleinheit entlang der Längsachse der Grundeinheit betrachtet in einem Bereich der Grundeinheit innerhalb der Grundeinheit angeordnet. Vorzugsweise umfasst die Koppeleinheit zumindest ein Koppelelement und zumindest ein weiteres Koppelelement, welche dazu vorgesehen sind, zur Übertragung der Antriebskraft form- und/oder kraftschlüssig miteinander verbunden zu werden. Bevorzugterweise ist das Koppelelement als Teil der Werkzeugmaschine ausgebildet und zumindest teilweise, insbesondere zumindest größtenteils, innerhalb der Grundeinheit angeordnet.

Durch die erfindungsgemäße Ausgestaltung der Werkzeugmaschine kann vorteilhaft eine nutzerintuitive Bedienung ermöglicht werden. Vorteilhaft kann eine motorisch angetriebene stabgebundene Werkzeugmaschine mit einem zu einem manuellen stabgebundenen Werkzeug ähnlichen Benutzererlebnis bereitgestellt werden. Vorteilhaft kann eine nutzerkomfortable Bedienung in unterschiedlichen Griffhaltungen ermöglicht werden. Vorteilhaft kann ein versehentlicher Antrieb einer Bearbeitungseinheit verhindert werden und eine besonders nutzersichere stabgebundene Werkzeugmaschine bereitgestellt werden. Es kann eine vorteilhaft hohe Benutzersicherheit bei einem Verstauen oder einem Transport der Werkzeugmaschine erreicht werden, insbesondere da ein ungewolltes und/oder zufälliges Betätigen des Betätigungselements zu einer angetriebenen Bewegung eines Werkzeugs vorteilhaft erschwert werden kann.

Des Weiteren wird vorgeschlagen, dass die Werkzeugmaschine zumindest eine, insbesondere die vorher genannte, Antriebseinheit umfasst, wobei eine Schalteinheit der Betätigungsvorrichtung zumindest ein mit einem Betätigungselement der Schalteinheit wirkverbundenes Nockenelement umfasst, das dazu vorgesehen ist, in Abhängigkeit von einer Bewegung des Betätigungselements, insbesondere entlang eines, insbesondere des vorher genannten, Bewegungspfads von zumindest zwei unterschiedlichen Bewegungspfaden des Betätigungselements, zumindest ein Schaltelement der Schalteinheit zu betätigen, wobei das Schaltelement dazu vorgesehen ist, in Abhängigkeit von einer Betätigung eine Energieversorgung der Antriebseinheit der Werkzeugmaschine freizuschalten. Vorteilhaft kann eine nutzersichere und energieeffiziente Werkzeugmaschine bereitgestellt werden. Insbesondere bildet das Unterbetätigungselement das Nockenelement zumindest teilweise, bevorzugt vollständig, aus. Vorzugsweise ist das Nockenelement als ein nockenartiger Fortsatz des Unterbetätigungselements ausgebildet. Alternativ ist vorstellbar, dass das Nockenelement an dem Unterbetätigungselement und/oder an dem Betätigungselement fixiert ist oder dass das Nockenelement einteilig mit dem Betätigungselement ausgebildet ist. Vorzugsweise ist das Nockenelement in einem von einem Kopplungsbereich mit dem Betätigungselement abgewandten Endbereich des Unterbetätigungselements angeordnet. Das Nockenelement erstreckt sich quer zu einer Längsachse des Unterbetätigungselements, insbesondere quer zu der Längsachse der Grundeinheit. Vorzugsweise ist das zumindest eine Schaltelement als ein Signalschaltelement, insbesondere als ein Signalschalter, ausgebildet. Insbesondere ist das Schaltelement in Abhängigkeit von einer Betätigung durch das Nockenelement dazu eingerichtet, zumindest ein, insbesondere elektrisches, Signal zur Freischaltung der Energieversorgung der Antriebseinheit an die Elektronikeinheit zu senden. Vorzugsweise sind/ist das Betätigungselement und/oder das Nockenelement dazu vorgesehen, zur Freischaltung der Energieversorgung der Antriebseinheit über eine gesamte Längserstreckung des Bewegungspfads entlang des Bewegungspfads bewegt zu werden. Insbesondere ist das Schaltelement entlang einer um die Längsachse der Grundeinheit verlaufenden Betätigungsrichtung, insbesondere parallel zu dem Bewegungspfad, betätigbar, insbesondere freischaltbar. Vorzugsweise entspricht eine Freischaltung oder Freigabe des Schaltelements einer Betätigung des Schaltelements. Vorzugsweise ist die Elektronikeinheit dazu eingerichtet, in Abhängigkeit von dem Signal des Schaltelements eine Übertragung von, insbesondere elektrischer, Energie von der Energieversorgungseinheit, insbesondere der Aufnahmevorrichtung, an die Antriebseinheit, insbesondere an den Motor, zu erlauben, beispielsweise durch Schließen eines Stromkreises, Schalten eines Relais o. dgl. Alternativ oder zusätzlich ist denkbar, dass das Schaltelement direkt elektrisch, insbesondere signalübertragungstechnisch, mit der Antriebseinheit, insbesondere mit dem Motor, und/oder mit der Energieversorgungseinheit verbunden ist. Vorzugsweise beaufschlagt das zumindest eine Rückstellelement der Schalteinheit das Betätigungselement, insbesondere das Unterbetätigungselement, in der Sperrstellung derart mit einer Rückstellkraft, dass das Nockenelement mit dem Schaltelement in Kontakt steht. Insbesondere entspricht ein Kontakt des Schaltelements mit dem Nockenelement einem unbetätigten Zustand des Schaltelements. Vorzugsweise ist das Schaltelement in dem unbetätigten Zustand dazu eingerichtet, eine Energieversorgung der Antriebseinheit zu unterbinden, insbesondere der Elektronikeinheit ein Signal entsprechend einer Unterbindung der Energieversorgung der Antriebseinheit bereitzustellen. Insbesondere ist ein Kontakt zwischen dem Nockenelement und dem Schaltelement in Abhängigkeit von einer Bewegung des Betätigungselements entlang des Bewegungspfads, insbesondere in Abhängigkeit von einer Rotationsbewegung des Betätigungselements, oder entlang des weiteren Bewegungspfads unterbrechbar. Insbesondere ist das Nockenelement in Abhängigkeit von einer Bewegung des Betätigungselements entlang des Bewegungspfads, insbesondere in Abhängigkeit von einer Rotationsbewegung des Betätigungselements, oder des weiteren Bewegungspfads von dem Schaltelement weg bewegbar, insbesondere zu einer Freigabe des Schaltelements. Vorzugsweise entspricht eine Freigabe des Schaltelements einer Betätigung des Schaltelements. Alternativ ist denkbar, dass das Nockenelement in Abhängigkeit von einer Bewegung des Betätigungselements entlang des ersten Bewegungspfads, insbesondere in Abhängigkeit von einer Rotationsbewegung des Betätigungselements, oder des weiteren Bewegungspfads mit dem Schaltelement in Kontakt bringbar ist, wobei insbesondere ein Kontakt mit dem Schaltelement einer Betätigung des Schaltelements entspricht. Bevorzugt ist das Schaltelement und/oder das Unterbetätigungselement, insbesondere das Nockenelement, derart angeordnet und/oder ausgebildet, dass das Nockenelement bei einer Bewegung des Betätigungselements entlang des weiteren Bewegungspfads beabstandet von dem Schaltelement angeordnet ist, wobei vorteilhaft ein Abrieb und/oder eine Abnutzung des Schaltelements durch ein Entlangbewegen des Nockenelements verhindert werden kann.

Vorzugsweise ist die Elektronikeinheit, insbesondere die Prozessoreinheit, der Schalteinheit dazu eingerichtet, die Antriebseinheit in Abhängigkeit von der ermittelten Antriebsrichtung und/oder der ermittelten Antriebsgeschwindigkeit anzusteuern. Insbesondere ist die Elektronikeinheit, insbesondere die Prozessoreinheit, signalübertragungstechnisch mit der Antriebseinheit, insbesondere mit dem Motor, verbunden. Vorzugsweise ist die Elektronikeinheit, insbesondere die Prozessoreinheit, dazu eingerichtet, eine aktuelle Antriebsrichtung der Antriebseinheit auf die ermittelte Antriebsrichtung, insbesondere auf die ermittelte Soll-Antriebsrichtung, zu regeln und/oder eine aktuelle Antriebsgeschwindigkeit der Antriebseinheit auf die ermittelte Antriebsgeschwindigkeit, insbesondere auf die ermittelte Soll-Antriebsgeschwindigkeit, zu regeln. Das zumindest eine Positionssensorelement der Schalteinheit ist vorzugsweise dazu eingerichtet, zumindest eine Position der zumindest zwei Bearbeitungswerkzeuge relativ zueinander zu erfassen. Das Positionssensorelement kann insbesondere als ein Beschleunigungssensor, als ein Drehratensensor, als ein Hall-Sensor, als ein Potentiometer oder als ein anderes, einem Fachmann als sinnvoll erscheinendes Positionssensorelement ausgebildet sein. Vorzugsweise ist das Positionssensorelement dazu eingerichtet, der Elektronikeinheit, insbesondere der Prozessoreinheit, zumindest ein, insbesondere elektrisches, Signal entsprechend zumindest einer Position des zumindest einen Bearbeitungswerkzeugs bereitzustellen. Vorzugsweise ist das weitere Schaltelement der Schalteinheit dazu eingerichtet, der Elektronikeinheit, insbesondere der Prozessoreinheit, zumindest ein, insbesondere elektrisches, Signal entsprechend zumindest einer Schaltstellung des weiteren Schaltelements, insbesondere entsprechend zumindest einer Betätigungsstellung des Betätigungselements, bereitzustellen.

Zudem wird vorgeschlagen, dass das Werkzeugmaschinensystem zumindest ein Verlängerungsstück oder Adapterstück und zumindest eine Haltevorrichtung zu einem Verstauen des Verlängerungsstücks oder Adapterstücks an der Werkzeugmaschine, insbesondere einer, insbesondere der vorher genannten, Grundeinheit der Betätigungsvorrichtung und/oder an einem Gehäuse der Werkzeugmaschine, umfasst, wobei die Haltevorrichtung zumindest zwei Befestigungs- oder Fixierungselemente umfasst, wobei zumindest eine Handgriffeinheit der Betätigungsvorrichtung, welche als Betätigungselement einer, insbesondere der vorher genannten, Schalteinheit der Betätigungsvorrichtung ausgebildet ist, entlang einer Längsachse der Grundeinheit zwischen den zwei Befestigungs- oder Fixierungselementen angeordnet ist. Es kann vorteilhaft eine uneingeschränkte Bedienung der Werkzeugmaschine in einem an der Grundeinheit angeordneten/befestigten Zustand des Verlängerungsstücks oder Adapterstücks gewährleistet werden. Bevorzugt umfasst die Haltevorrichtung eine Rast-, Klemm- oder Magnetverbindung oder eine andere, einem Fachmann bekannte Verbindung zum Befestigen des Verlängerungsstücks oder Adapterstücks, welche insbesondere über die zwei Befestigungs- oder Fixierungselemente realisiert wird. Bevorzugt ist das Verlängerungsstück oder Adapterstück zumindest im Wesentlichen stabförmig ausgebildet. Vorzugsweise ist die Haltevorrichtung derart ausgebildet, dass in einem über die Haltevorrichtung an der Grundeinheit angeordneten Zustand des Verlängerungsstücks oder Adapterstücks eine Längsachse des Verlängerungsstücks oder Adapterstücks zumindest im Wesentlichen parallel zur Längsachse der Grundeinheit und/oder des Betätigungselements ausgerichtet ist. Bevorzugt ist das Verlängerungsstück oder Adapterstück zu einer, insbesondere optionalen, Verbindung des zumindest einen Bearbeitungswerkzeugs mit der Grundeinheit und/oder der Antriebseinheit vorgesehen, wobei insbesondere ein Abstand des Bearbeitungswerkzeugs zur Betätigungsvorrichtung, insbesondere der Grundeinheit, vergrößert wird.

Ferner wird vorgeschlagen, dass das Werkzeugmaschinensystem zumindest ein, insbesondere das vorher genannte, Verlängerungsstück oder Adapterstück und zumindest eine, insbesondere die vorher genannte, Haltevorrichtung zu einem Verstauen des Verlängerungsstücks oder Adapterstücks an der Werkzeugmaschine, insbesondere einer, insbesondere der vorher genannten, Grundeinheit der Betätigungsvorrichtung und/oder an einem Gehäuse der Werkzeugmaschine, umfasst, wobei in einem an der Grundeinheit verstauten Zustand des Verlängerungsstücks oder Adapterstücks ein Verhältnis von einem minimalen Abstand zwischen dem Verlängerungsstück oder Adapterstück und zumindest einer Handgriffeinheit der Betätigungsvorrichtung, welche als das Betätigungselement ausgebildet ist, vorzugsweise dem Hauptgriffbereich/Zwischenbereich des Betätigungselements, und einer maximalen Quererstreckung des Betätigungselements, insbesondere in dem Zwischenbereich des Betätigungselements, welche insbesondere senkrecht zu einer, insbesondere der vorher genannten, Längsachse des Betätigungselements ausgerichtet ist, mindestens 0,35, vorzugsweise mindestens 0,4 und bevorzugt mindestens 4,5, beträgt. Es kann vorteilhaft eine uneingeschränkte Bedienung der Werkzeugmaschine in einem an der Grundeinheit angeordneten/befestigten Zustand des Verlängerungsstücks oder Adapterstücks gewährleistet werden. Es kann eine vorteilhaft hohe Flexibilität hinsichtlich einer Haltung eines Benutzers beim Bedienen der Werkzeugmaschine ermöglicht werden, insbesondere unabhängig von einer Anordnung des Verlängerungsstücks oder Adapterstücks an der Grundeinheit. Vorzugsweise kann in Abhängigkeit von einer Griffgröße des Betätigungselements ausreichend Raum zu einem Umgreifen des Betätigungselements durch eine Hand eines Benutzers ermöglicht werden. Vorzugsweise erstreckt sich der minimale Abstand zwischen dem Verlängerungsstück oder Adapterstück und der Handgriffeinheit der Betätigungsvorrichtung, welche als das Betätigungselement ausgebildet ist, vorzugsweise dem Hauptgriffbereich/Zwischenbereich des Betätigungselements, zumindest im Wesentlichen senkrecht zu der Längsachse der Grundeinheit und/oder des Betätigungselements. Insbesondere ist der minimale Abstand zwischen dem Verlängerungsstück oder Adapterstück und der Handgriffeinheit der Betätigungsvorrichtung, welche als das Betätigungselement ausgebildet ist, als minimaler Abstand zwischen einer Außenfläche des Hauptgriffbereichs/Zwischenbereichs des Betätigungselements und dem Verlängerungsstück oder Adapterstück ausgebildet. Insbesondere kann ein minimaler Abstand zwischen einem Endbereich des Betätigungselements, welcher insbesondere eine größere maximale Quererstreckung aufweist als der Hauptgriffbereich/Zwischenbereich des Betätigungselements, und dem Verlängerungsstück oder Adapterstück kleiner sein als der minimale Abstand zwischen der Außenfläche des Hauptgriffbereichs/Zwischenbereichs des Betätigungselements und dem Verlängerungsstück oder Adapterstück. Bevorzugt ist das Verlängerungsstück oder Adapterstück in einem über die Haltevorrichtung befestigten Zustand relativ zur Grundeinheit, insbesondere der Längsachse der Grundeinheit, zentriert angeordnet. Bevorzugt umfasst eine von der Längsachse der Grundeinheit und einer Längsachse des Verlängerungsstücks oder Adapterstücks aufgespannte Ebene den minimalen Abstand zwischen dem Verlängerungsstück oder Adapterstück und der zumindest einen Handgriffeinheit der Betätigungsvorrichtung, welche als das Betätigungselement ausgebildet ist, vorzugsweise dem Hauptgriffbereich/Zwischenbereich des Betätigungselements. Bevorzugt beträgt der minimale Abstand zwischen dem Verlängerungsstück oder Adapterstück und der zumindest einen Handgriffeinheit der Betätigungsvorrichtung, welche als das Betätigungselement ausgebildet ist, vorzugsweise dem Hauptgriffbereich/Zwischenbereich des Betätigungselements, mindestens 1,5 cm, vorzugsweise mindestens 2 cm und bevorzugt mindestens 2,2 cm.

Zudem wird ein Verfahren zu einem Betätigen eines erfindungsgemäßen Werkzeugmaschinensystems mit einer, insbesondere der vorher genannten, insbesondere stabgebundenen, Werkzeugmaschine, vorzugsweise einem Hochentasters, insbesondere mittels einer erfindungsgemäßen Betätigungsvorrichtung, vorgeschlagen, wobei in zumindest einem Verfahrensschritt mittels einer, insbesondere der vorher genannten, Schalteinheit einer, insbesondere der vorher genannten, Betätigungsvorrichtung der Werkzeugmaschine über eine Betätigung eines, insbesondere des vorher genannten, Betätigungselements der Schalteinheit entlang eines Bewegungspfads, welcher insbesondere einer Rotationsbewegung folgt, zumindest eine Energieversorgung einer, insbesondere der vorher genannten, Antriebseinheit der Werkzeugmaschine freigegeben wird, wobei in zumindest einem weiteren Verfahrensschritt mittels der Schalteinheit in Abhängigkeit von einer, insbesondere der Betätigung zumindest im Wesentlichen direkt folgenden, weiteren Betätigung des Betätigungselements entlang eines, von dem Bewegungspfad verschiedenen weiteren Bewegungspfads, welcher insbesondere einer Linearbewegung folgt, die Antriebseinheit zu einer Ausgabe einer Antriebskraft angesteuert wird. Vorzugsweise wird in zumindest einem Verfahrensschritt in Abhängigkeit von zumindest einem Proportionalbetätigungssignal zumindest ein Sollzustand, insbesondere zumindest eine Sollposition, von zumindest einer, insbesondere der vorher genannten, Bearbeitungseinheit der Werkzeugmaschine, insbesondere von zumindest einem Bearbeitungswerkzeug der Bearbeitungseinheit, ermittelt, wobei in Abhängigkeit von dem Sollzustand, insbesondere unter Berücksichtigung zumindest eines Glättungsparameters, zumindest eine, insbesondere die vorher genannte, Antriebseinheit der Werkzeugmaschine zu einem Antrieb der Bearbeitungseinheit angesteuert wird. Das Proportionalbetätigungssignal wird vorzugsweise von dem proportionalen weiteren Schaltelement der Schalteinheit bereitgestellt.

Durch die erfindungsgemäße Ausgestaltung des Verfahrens kann eine vorteilhaft einfache und intuitive Bedienung der Werkzeugmaschine ermöglicht werden. Es kann eine vorteilhaft energieeffiziente Bedienung der Werkzeugmaschine erreicht werden.

Außerdem wird eine, insbesondere die vorher genannte, Schalteinheit für eine erfindungsgemäße Betätigungsvorrichtung vorgeschlagen.

Durch die erfindungsgemäße Ausgestaltung der Schalteinheit kann eine vorteilhaft intuitive Bedienungsbewegung des Betätigungselements auf verschiedene Schaltbefehle übertragen werden. Es kann eine vorteilhaft sichere Betätigung von Schaltfunktionen über das über zumindest zwei unterschiedliche Bewegungspfade gelagerte Betätigungselement ermöglicht werden.

Die erfindungsgemäße Betätigungsvorrichtung, die erfindungsgemäße Werkzeugmaschine, das erfindungsgemäße Verfahren und/oder die erfindungsgemäße Schalteinheit sollen/soll hierbei nicht auf die oben beschriebene Anwendung und Ausführungsform beschränkt sein. Insbesondere können/kann die erfindungsgemäße Betätigungsvorrichtung, die erfindungsgemäße Werkzeugmaschine, das erfindungsgemäße Verfahren und/oder die erfindungsgemäße Schalteinheit zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer stabgebundenen Werkzeugmaschine, welche eine erfindungsgemäße Betätigungsvorrichtung umfasst, mit einem Werkzeugaufsatz und mit einem Verlängerungsstück, welches über eine Haltevorrichtung an der Werkzeugmaschine verstaut ist, in einer schematischen perspektivischen Darstellung,
- Fig. 2: eine schematische perspektivische Darstellung des erfindungsgemäßen Werkzeugmaschinensystems in einem zwischen der Werkzeugmaschine und dem Werkzeugaufsatz montierten Zustand des Verlängerungsstücks,
- Fig. 3: eine schematische Seitenansicht des erfindungsgemäßen Werkzeugmaschinensystems in einem Bereich der erfindungsgemäßen Betätigungsvorrichtung,
- Fig. 4: eine schematische Schnittansicht des erfindungsgemäßen Werkzeugmaschinensystems in dem Bereich der erfindungsgemäßen Betätigungsvorrichtung entlang einer Haupterstreckungsebene des Werkzeugmaschinensystems,
- Fig. 5: eine schematische Schnittansicht des erfindungsgemäßen Werkzeugmaschinensystems in einem Bereich eines Betätigungselements der erfindungsgemäßen Betätigungsvorrichtung zumindest im Wesentlichen senkrecht zu einer Längsachse der Werkzeugmaschine,
- Fig. 6: eine perspektivische Darstellung eines Schnitts des erfindungsgemäßen Werkzeugmaschinensystems entlang der Haupterstreckungsebene des Werkzeugmaschinensystems in einem Bereich einer erfindungsgemäßen Schalteinheit der erfindungsgemäßen Betätigungsvorrichtung,
- Fig. 7: eine schematische Seitenansicht des erfindungsgemäßen Werkzeugmaschinensystems in einem Bereich einer Kulissenführung der erfindungsgemäßen Schalteinheit, wobei insbesondere das Betätigungselement mittig geschnitten dargestellt ist,
- Fig. 8: eine schematische Schnittansicht des erfindungsgemäßen Werkzeugmaschinensystems in einem Bereich der erfindungsgemäßen Schalteinheit der erfindungsgemäßen Betätigungs- vorrichtung, wobei entlang einer Haupterstreckungsebene des Werkzeugmaschinensystems geschnitten ist,
- Fig. 9: eine schematische Schnittansicht des erfindungsgemäßen Werkzeugmaschinensystems in einem Bereich der erfindungsgemäßen Schalteinheit der erfindungsgemäßen Betätigungsvorrichtung, wobei senkrecht zur Längsachse der Werkzeugmaschine geschnitten ist,
- Fig. 10: eine schematische Darstellung eines beispielhaften Ablaufs eines erfindungsgemäßen Verfahrens zu einem Betätigen des erfindungsgemäßen Werkzeugmaschinensystems mittels der erfindungsgemäßen Betätigungsvorrichtung,
- Fig. 11: eine schematische Darstellung einer alternativen Ausgestaltung einer Kulissenführung einer erfindungsgemäßen Schalteinheit einer erfindungsgemäßen Betätigungsvorrichtung,
- Fig. 12: eine schematische Darstellung einer weiteren alternativen Ausgestaltung einer Kulissenführung einer erfindungsgemäßen Schalteinheit einer erfindungsgemäßen Betätigungsvorrichtung und
- Fig. 13: eine schematische Schnittansicht einer alternativen Ausgestaltung eines Betätigungselements einer erfindungsgemäßen Betätigungsvorrichtung als Teil eines erfindungsgemäßen Werkzeugmaschinensystems.

### Beschreibung der Ausführungsbeispiele

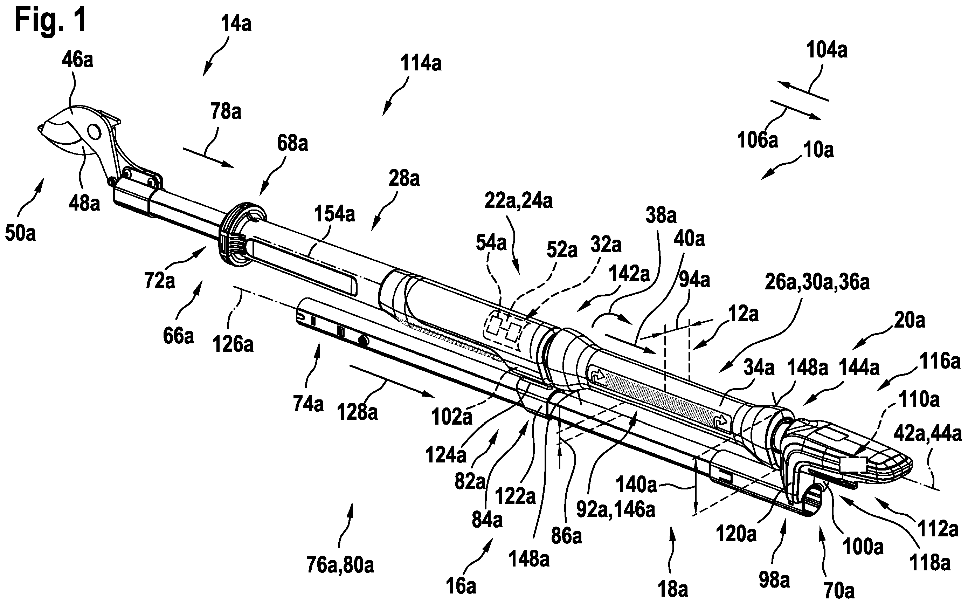

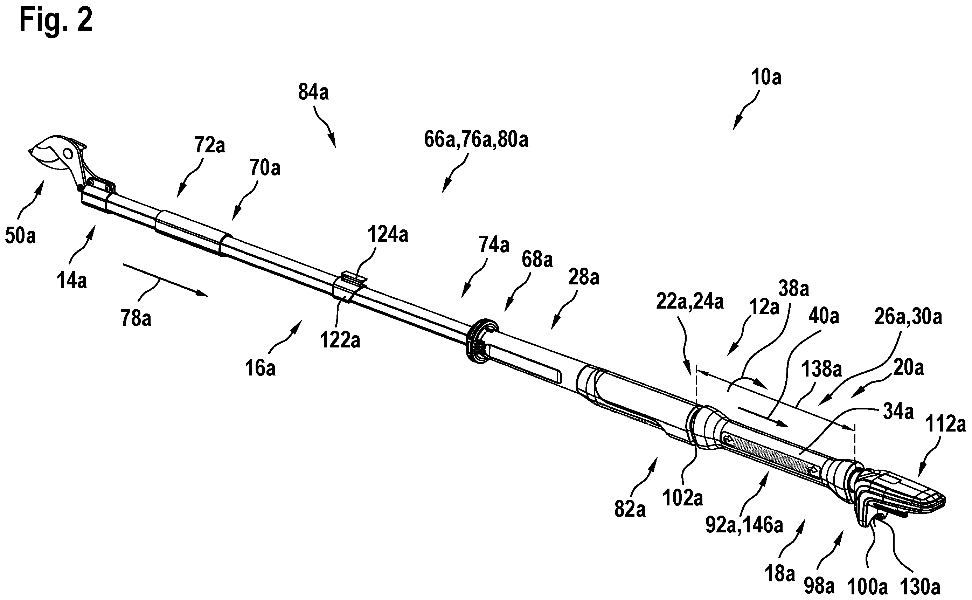

Figuren 1 und 2 zeigen ein Werkzeugmaschinensystem 10a mit einer stabgebundenen Werkzeugmaschine 12a, mit einem Werkzeugaufsatz 14a und mit einem Verlängerungsstück oder Adapterstück 16a. Die Werkzeugmaschine 12a ist als ein Hochentaster ausgebildet. Es sind aber auch andere Ausgestaltungen der Werkzeugmaschine 12a denkbar, beispielsweise als eine Stab-Gartenschere, insbesondere als eine Stab-Astschere, als eine Stab-Heckenschere, als eine Stab-Kettensäge oder als eine andere, einem Fachmann als sinnvoll erscheinende Werkzeugmaschine. Das Verlängerungsstück oder Adapterstück 16a ist insbesondere als Zwischenstück zur Verlängerung einer Reichweite des Werkzeugmaschinensystems 10a, insbesondere eines Abstands des Werkzeugaufsatzes 14a und der Werkzeugmaschine 12a, ausgebildet. Bevorzugt ist das Verlängerungsstück oder Adapterstück 16a dazu vorgesehen, zwischen der Werkzeugmaschine 12a und dem Werkzeugaufsatz 14a angeordnet zu werden. Das Werkzeugmaschinensystem 10a umfasst eine Haltevorrichtung 18a zu einem Verstauen des Verlängerungsstücks oder Adapterstücks 16a an der Werkzeugmaschine 12a. In Figur 1 ist das Verlängerungsstück oder Adapterstück 16a in einem über die Haltevorrichtung 18a an der Werkzeugmaschine 12a angeordneten, insbesondere befestigten, Zustand gezeigt.

Die Werkzeugmaschine 12a umfasst eine Betätigungsvorrichtung 20a zu einem Halten und Bedienen der Werkzeugmaschine 12a und/oder des Werkzeugmaschinensystems 10a. Die Werkzeugmaschine 12a umfasst eine Grundeinheit 22a, welche zumindest teilweise ein Gehäuse 24a der Werkzeugmaschine 12a ausbildet. Die Grundeinheit 22a bildet insbesondere einen Teil der Betätigungsvorrichtung 20a aus. Die Grundeinheit 22a ist zumindest im Wesentlichen stabförmig ausgebildet. Die Betätigungsvorrichtung 20a umfasst zwei zumindest im Wesentlichen koaxial zueinander angeordnete und beabstandet voneinander angeordnete Handgriffeinheiten 26a, 28a, die jeweils dazu vorgesehen sind, von zumindest einer Hand eines Benutzers zumindest größtenteils umgriffen zu werden. Die zwei Handgriffeinheiten 26a, 28a sind jeweils an der Grundeinheit 22a angeordnet oder zumindest teilweise als Teil der Grundeinheit 22a ausgebildet. Die Betätigungsvorrichtung 20a umfasst eine Schalteinheit 30a zu einer Steuerung von zumindest einer Funktion, insbesondere einer Mehrzahl von Funktionen, der Werkzeugmaschine 12a. Bevorzugt sind die über die Schalteinheit 30a steuerbaren Funktionen der Werkzeugmaschine 12a als ein Freischalten einer Energieversorgung der Werkzeugmaschine 12a, insbesondere einer Antriebseinheit 32a der Werkzeugmaschine 12a, und als eine Ansteuerung der Antriebseinheit 32a der Werkzeugmaschine 12a ausgebildet. Eine Handgriffeinheit 26a der zwei Handgriffeinheiten 26a, 28a ist an der Grundeinheit 22a angeordnet. Die Handgriffeinheit 22a ist als Betätigungselement 34a der Schalteinheit 30a ausgebildet, welches die Grundeinheit 22a in einem Bereich 36a der Grundeinheit 22a, in dem das Betätigungselement 34a angeordnet ist, röhrenartig umschließt. Eine weitere Handgriffeinheit 28a der zwei Handgriffeinheiten 26a, 28a ist als Teil der Grundeinheit 22a ausgebildet. Das Betätigungselement 34a ist relativ zur Grundeinheit 22a und/oder relativ zu der weiteren Handgriffeinheit 28a der zwei Handgriffeinheiten 26a, 28a entlang von zumindest zwei unterschiedlichen Bewegungspfaden 38a, 40a beweglich gelagert, wobei zumindest ein Bewegungspfad 38a der zwei unterschiedlichen Bewegungspfade 38a, 40a einer Rotationsbewegung, insbesondere um eine Längsachse 42a der Grundeinheit 22a und/oder um eine Längsachse 44a des Betätigungselements 34a, folgt.

Die Werkzeugmaschine 12a umfasst die Antriebseinheit 32a, welche dazu vorgesehen ist, eine Antriebskraft für eine angetriebene Bewegung zumindest eines Bearbeitungswerkzeugs 46a, 48a einer Bearbeitungseinheit 50a des Werkzeugaufsatzes 14a zur Verfügung zu stellen. Die Antriebseinheit 32a umfasst einen Motor 52a, welcher insbesondere als ein Elektromotor ausgebildet ist. Es ist denkbar, dass der Motor 52a als ein bürstenloser Gleichstrommotor ausgebildet ist. Alternativ sind auch andere Ausgestaltungen des Motors 52a denkbar. Die Werkzeugmaschine 12a, insbesondere die Antriebseinheit 32a, umfasst eine Kraftübertragungsvorrichtung 54a. Die Kraftübertragungsvorrichtung 54a ist bevorzugt zu einer Umwandlung und/oder gerichteten Übertragung einer von dem Motor 52a erzeugten Kraft vorgesehen. Die Antriebseinheit 32a ist entlang der Längsachse 42a der Grundeinheit 22a zwischen den zwei Handgriffeinheiten 26a., 28a angeordnet. Alternativ sind auch andere Ausgestaltungen der Werkzeugmaschine 12a denkbar, wobei die Antriebseinheit 32a beispielsweise vor der weiteren Handgriffeinheit 28a oder hinter der Handgriffeinheit 26a angeordnet ist. Insbesondere ist die Kraftübertragungsvorrichtung 54a dazu vorgesehen, eine Rotationsbewegung eines Abtriebselements des Motors 52a (in Figuren 1 und 2 nicht gezeigt), welches vorzugsweise als eine Antriebswelle ausgebildet ist, in eine zumindest im Wesentlichen parallel zu einer Längsachse 42a der Werkzeugmaschine 12a, insbesondere der Grundeinheit 22a, ausgerichtete Bewegung umzuwandeln. Insbesondere umfasst die Längsachse 42a der Grundeinheit 22a die Längsachse der Werkzeugmaschine. Die Kraftübertragungsvorrichtung umfasst eine Gewindestange (in Figuren 1 und 2 nicht gezeigt), welche insbesondere mit der Antriebswelle des Motors 52a verbunden ist, eine Spindelmutter (in Figuren 1 und 2 nicht gezeigt) zu einer Anordnung an der Gewindestange und eine Vielzahl von Kugeln (in Figuren 1 und 2 nicht gezeigt) zu einer Kraftübertragung zwischen der Gewindestange und der Spindelmutter. Die Gewindestange und die Spindelmutter begrenzen zusammen um die Gewindestange zumindest einen Führungskanal, insbesondere genau zwei Führungskanäle, zum Führen der Kugeln. Insbesondere sind die Kugeln dazu vorgesehen, über eine Bewegung entlang des zumindest einen Führungskanals eine Rotationsbewegung der Gewindestange in eine translatorische Bewegung der Spindelmutter umzuwandeln. Die Spindelmutter ist aus zumindest zwei, insbesondere genau drei, Teilstücken gebildet. Jeder der zwei Führungskanäle ist an jeder Stelle entlang einer Führungsstrecke des jeweiligen Führungskanals um die Gewindestange jeweils zumindest teilweise von jeweils zwei Teilstücken der drei Teilstücke begrenzt. Es sind aber auch andere Ausgestaltungen der Kraftübertragungsvorrichtung 54a denkbar, beispielsweise mit einer einteiligen Spindelmutter und/oder mit einer verschiedenen Anzahl an Führungskanälen für Lagerelemente.

Das Werkzeugmaschinensystem 10a umfasst eine Verbindungsvorrichtung 66a zu einem Verbinden der Werkzeugmaschine 12a mit dem Verlängerungsstück oder Adapterstück 16a oder dem Werkzeugaufsatz 14a und/oder zu einem Verbinden des Werkzeugaufsatzes 14a mit dem Verlängerungsstück oder Adapterstück 16a. In Figur 1 ist der Werkzeugaufsatz 14a über die Verbindungsvorrichtung 66a mit der Werkzeugmaschine 12a verbunden. Es ist aber auch denkbar, dass der Werkzeugaufsatz 14a über die Verbindungsvorrichtung 66a mit dem Verlängerungsstück oder Adapterstück 16a verbunden wird, welches dann über die Verbindungsvorrichtung 66a mit der Werkzeugmaschine 12a verbunden wird/verbindbar ist (vgl. Figur 2). Die Verbindungsvorrichtung 66a umfasst zumindest ein erstes Verbindungsstück 68a, 70a, bevorzugt genau zwei erste Verbindungsstücke 68a, 70a, insbesondere ein erstes Verbindungsstück 68a und ein weiteres erstes Verbindungsstück 70a, welche insbesondere jeweils als Teil der Grundeinheit 22a der Werkzeugmaschine 12a oder als Teil des Verlängerungsstücks oder Adapterstücks 16a ausgebildet sind. Das erste Verbindungsstück 68a ist als Teil der Werkzeugmaschine 12a, insbesondere der Grundeinheit 22a, ausgebildet. Das weitere erste Verbindungsstück 70a ist als Teil des Verlängerungsstücks oder Adapterstücks 16a ausgebildet. Die Verbindungsvorrichtung 66a umfasst zumindest ein zweites Verbindungsstück 72a, 74a, bevorzugt genau zwei zweite Verbindungsstücke 72a, 74a, insbesondere ein zweites Verbindungsstück 72a und ein weiteres zweites Verbindungsstück 74a, welche insbesondere jeweils als Teil des Verlängerungsstücks oder Adapterstücks 16a oder als Teil des Werkzeugaufsatzes 14a ausgebildet sind. Das zweite Verbindungsstück 72a ist als Teil des Werkzeugaufsatzes 14a ausgebildet. Das weitere zweite Verbindungsstück 74a ist als Teil des Verlängerungsstücks oder Adapterstücks 16a ausgebildet. Vorzugsweise sind das erste Verbindungsstück 68a und das weitere erste Verbindungsstück 70a jeweils mit dem zweiten Verbindungsstück 72a und dem weiteren zweiten Verbindungsstück 74a verbindbar. Insbesondere sind das erste Verbindungsstück 68a und das weitere erste Verbindungsstück 70a jeweils in jedem Betriebszustand der Verbindungsvorrichtung 66a höchstens mit einem der zwei zweiten Verbindungsstücke 72a, 74a verbunden. Die Verbindungsvorrichtung 66a umfasst eine Befestigungseinheit 76a, die dazu vorgesehen ist, eines der zwei zweiten Verbindungsstücke 72a, 74a, insbesondere das zweite Verbindungsstück 72a oder das weitere zweite Verbindungsstück 74a, jeweils über eine Bewegung entlang einer zumindest im Wesentlichen geradlinigen Verbindungsrichtung 78a an einem der zwei ersten Verbindungsstücke 68a, 70a, insbesondere dem ersten Verbindungsstück 68a oder dem weiteren ersten Verbindungsstück 70a, zu befestigen. Die Verbindungsvorrichtung 66a umfasst eine Koppeleinheit 80a, die zumindest in einem gekoppelten Zustand dazu vorgesehen ist, eine Antriebskraft zumindest im Wesentlichen parallel zur Verbindungsrichtung 78a von dem einen der ersten Verbindungsstücke 68a, 70a, insbesondere einem Koppelelement der Koppeleinheit 80a (in Figuren 1 und 2 nicht gezeigt), das als Teil eines der ersten Verbindungsstücke 68a, 70a ausgebildet ist, an eines der zweiten Verbindungsstücke 72a, 74a, insbesondere ein weiteres Koppelelement der Koppeleinheit 80a (in Figuren 1 und 2 nicht gezeigt), das als Teil eines der zweiten Verbindungsstücke 72a, 74a ausgebildet ist, zu übertragen. Die Befestigungseinheit 76a der Verbindungsvorrichtung 66a ist dazu vorgesehen, ein erstes Verbindungsstück 68a, 70a, insbesondere das erste Verbindungsstück 68a oder das weitere erste Verbindungsstück 70a, und ein zweites Verbindungsstück 72a, 74a, insbesondere das zweite Verbindungsstück 72a oder das weitere zweite Verbindungsstück 74a, bei oder nach einem Ineinanderschieben des jeweiligen ersten Verbindungsstücks 68a, 70a und des jeweiligen zweiten Verbindungsstücks 72a, 74a in Verbindungsrichtung 78a zumindest im Wesentlichen selbstständig aneinander zu befestigen. Die Koppeleinheit 80a ist dazu vorgesehen, bei oder nach dem Ineinanderschieben des jeweiligen ersten Verbindungsstücks 68a, 70a und des jeweiligen zweiten Verbindungsstücks 72a, 74a in Verbindungsrichtung 78a zumindest im Wesentlichen selbstständig in einen gekoppelten Zustand der Koppeleinheit 80a überzugehen. Insbesondere ist die Koppeleinheit 80a dazu vorgesehen, in dem gekoppelten Zustand, vorzugsweise über die Koppelelemente, eine Antriebskraft von einem ersten Verbindungsstück 68a, 70a auf ein zweites Verbindungsstück 72a, 74a zu übertragen.

Das Verlängerungsstück oder Adapterstück 16a ist zumindest im Wesentlichen stabförmig ausgebildet. Das Verlängerungsstück oder Adapterstück 16a ist zu einer Anordnung und/oder einer Kraftübertragung zwischen der Werkzeugmaschine 12a und dem Werkzeugaufsatz 14a und/oder zu einer Befestigung des Werkzeugaufsatzes 14a an der Werkzeugmaschine 12a vorgesehen. Das Verlängerungsstück oder Adapterstück 16a ist über die Haltevorrichtung 18a an der Werkzeugmaschine 12a, insbesondere der Grundeinheit 22a, verstaubar, bevorzugt befestigbar. Die Haltevorrichtung 18a ist zumindest im Wesentlichen vollständig an einer Unterseite 82a der Werkzeugmaschine 12a angeordnet. Die Haltevorrichtung 18a umfasst eine Befestigungseinheit 84a zu einer Befestigung des Verlängerungsstücks oder Adapterstücks 16a an der Werkzeugmaschine 12a, insbesondere der Grundeinheit 22a. Die Handgriffeinheiten 26a, 28a der Werkzeugmaschine 12a, insbesondere der Betätigungsvorrichtung 20a, sind insbesondere stabförmig ausgebildet. Die Befestigungseinheit 84a der Haltevorrichtung 18a ist entlang der Längsachse 42a der Werkzeugmaschine 12a zwischen den zwei Handgriffeinheiten 26a, 28a angeordnet. Bevorzugt ist die Befestigungseinheit 84a der Haltevorrichtung 18a zumindest teilweise an der Grundeinheit 22a angeordnet, bevorzugt zumindest teilweise einteilig mit der Grundeinheit 22a, insbesondere einer an der Unterseite 82a der Werkzeugmaschine 12a angeordneten Außenwand der Grundeinheit 22a, ausgebildet. Vorzugsweise ist die Befestigungseinheit 84a der Haltevorrichtung 18a senkrecht zur Längsachse 42a der Werkzeugmaschine 12a betrachtet zumindest im Wesentlichen vollständig zwischen den zwei Handgriffelementen 26a, 28a angeordnet und insbesondere beabstandet von durch die Handgriffeinheiten 26a, 28a begrenzten Bereichen, welche sich um die Längsachse 42a der Werkzeugmaschine 12a erstrecken, angeordnet. Die Haltevorrichtung 18a und/oder die Grundeinheit 22a sind derart ausgebildet, dass das Verlängerungsstück oder Adapterstück 16a in einem an der Grundeinheit 22a befestigten Zustand, insbesondere zumindest im Wesentlichen senkrecht zu der Längsachse 42a der Werkzeugmaschine 12a, einen minimalen Abstand 86a zu zumindest einer der Handgriffeinheiten 26a, 28a, vorzugsweise zu einem Hauptgriffbereich 92a der Handgriffeinheit 26a, aufweist, der mindestens 1,5 cm, vorzugsweise mindestens 2 cm und bevorzugt mindestens 2,2 cm, beträgt und/oder dass ein Verhältnis des minimalen Abstands 86a des Verlängerungsstücks oder Adapterstücks 16a und zumindest einer der Handgriffeinheiten 26a, 28a, vorzugsweise dem Hauptgriffbereich 92a der Handgriffeinheit 26a, und einer maximalen Quererstreckung 94a der jeweiligen Handgriffeinheit 26a, 28a, insbesondere der Handgriffeinheit 26a, jeweils mindestens 0,35, vorzugsweise mindestens 0,4 und bevorzugt mindestens 0,45, beträgt.

Die Antriebseinheit 32a und die Kraftübertragungsvorrichtung 54a sind zumindest im Wesentlichen vollständig innerhalb der Grundeinheit 22a angeordnet und/oder von dem, insbesondere durch die Grundeinheit 22a ausgebildeten, Gehäuse 24a der Werkzeugmaschine 12a umschlossen. Die Schalteinheit 30a ist, insbesondere mit Ausnahme des Betätigungselements 34a, zumindest größtenteils innerhalb der Grundeinheit 22a angeordnet und/oder von dem, insbesondere durch die Grundeinheit 22a ausgebildeten, Gehäuse 24a der Werkzeugmaschine 12a umschlossen. Die Koppeleinheit 80a der Verbindungsvorrichtung 66a erstreckt sich zumindest im Wesentlichen vollständig innerhalb der Werkzeugmaschine 12a, insbesondere der Grundeinheit 22a, des Verlängerungsstücks oder Adapterstücks 16a und des Werkzeugaufsatzes 14a. Das erste Verbindungsstück 68a, das weitere erste Verbindungsstück 70a, das zweite Verbindungsstück 72a und das weitere zweite Verbindungsstück 74a sind jeweils zumindest im Wesentlichen stabförmig ausgebildet. Die Verbindungsrichtung 78a der Verbindungsvorrichtung 66a ist, insbesondere in einem befestigten Zustand der Befestigungseinheit 76a der Verbindungsvorrichtung 66a, zumindest im Wesentlichen parallel zu einer Längsachse des ersten Verbindungsstücks 68a, des weiteren ersten Verbindungsstücks 70a, des zweiten Verbindungsstücks 72a und/oder des weiteren zweiten Verbindungsstücks 74a ausgerichtet, welche/welches insbesondere zumindest im Wesentlichen stabförmig ausgebildet sind/ist. Vorzugsweise sind zumindest die Verbindungsstücke 68a, 70a, 72a, 74a der Verbindungsvorrichtung 66a, insbesondere in einem verbundenen Zustand und/oder in dem befestigten Zustand der Befestigungseinheit 76a der Verbindungsvorrichtung 66a, zumindest im Wesentlichen koaxial zueinander angeordnet (siehe Figur 2).

Die Haltevorrichtung 18a umfasst eine Fixiereinheit 98a zu einem Fixieren des an der Werkzeugmaschine 12a, insbesondere über die Befestigungseinheit 84a der Haltevorrichtung 18a, befestigten Verlängerungsstücks oder Adapterstücks 16a. Die Fixiereinheit 98a umfasst ein Fixierelement 100a, welches an der Werkzeugmaschine 12a, insbesondere der Grundeinheit 22a, angeordnet ist und zu einem Halten des Verlängerungsstücks oder Adapterstücks 16a vorgesehen ist. Die Befestigungseinheit 84a der Haltevorrichtung 18a umfasst ein als Aufnahmeausnehmung 102a ausgebildetes Befestigungselement, welches an der Grundeinheit 22a angeordnet und/oder einteilig mit der Grundeinheit 22a ausgebildet ist. Vorzugsweise begrenzt die Grundeinheit 22a das als Aufnahmeausnehmung 102a ausgebildete Befestigungselement der Befestigungseinheit 84a der Haltevorrichtung 18a. Die Handgriffeinheit 26a, welche als das Betätigungselement 34a ausgebildet ist, ist entlang der Längsachse 42a der Grundeinheit 22a der Betätigungsvorrichtung 20a zwischen der Befestigungseinheit 84a, insbesondere der Aufnahmeausnehmung 102a der Befestigungseinheit 84a, der Haltevorrichtung 18a und dem Fixierelement 100a angeordnet.

Die Bearbeitungseinheit 50a des Werkzeugaufsatzes 14a umfasst bevorzugt ein beweglich gelagertes Bearbeitungswerkzeug 46a, welches insbesondere ein Messer bzw. eine Schneide umfasst, und ein feststehendes weiteres Bearbeitungswerkzeug 48a, welches insbesondere ein Messer bzw. eine Schneide umfasst. Die Bearbeitungswerkzeuge 46a, 48a können insbesondere jeweils als eine Schneidklinge, wie beispielhaft im vorliegenden Ausführungsbeispiel, insbesondere als eine Scherenklinge, als eine Trimmerklinge, als eine Sägekette, als Sägeschwert oder als ein anderes, einem Fachmann als sinnvoll erscheinendes Bearbeitungswerkzeug ausgebildet sein. Bevorzugt ist das Bearbeitungswerkzeug 46a zu einem Schnitt und/oder zu einem Öffnen über die Antriebskraft relativ zu dem weiteren Bearbeitungswerkzeug 48a bewegbar. Bevorzugt sind/ist das Bearbeitungswerkzeug 46a und/oder das weitere Bearbeitungswerkzeug 48a derart ausgebildet und/oder gelagert, dass das Bearbeitungswerkzeug 46a und das weitere Bearbeitungswerkzeug 48a durch eine in eine Vorwärtsrichtung 104a und/oder in eine Schieberichtung 104a auf das Bearbeitungswerkzeug 46a wirkende Antriebskraft zu einem Schnitt aufeinander bewegt werden und durch eine in eine Rückwärtsrichtung 106a und/oder in eine Zugrichtung 106a auf das Bearbeitungswerkzeug 46a wirkende Antriebskraft zu einem Lösen, insbesondere zumindest in einem Schnittbereich, auseinander bewegt und/oder voneinander getrennt werden. Insbesondere sind die Vorwärtsrichtung 104a und/oder die Schieberichtung 104a und die Rückwärtsrichtung 106a und/oder die Zugrichtung 106a jeweils zumindest im Wesentlichen parallel zur Längsachse 42a der Grundeinheit 22a und/oder zur Verbindungsrichtung 78a ausgerichtet. Vorzugsweise ist die Antriebseinheit 32a dazu vorgesehen, insbesondere in einem mit dem Werkzeugaufsatz 14a verbundenen Zustand der Werkzeugmaschine 12a, das Bearbeitungswerkzeug 46a zu einer Bewegung anzutreiben. Bevorzugt ist die Antriebseinheit 32a dazu vorgesehen, die Bearbeitungseinheit 50a, insbesondere das Bearbeitungswerkzeug 46a, zu einer diskontinuierlichen Bewegung anzutreiben. Es sind auch andere Ausgestaltungen des Werkzeugaufsatzes 14a, insbesondere der Bearbeitungseinheit 50a, denkbar, beispielsweise mit mehr als einem antreibbaren und/oder beweglichen Bearbeitungswerkzeug 46a und/oder mit mehr oder weniger als zwei Bearbeitungswerkzeugen 46a, 48a.

Das Werkzeugmaschinensystem 10a und/oder die Werkzeugmaschine 12a umfassen/umfasst eine Energieversorgungseinheit 108a (in Figuren 1 und 2 nicht gezeigt), die dazu vorgesehen ist, zumindest der Antriebseinheit 32a, insbesondere dem Motor 52a, und/oder der Schalteinheit 30a, insbesondere einer Elektronikeinheit 110a der Schalteinheit 30a, zu einem Betrieb Energie, insbesondere elektrische Energie, bereitzustellen. Die Energieversorgungseinheit 108a ist zu einer netzunabhängigen Energieversorgung zumindest der Antriebseinheit 32a und/oder der Schalteinheit 30a vorgesehen. Die Energieversorgungseinheit 108a ist als ein, insbesondere wechselbarer, Akkumulator ausgebildet. Es sind aber auch andere Ausgestaltungen der Energieversorgungseinheit 108a denkbar, beispielsweise als eine Batterie, als ein Speicherkondensator oder als eine andere, einem Fachmann als sinnvoll erscheinende netzunabhängige Energieversorgungseinheit. Alternativ oder zusätzlich ist vorstellbar, dass die Energieversorgungseinheit 108a als eine netzabhängige Energieversorgungseinheit, insbesondere als ein Netzanschluss, ausgebildet ist. Die Werkzeugmaschine 12a umfasst eine Aufnahmevorrichtung 112a zu einer Aufnahme der Energieversorgungseinheit 108a. Insbesondere ist die Aufnahmevorrichtung 112a dazu vorgesehen, die Energieversorgungseinheit 108a an der Werkzeugmaschine 12a, insbesondere der Grundeinheit 22a, zu befestigen und zumindest die Antriebseinheit 32a und/oder die Schalteinheit 30a elektrisch mit der Energieversorgungseinheit 108a zu verbinden.

Vorzugsweise weist die Werkzeugmaschine 12a, insbesondere die Grundeinheit 22a, entlang der Längsachse 42a der Werkzeugmaschine 12a zwei voneinander abgewandte Endbereiche 114a, 116a auf. Insbesondere ist das erste Verbindungsstück 68a in einem Endbereich 114a der zwei Endbereiche 114a, 116a angeordnet, Vorzugsweise ist die Aufnahmevorrichtung 112a in einem weiteren Endbereich 116a der zwei Endbereiche 114a, 116a angeordnet. Bevorzugt ist die Fixiereinheit 98a entlang der Längsachse 42a der Werkzeugmaschine 12a und/oder der Grundeinheit 22a zwischen der Handgriffeinheit 26a, insbesondere dem Betätigungselement 34a, und der Aufnahmeausnehmung 102a angeordnet. Die weitere Handgriffeinheit 28a ist entlang der Längsachse 42a der Werkzeugmaschine 12a und/oder der Grundeinheit 22a zwischen dem ersten Verbindungsstück 68a und der Befestigungseinheit 84a der Haltevorrichtung 18a angeordnet. Es ist denkbar, dass das erste Verbindungsstück 68a zumindest teilweise die weitere Handgriffeinheit 28a, insbesondere einen Hauptgriffbereich der weiteren Handgriffeinheit 28a, ausgebildet. Die Grundeinheit 22a umfasst einen Aufnahmebereich 118a, welcher als Teil der Aufnahmevorrichtung 112a ausgebildet ist und zumindest teilweise das Gehäuse 24a der Werkzeugmaschine 12a ausbildet. Es ist auch denkbar, dass der Aufnahmebereich 118a die Aufnahmevorrichtung 112a zumindest teilweise begrenzt. Vorzugsweise ist die Fixiereinheit 98a der Haltevorrichtung 18a, insbesondere das Fixierelement 100a, einteilig mit dem Aufnahmebereich 118a ausgebildet und/oder in einem Nahbereich des Aufnahmebereichs 118a angeordnet. Die Grundeinheit 22a, insbesondere eine Gehäuseaußenwand 120a der Grundeinheit 22a, bildet den Aufnahmebereich 118a aus. Insbesondere grenzt die Gehäuseaußenwand 120a an die Aufnahmevorrichtung 112a. Die Grundeinheit 22a, insbesondere die Gehäuseaußenwand 120a der Grundeinheit 22a, deckt die Energieversorgungseinheit 108a über den Aufnahmebereich 118a bzw. die Aufnahmevorrichtung 112 zumindest teilweise ab, insbesondere entlang einer zumindest im Wesentlichen parallel zur Längsachse 42a der Grundeinheit 22a von den Hangriffeinheiten 26a, 28a und/oder dem Werkzeugaufsatz 14a zu der Energieversorgungseinheit 108a ausgerichteten Richtung betrachtet. Die Befestigungseinheit 84a der Haltevorrichtung 18a umfasst die Aufnahmeausnehmung 102a, ein Befestigungselement 122a und einen Fortsatz 124a, welcher über das Befestigungselement 122a der Befestigungseinheit 84a an dem Verlängerungsstück oder Adapterstück 16a angeordnet ist. Das Befestigungselement 122a der Befestigungseinheit 84a umschließt das Verlängerungsstück oder Adapterstück 16a, insbesondere eine Außenwand des Verlängerungsstücks oder Adapterstücks 16a, um eine Längsachse 126a des Verlängerungsstücks oder Adapterstücks 16a zumindest im Wesentlichen vollständig. Es sind auch Ausgestaltungen des Befestigungselements 122a der Befestigungseinheit 84a denkbar, wobei das Befestigungselement 122a das Verlängerungsstück oder Adapterstück 16a, insbesondere die Außenwand des Verlängerungsstücks oder Adapterstücks 16a, um die Längsachse 126a des Verlängerungsstücks oder Adapterstücks 16a lediglich größtenteils umschließt, vorzugsweise zu einer formschlüssigen Befestigung des Befestigungselements 122a und des Fortsatzes 124a an dem Verlängerungsstück oder Adapterstück 16a. Vorzugsweise ist das Verlängerungsstück oder Adapterstück 16a dazu vorgesehen, über die Befestigungseinheit 84a durch eine Bewegung relativ zu der Werkzeugmaschine 12a, entlang einer zumindest im Wesentlichen parallel zur Längsachse 42a der Werkzeugmaschine 12a und/oder der Grundeinheit 22a ausgerichteten Aufnahmerichtung 128a an der Werkzeugmaschine 12a, insbesondere der Grundeinheit 22a, befestigt zu werden, wobei insbesondere der Fortsatz 124a zumindest größtenteils in der Aufnahmeausnehmung 102a aufgenommen wird. Vorzugsweise ist das Verlängerungsstück oder Adapterstück 16a über den Fortsatz 124a und die Aufnahmeausnehmung 102a form- und/oder kraftschlüssig mit der Werkzeugmaschine 12a, insbesondere der Grundeinheit 22a, verbunden. Insbesondere ist die Fixiereinheit 98a dazu vorgesehen, das Verlängerungsstück oder Adapterstück 16a in einem über die Befestigungseinheit 84a der Haltevorrichtung 18a an der Werkzeugmaschine 12a, insbesondere der Grundeinheit 22a, befestigten Zustand des Verlängerungsstücks oder Adapterstücks 16a gegen eine Bewegung um oder gegen die Befestigungseinheit 84a, insbesondere die Aufnahmeausnehmung 102a, an der Werkzeugmaschine 12a, insbesondere der Grundeinheit 22a, zu fixieren und/oder zu halten. Bevorzugt ist die Fixiereinheit 98a, insbesondere das Fixierelement 100a, dazu vorgesehen, das Verlängerungsstück oder Adapterstück 16a gegen zumindest im Wesentlichen senkrecht zur Längsachse 126a des Verlängerungsstücks oder Adapterstücks 16a zumindest im Wesentlichen um die Befestigungseinheit 84a, insbesondere um eine durch das Befestigungselement 122a der Befestigungseinheit 84a der Haltevorrichtung 18a verlaufende und die Längsachse 126a des Verlängerungsstücks oder Adapterstücks 16a und/oder die Längsachse 42a der Grundeinheit 22a schneidende Achse, wirkende Kräfte form- und/oder kraftschlüssig an der Grundeinheit 22a zu halten. Die Fixiereinheit 98a ist von der Befestigungseinheit 84a der Haltevorrichtung 18a aus betrachtet entlang der Längsachse 42a der Werkzeugmaschine 12a hinter der Handgriffeinheit 26a angeordnet. Bevorzugt ist das Fixierelement 100a als ein Formbauteil ausgebildet, welches eine Formschlussaufnahme begrenzt, wobei das Verlängerungsstück oder Adapterstück 16a zu einer Fixierung an der Grundeinheit 22a, insbesondere in einem über die Haltevorrichtung 18a an der Werkzeugmaschine 12a befestigten Zustand des Verlängerungsstücks oder Adapterstücks 16a, zumindest teilweise von dem Fixierelement 100a, insbesondere innerhalb der Formschlussaufnahme, umfasst und/oder aufgenommen ist. Das Fixierelement 100a weist eine Anlegefläche 130a auf, welche die Formschlussaufnahme begrenzt. Insbesondere ist das Verlängerungsstück oder Adapterstück 16a dazu vorgesehen, für die Fixierung an der Werkzeugmaschine 12a über die Fixiereinheit 98a an der Anlegefläche 130a angelegt zu werden. Bevorzugterweise ist die Anlegefläche 130a entlang der Längsachse 126a des Verlängerungsstücks oder Adapterstücks 16a und/oder der Grundeinheit 22a betrachtet korrespondierend zu einer Außenkontur des Verlängerungsstücks oder Adapterstücks 16a ausgebildet.

Die Koppeleinheit 80a der Verbindungsvorrichtung 66a umfasst zumindest ein Koppelelement, insbesondere genau zwei Koppelelemente, vorzugsweise ein Koppelelement und ein anderes Koppelelement, und zumindest ein weiteres Koppelelement, insbesondere genau zwei weitere Koppelelemente, vorzugsweise ein weiteres Koppelelement und ein anderes weiteres Koppelelement (in Figu-ren 1 und 2 nicht gezeigt). Insbesondere ist das Koppelelement als Teil des ersten Verbindungsstücks 68a ausgebildet und an der Werkzeugmaschine 12a angeordnet. Insbesondere ist das weitere Koppelelement als Teil des zweiten Verbindungsstücks 72a ausgebildet und an dem Werkzeugaufsatz 14a angeordnet. Insbesondere ist das andere Koppelelement als Teil des weiteren ersten Verbindungsstücks 70a ausgebildet und an dem Verlängerungsstück oder Adapterstück 16a angeordnet. Insbesondere ist das andere weitere Koppelelement als Teil des weiteren zweiten Verbindungsstücks 74a ausgebildet und an dem Verlängerungsstück oder Adapterstück 16a angeordnet. Das Koppelelement ist zumindest größtenteils von einem Grundkörper des ersten Verbindungstücks 68a und/oder von dem Gehäuse 24a der Werkzeugmaschine 12a, welches insbesondere Teil der Grundeinheit 22a ist, umschlossen. Es ist denkbar, dass das Koppelelement in zumindest einem Betriebszustand, insbesondere in einem von dem Werkzeugaufsatz 14a und dem Verlängerungsstück oder Adapterstück 16a getrennten Zustand der Werkzeugmaschine 12a, zumindest teilweise aus einer Öffnung des Grundkörpers des ersten Verbindungstücks 68a und/oder des Gehäuses 24a der Werkzeugmaschine 12a, welches insbesondere Teil der Grundeinheit 22a ist, herausragt. Das Koppelelement ist vorzugsweise dazu vorgesehen, zu einer Übertragung der Antriebskraft an den Werkzeugaufsatz 14a und/oder das Verlängerungsstück oder Adapterstück 16a form- und/oder kraftschlüssig mit dem weiteren Koppelelement und/oder dem anderen weiteren Koppelelement verbunden zu werden. In einem zwischen der Werkzeugmaschine 12a und dem Werkzeugaufsatz 14a angeordneten Zustand des Verlängerungsstücks oder Adapterstücks 16a (siehe Figur 2) ist vorzugsweise das andere weitere Koppelelement dazu vorgesehen, die Antriebskraft auf das andere Koppelelement zu übertragen. Insbesondere sind das andere weitere Koppelelement und das andere Koppelelement einteilig ausgebildet oder zumindest gegenüber einer zumindest im Wesentlichen parallel zur Längsachse 126a des Verlängerungsstücks oder Adapterstücks 16a und/oder zu der Verbindungsrichtung 78a der Verbindungsvorrichtung 66a ausgerichteten Bewegung form- und/oder kraftschlüssig miteinander verbunden. Bevorzugt erstrecken sich das andere weitere Koppelelement und das andere Koppelelement zusammen über eine gesamte Längserstreckung des Verlängerungsstücks oder Adapterstücks 16a. Insbesondere sind das andere weitere Koppelelement und das andere Koppelelement entlang der gesamten Längserstreckung des Verlängerungsstücks oder Adapterstücks 16a zumindest im Wesentlichen vollständig von der Außenwand des Verlängerungsstücks oder Adapterstücks 16a umschlossen. In dem zwischen der Werkzeugmaschine 12a und dem Werkzeugaufsatz 14a angeordneten Zustand des Verlängerungsstücks oder Adapterstücks 16a (siehe Figur 2) ist das andere Koppelelement dazu vorgesehen, die Antriebskraft über eine form- und/oder kraftschlüssige Verbindung mit dem weiteren Koppelelement auf das weitere Koppelelement zu übertragen, insbesondere zu einer angetriebenen Bewegung des Bearbeitungswerkzeugs 46a.

Das Betätigungselement 34a umschließt entlang einer Längserstreckung 138a des Betätigungselements 34a die Grundeinheit 22a um die Längsachse 42a der Grundeinheit 22a zumindest im Wesentlichen vollständig. Insbesondere ist das Betätigungselement 34a als eine Betätigungshülse ausgebildet. Es ist auch denkbar, dass das Betätigungselement 34a die Grundeinheit 22a um die Längsachse 42a der Grundeinheit 22a lediglich größtenteils umschließt, wobei das Betätigungselement 34a beispielsweise zumindest bereichsweise entlang der Längserstreckung 138a des Betätigungselements 34a Ausnehmungen aufweist und/oder entlang der Längserstreckung 138a des Betätigungselements 34a betrachtet eine C-Förmige Grundform aufweist. Der Bewegungspfad 38a der zwei unterschiedlichen Bewegungspfade 38a, 40a des Betätigungselements 34a erstreckt sich vorzugsweise kreisbogenförmig um die Längsachse 42a der Grundeinheit 22a innerhalb einer zumindest im Wesentlichen senkrecht zur Längsachse 42a der Grundeinheit 22a ausgerichteten Ebene. Ein weiterer Bewegungspfad 40a der zwei unterschiedlichen Bewegungspfade 38a, 40a des Betätigungselements 34a folgt einer Linearbewegung und erstreckt sich zumindest im Wesentlichen parallel zur Längsachse 42a der Grundeinheit 22a und zumindest im Wesentlichen senkrecht zu dem Bewegungspfad 38a. Insbesondere grenzen die zwei unterschiedlichen Bewegungspfade 38a, 40a des Betätigungselements 34a jeweils an einem Ende der Bewegungspfade 38a, 40a aneinander an und/oder gehen ineinander über. Bevorzugt ist die Handgriffeinheit 26a, welche als das Betätigungselement 34a der Schalteinheit 30a ausgebildet ist, von der Verbindungsvorrichtung 66a, insbesondere dem ersten Verbindungsstück 68a, aus betrachtet hinter der weiteren Handgriffeinheit 28a der zumindest zwei Handgriffeinheiten 26a, 28a an der Grundeinheit 22a angeordnet. Das Betätigungselement 34a weist die maximale Längserstreckung 138a auf, welche, insbesondere in einem an der Grundeinheit 22a angeordneten Zustand des Betätigungselements 34a, zumindest im Wesentlichen parallel zu der Längsachse 42a der Grundeinheit 22a ausgerichtet ist, wobei die maximale Längserstreckung 138a des Betätigungselements 34a mindestens zweimal, vorzugsweise mindestens drei- bis sechsmal, so groß ist wie eine maximale Quererstreckung 140a des Betätigungselements 34a, welche insbesondere zumindest im Wesentlichen senkrecht zur maximalen Längserstreckung 138a des Betätigungselements 34a ausgerichtet ist. Das Betätigungselement 34a weist in zumindest einer die Längsachse 44a des Betätigungselements 34a umfassenden Schnittebene des Betätigungselements 34a, insbesondere spiegelsymmetrisch zur Längsachse 44a des Betätigungselements 34a, eine zumindest im Wesentlichen hantelförmige Grundform auf. Insbesondere weist das Betätigungselement 34a in zwei entlang der Längserstreckung 138a des Betätigungselements 34a ausgebildeten Endbereichen 142a, 144a des Betätigungselements 34a senkrecht zur Längserstreckung 138a des Betätigungselements 34a eine größere maximale Quererstreckung 140a auf wie in einem zwischen den zwei Endbereichen 142a, 144a angeordneten Zwischenbereich 146a des Betätigungselements 34a. Vorzugsweise bildet das Betätigungselement 34a in dem Zwischenbereich 146a eine Verjüngung aus. Bevorzugt ist eine maximale Erstreckung des Zwischenbereichs 146a entlang der maximalen Längserstreckung 138a des Betätigungselements 34a wesentlich größer, insbesondere mindestens doppelt so groß, vorzugsweise mindestens dreimal so groß und bevorzugt mindestens viermal so groß, als/wie eine maximale Längserstreckung der einzelnen Endbereiche 142, 144a entlang der maximalen Längserstreckung 138a des Betätigungselements 34a. Bevorzugt weist das Betätigungselement 34a in Übergangsbereichen jeweils zwischen den Endbereichen 142a, 144a und dem Zwischenbereich 146a des Betätigungselements 34a zumindest eine schräg zur Längsachse 44a des Betätigungselements 34a ausgerichtete Außenfläche 148a auf. Insbesondere weist die Außenfläche 148a des Betätigungselements 34a zur Längsachse 44a des Betätigungselements 34a einen Winkel zwischen 10° und 80°, vorzugsweise zwischen 20° und 70° und bevorzugt zwischen 30° und 60°, auf. Es ist denkbar, dass das Betätigungselement 34a Einbuchtungen, insbesondere Fingerrillen, einen rutschhemmenden, insbesondere gummierten, Einsatz, die Oberflächenstrukturierung und/oder eine Oberflächenbeschichtung zur Realisierung einer hohen Griffigkeit des Betätigungselements 34a in dem Zwischenbereich 146a des Betätigungselements 34a, an den Außenflächen 148a und/oder in den Endbereichen 142a, 144a des Betätigungselements 34a aufweist. Vorzugsweise ist der Zwischenbereich 146a des Betätigungselements 34a als der Hauptgriffbereich 92a des Betätigungselements 34a ausgebildet. Alternativ ist denkbar, dass das Betätigungselement 34a, insbesondere in dem Zwischenbereich 146a, in einer senkrecht zur Längsachse 44a des Betätigungselements 34a ausgerichteten Querschnittsebene eine zumindest teilweise eckige Grundform aufweist. Beispielsweise weist das Betätigungselement 34a an einer Oberseite parallel zur Längsachse 44a des Betätigungselements 34a zwei Kanten auf und ist an einer Unterseite rund, insbesondere kreisbogenförmig, ausgebildet. Zusätzlich ist denkbar, dass die weitere Handgriffeinheit 28a zumindest teilweise eine asymmetrische oder eckige Grundform aufweist. Insbesondere weist das Betätigungselement 34a in einem der weiteren Handgriffeinheit 28a zugewandten Endbereich 142a der zwei Endbereiche 142a, 144a des Betätigungselements 34a eine maximale Quererstreckung 140a auf, die zumindest im Wesentlichen einer maximalen Quererstreckung der Grundeinheit 22a in einem entlang der Längsachse 42a der Grundeinheit 22a an den Endbereich 142a angrenzenden Bereich der Grundeinheit 22a entspricht. Insbesondere schließt sich das Betätigungselement 34a in dem der weiteren Handgriffeinheit 28a zugewandten Endbereich 142a des Betätigungselements 34a mit Ausnahme eines Spalts zur Bewegung des Betätigungselements 34a zumindest im Wesentlichen bündig an die Grundeinheit 22a an.

In Figur 2 ist das Werkzeugmaschinensystem 10a in einem über das Verlängerungsstück oder Adapterstück 16a verlängerten Zustand gezeigt. Das Verlängerungsstück oder Adapterstück 16a ist über die Verbindungsvorrichtung 66a zwischen der Werkzeugmaschine 12a und dem Werkzeugaufsatz 14a angeordnet. Insbesondere ist das erste Verbindungsstück 68a, insbesondere in dem verlängerten Zustand des Werkzeugmaschinensystems 10a, mit dem weiteren zweiten Verbindungsstück 74a verbunden, wobei insbesondere das erste Verbindungsstück 68a an dem weiteren zweiten Verbindungsstück 74a befestigt ist und eine Antriebskraft, insbesondere über das Koppelelement und das andere weitere Koppelelement, von der Werkzeugmaschine 12a, insbesondere dem ersten Verbindungsstück 68a, an das Verlängerungsstück oder Adapterstück 16a, insbesondere das weitere zweite Verbindungsstück 74a, übertragbar ist. Insbesondere ist das weitere erste Verbindungsstück 70a, insbesondere in dem verlängerten Zustand des Werkzeugmaschinensystems 10a, mit dem zweiten Verbindungsstück 72a verbunden, wobei insbesondere das weitere erste Verbindungsstück 70a an dem zweiten Verbindungsstück 72a befestigt ist und eine Antriebskraft, insbesondere über das andere Koppelelement und das weitere Koppelelement, von dem Verlängerungsstück oder Adapterstück 16a, insbesondere dem weiteren ersten Verbindungsstück 72a, an den Werkzeugaufsatz 14a, insbesondere das zweite Verbindungsstück 72a bzw. das Bearbeitungswerkzeug 48a, übertragbar ist.

Es sind auch andere Ausgestaltungen der Werkzeugmaschine 12a, insbesondere der Grundeinheit 22a, der Antriebseinheit 32a und/oder der Aufnahmevorrichtung 112a, des Verlängerungsstücks oder Adapterstücks 16a, der Verbindungsvorrichtung 66a und/oder der Haltevorrichtung 18a denkbar. Beispielsweise ist denkbar, dass die Aufnahmevorrichtung 112a zur Aufnahme der Energieversorgungseinheit 108a entlang der Längsachse 42a der Werkzeugmaschine 12a zwischen den zwei Handgriffeinheiten 46a, 48a angeordnet ist und/oder dass die Antriebseinheit 32a entlang der Längsachse 42a der Werkzeugmaschine 12a zwischen dem das erste Verbindungsstück 68a umfassenden Endbereich 114a der Werkzeugmaschine 12a, insbesondere der Grundeinheit 22a, und der weiteren Handgriffeinheit 28a angeordnet ist. Alternativ ist denkbar, dass die Antriebseinheit 32a entlang der Längsachse 42a der Werkzeugmaschine 12a von der weiteren Handgriffeinheit 28a aus hinter der Handgriffeinheit 26a, insbesondere dem Betätigungselement 34a, angeordnet ist, vorzugsweise an der Aufnahmevorrichtung 112a. Es ist denkbar, dass die einzelnen Bauteile der Werkzeugmaschine 12a, insbesondere die Antriebseinheit 32a, die Kraftübertragungsvorrichtung 54a, die Aufnahmevorrichtung 112a usw., von der Grundeinheit 22a abnehmbar und/oder wechselbar ausgebildet sind.

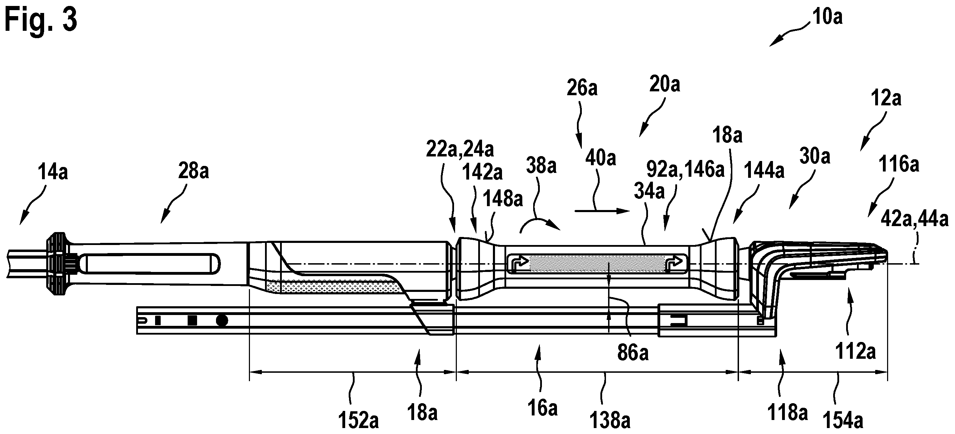

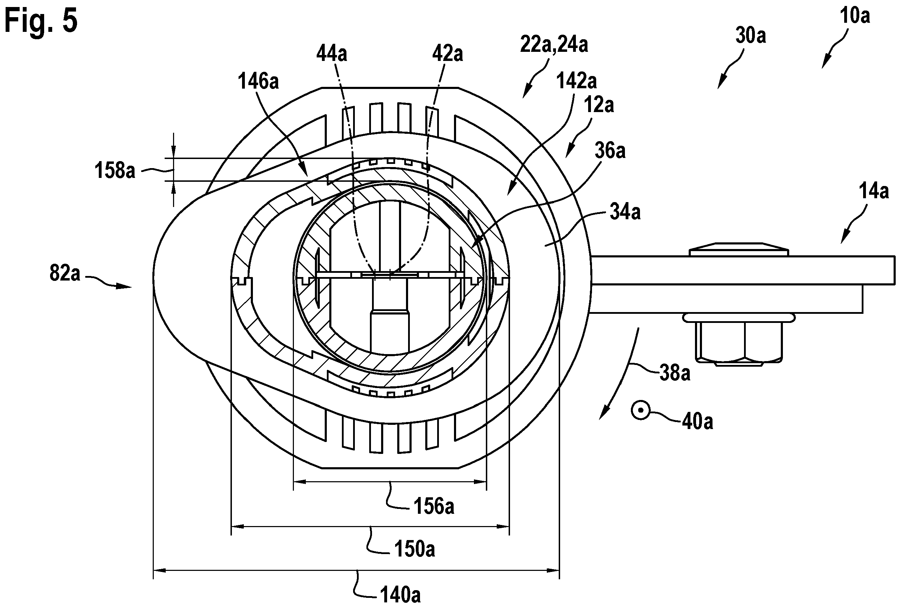

In Figur 3 ist eine Seitenansicht des Werkzeugmaschinensystems 10a in einem Bereich der Werkzeugmaschine 12a, insbesondere der Betätigungsvorrichtung 20a, gezeigt, insbesondere senkrecht zu einer Symmetrieebene und einer Bearbeitungsebene der Werkzeugmaschine 12a, innerhalb welcher das Bearbeitungswerkzeug 46a angetrieben bewegbar ist (vgl. Figuren 1 und 2). Das Betätigungselement 34a ist entlang des weiteren Bewegungspfads 40a zumindest im Wesentlichen parallel zur Längsachse 42a der Grundeinheit 22a relativ zur Grundeinheit 22a bewegbar gelagert, vorzugsweise über eine Strecke von mindestens 1 cm. Das Betätigungselement 34a ist dazu vorgesehen, bei einem Betätigen entlang des weiteren Bewegungspfads 40a in Richtung der Aufnahmevorrichtung 112a gezogen zu werden. Das Betätigungselement 34a ist dazu vorgesehen, bei einem Betätigen entlang des Bewegungspfads 38a von der Aufnahmevorrichtung 112a entlang der Längsachse 42a der Grundeinheit 22a betrachtet im Uhrzeigersinn um die Längsachse 42a der Grundeinheit 22a gedreht zu werden (vgl. Figur 5). Alternativ zu dieser Dreh-Zug-Betätigungskombination ist auch denkbar, dass das Betätigungselement 34a dazu vorgesehen ist, bei einem Betätigen entlang des weiteren Bewegungspfads 40a in Richtung der weiteren Handgriffeinheit 28a geschoben zu werden und/oder bei einem Betätigen entlang des Bewegungspfads 38a von der Aufnahmevorrichtung 112a entlang der Längsachse 42a der Grundeinheit 22a betrachtet gegen den Uhrzeigersinn um die Längsachse 42a der Grundeinheit 22a gedreht zu werden.

Bevorzugt beträgt die maximale Quererstreckung 140a des Betätigungselements 34a (vgl. Figur 1), insbesondere in einem der Endbereiche 142a, 144a des Betätigungselements 34a, mindestens 50 mm, vorzugsweise mindestens 60 mm und bevorzugt mindestens 65 mm. Vorzugsweise beträgt eine maximale Quererstreckung 150a des Betätigungselements 34a in dem Zwischenbereich 146a und/oder Hauptgriffbereich 92a des Betätigungselements 34a (siehe Figur 5) mindestens 35 mm, vorzugsweise mindestens 40 mm und bevorzugt mindestens 43 mm. Bevorzugt weisen die Handgriffeinheit 26a und die weitere Handgriffeinheit 28a parallel zur Längsachse 42a der Grundeinheit 22a eine maximale Längserstreckung 138a von mindestens 10 cm, vorzugsweise mindestens 15 cm, bevorzugt mindestens 20 cm, ganz bevorzugt mindestens 30 cm und ganz besonders bevorzugt mindestens 40 cm, auf. Vorzugsweise beträgt die maximale Längserstreckung 138a des Betätigungselements 34a mindestens 10 cm, vorzugsweise mindestens 20 cm, bevorzugt mindestens 30 cm und besonders bevorzugt mindestens 40 cm. Bevorzugt beträgt die maximale Längserstreckung 138a des Betätigungselements 34a zwischen 10 cm und 70 cm, vorzugsweise zwischen 20 cm und 50 cm und bevorzugt zwischen 30 cm und 40 cm.

Vorzugsweise beträgt ein parallel zur Längsachse 42a der Grundeinheit 22a ausgerichteter minimaler Abstand 152a der zwei Handgriffeinheiten 26a, 28a mindestens 10 cm, vorzugsweise mindestens 20 cm und bevorzugt mindestens 30 cm. Die zwei Hangriffeinheiten 26a, 28a sind zumindest im Wesentlichen koaxial zueinander angeordnet. Vorzugsweise sind die zwei Handgriffeinheiten 26a, 28a derart angeordnet, dass deren Haupterstreckungsachsen zumindest im Wesentlichen parallel zueinander ausgerichtet sind und entlang der Längsachse 42a der Grundeinheit 22a betrachtet einen minimalen Abstand von höchstens 5 cm, vorzugsweise höchstens 4 cm, bevorzugt höchstens 2 cm und ganz besonders bevorzugt von unter 1 cm, aufweisen. Insbesondere ist das Betätigungselement 34a, vorzugsweise in einer in der Figur 3 gezeigten Grundposition des Betätigungselements 34a und/oder in einem unbetätigten Zustand des Betätigungselements 34a, in einem maximalen Abstand 154a von höchstens 20 cm, vorzugsweise höchstens 15 cm, bevorzugt höchstens 10 cm und ganz besonders bevorzugt höchstens 5 cm, von dem weiteren Endbereich 116a der Grundeinheit 22a an der Grundeinheit 22a angeordnet, welcher insbesondere die Aufnahmevorrichtung 112a und/oder den Aufnahmebereich 118a umfasst.

Bevorzugt beträgt der minimale Abstand 86a zwischen dem Verlängerungsstück oder Adapterstück 16a und der zumindest einen Handgriffeinheit 26a der Betätigungsvorrichtung 20a, welche als das Betätigungselement 34a ausgebildet ist, vorzugsweise dem Hauptgriffbereich 92a/Zwischenbereich 146a des Betätigungselements 34a, mindestens 1,5 cm, vorzugsweise mindestens 2 cm und bevorzugt mindestens 2,2 cm. Die Haltevorrichtung 18a und/oder die Grundeinheit 22a sind derart ausgebildet, dass das Verlängerungsstück oder Adapterstück 16a in einem an der Grundeinheit 22a befestigten Zustand, insbesondere zumindest im Wesentlichen senkrecht zu einer Längsachse 42a der Werkzeugmaschine 12a, einen minimalen Abstand zu den Handgriffeinheiten 26a, 28a, vorzugsweise zu dem Hauptgriffbereich 92a der Handgriffeinheit 26a, aufweist, der mindestens 1,5 cm, vorzugsweise mindestens 2 cm und bevorzugt mindestens 2,2 cm, beträgt und/oder dass ein Verhältnis eines minimalen Abstands 86a des Verlängerungsstücks oder Adapterstücks 16a und den Handgriffeinheiten 26a, 28a, vorzugsweise dem Hauptgriffbereich 92a der Handgriffeinheit 26a, und einer maximalen Quererstreckung 94a der jeweiligen Handgriffeinheit 26a, 28a jeweils mindestens 0,35, vorzugsweise mindestens 0,4 und bevorzugt mindestens 0,45, beträgt.

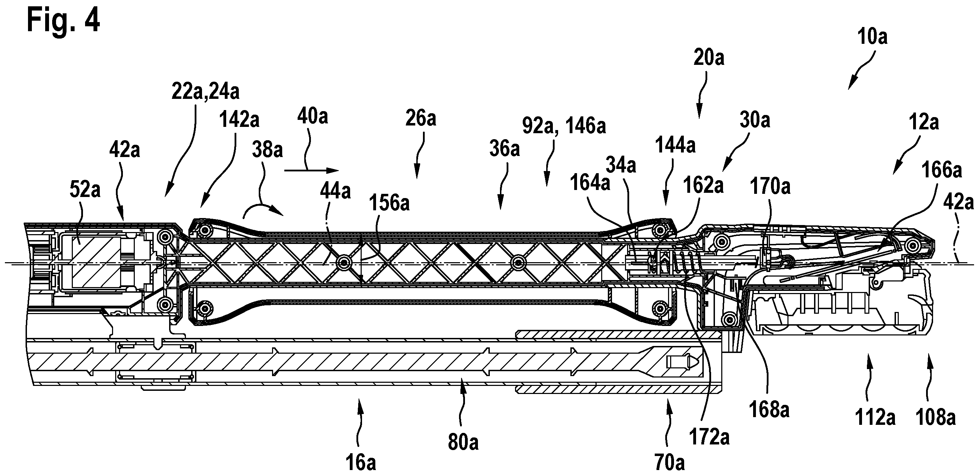

In Figur 4 ist eine seitliche Schnittansicht des Werkzeugmaschinensystems 10a in einem Bereich der Betätigungsvorrichtung 20a gezeigt, wobei das Werkzeugmaschinensystem 10a vorzugsweise entlang einer Symmetrieebene und/oder Haupterstreckungsebene der Werkzeugmaschine 12a und/oder des Werkzeugmaschinensystems 10a geschnitten ist, die insbesondere die Längsachse 42a der Werkzeugmaschine 12a umfasst. In der Figur 4 ist auch die Energieversorgungseinheit 108a in einem an der Aufnahmevorrichtung 112a angeordneten Zustand gezeigt. Vorzugsweise weist die Grundeinheit 22a in dem von dem Betätigungselement 34a zumindest größtenteils umschlossenen Bereich 36a der Grundeinheit 22a eine maximale Quererstreckung 156a von mindestens 20 mm, vorzugsweise mindestens 25 mm und bevorzugt mindestens 30 mm, auf, die sich insbesondere senkrecht zur Längsachse 42a der Grundeinheit 22a erstreckt.

Bevorzugt beträgt die maximale Quererstreckung 156a der Grundeinheit 22a in dem von dem Betätigungselement 34a zumindest größtenteils umschlossenen Bereich 36a der Grundeinheit 22a höchstens 50 mm, vorzugsweise höchstens 40 mm und bevorzugt höchstens 32 mm.

Das Betätigungselement 34a ist zweiteilig ausgebildet und über eine Schraubverbindung an der Grundeinheit 22a angeordnet. Es ist auch denkbar, dass das Betätigungselement 34a einteilig oder mehrteilig ausgebildet ist. Das Betätigungselement 34a ist asymmetrisch um die Längsachse 42a der Grundeinheit 22a ausgebildet. Insbesondere weist das Betätigungselement 34a in einer senkrecht zur Längsachse 44a des Betätigungselements 34a ausgerichteten Querschnittsebene eine zumindest im Wesentlichen ovale, insbesondere eiförmige, Grundform auf (vgl. Figur 5). Insbesondere ist die Längsachse 44a des Betätigungselements 34a zumindest im Wesentlichen parallel und beabstandet zur Längsachse 42a der Grundeinheit 22a und/oder zu einer Mittelachse eines von dem Betätigungselement 34a umschlossenen Bereichs 36a der Grundeinheit 22a angeordnet.

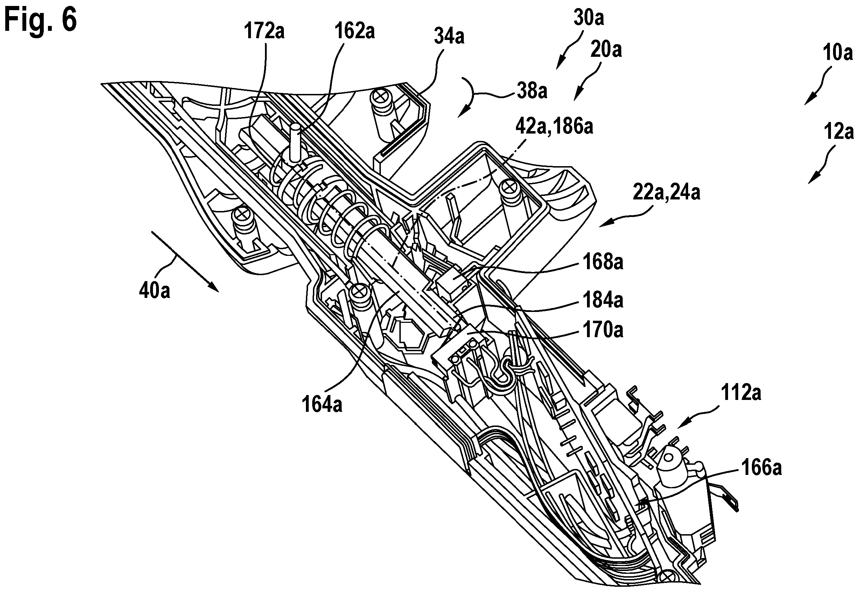

Die Schalteinheit 30a umfasst ein Führungselement 162a, welches an einer Innenwand des Betätigungselements 34a fixiert und/oder befestigt ist. Das Führungselement 162a erstreckt sich zumindest im Wesentlichen senkrecht zur Längsachse 44a des Betätigungselements 34a. Die Schalteinheit 30a umfasst ein Unterbetätigungselement 164a, welches innerhalb der Grundeinheit 22a angeordnet ist. Insbesondere ist das Unterbetätigungselement 164a zumindest teilweise innerhalb des von dem Betätigungselement 34a umschlossenen Bereichs 36a der Grundeinheit 22a angeordnet und ragt vorzugsweise aus diesem heraus. Die Schalteinheit 30a umfasst eine Elektronikeinheit 166a, welche insbesondere als eine bestückte Elektronikplatine ausgebildet ist. Die Elektronikeinheit 166a ist vorzugsweise innerhalb der Grundeinheit 22a, insbesondere dem Gehäuse 24a der Werkzeugmaschine 12a, angeordnet. Die Elektronikeinheit 166a ist an der Aufnahmevorrichtung 112a angeordnet und vorzugsweise elektrisch und/oder elektronisch mit der Aufnahmevorrichtung 112a verbunden. Die Schalteinheit 30a umfasst zwei Schaltelemente 168a, 170a, insbesondere ein Schaltelement 168a und ein weiteres Schaltelement 170a. Die Schaltelemente 168a, 170a sind vorzugsweise mit der Elektronikeinheit 166a verbunden. Das Führungselement 162a ist bevorzugt einteilig mit dem Unterbetätigungselement 164a ausgebildet. Das Führungselement 162a erstreckt sich von einer Innenwand des Betätigungselements 34a zumindest im Wesentlichen senkrecht zur Längsachse 44a des Betätigungselements 34a über das Unterbetätigungselement 164a bis zu einer der Innenwand gegenüberliegenden Innenwand des Betätigungselements 34a. Insbesondere ist das Führungselement 162a als ein zylindrischer Führungsstift ausgebildet (vgl. Figur 6). Insbesondere sind die Elektronikeinheit 166a, das Unterbetätigungselement 164a und die Schaltelemente 168a, 170a der Schalteinheit 30a entlang der Längsachse 42a der Grundeinheit 22a von der Verbindungsvorrichtung 66a, insbesondere dem Verbindungsstück 68a, aus betrachtet hinter der Handgriffeinheit 26a angeordnet. Alternativ ist denkbar, dass die Elektronikeinheit 166a, das Unterbetätigungselement 164a und die Schaltelemente 168a, 170a der Schalteinheit 30a entlang der Längsachse 42a der Grundeinheit 22a von der Verbindungsvorrichtung 66a, insbesondere dem Verbindungsstück 68a, aus betrachtet vor der Handgriffeinheit 26a angeordnet sind.

Das Betätigungselement 34a ist dazu vorgesehen, eine Bewegung entlang der Bewegungspfade 38a, 40a über das Führungselement 162a direkt auf das Unterbetätigungselement 164a zu übertragen. Das Unterbetätigungselement 164a ist innerhalb der Grundeinheit 22a zu einem Folgen der Bewegung des Betätigungselements 34a auf den zwei Bewegungspfaden 38a, 40a beweglich gelagert. Die Schalteinheit 30a umfasst ein Rückstellelement 172a, das dazu vorgesehen ist, das Betätigungselement 34a gegen eine Bewegung entlang einer der zwei unterschiedlichen Bewegungspfade 38a, 40a über das Unterbetätigungselement 164a und das Führungselement 162a mit einer Rückstellkraft zu beaufschlagen. Das Rückstellelement 172a ist als eine Feder, insbesondere eine Spiralfeder, ausgebildet. Das Rückstellelement 172a ist an einer Seite an dem Unterbetätigungselement 164a befestigt. Das Rückstellelement 172a ist an einer der Seite gegenüberliegenden anderen Seite an der Grundeinheit 22a befestigt. Vorzugsweise ist das Rückstellelement 172a derart ausgebildet und/oder angeordnet, dass das Rückstellelement 172a eine einer Bewegung des Unterbewegungselements 164a relativ zu der Grundeinheit 22a aus einer Grundposition, insbesondere in einem unbetätigten Zustand des Betätigungselements 34a, heraus gerichtete Bewegung des Unterbetätigungselements 164a über die Rückstellkraft entgegenwirkt.

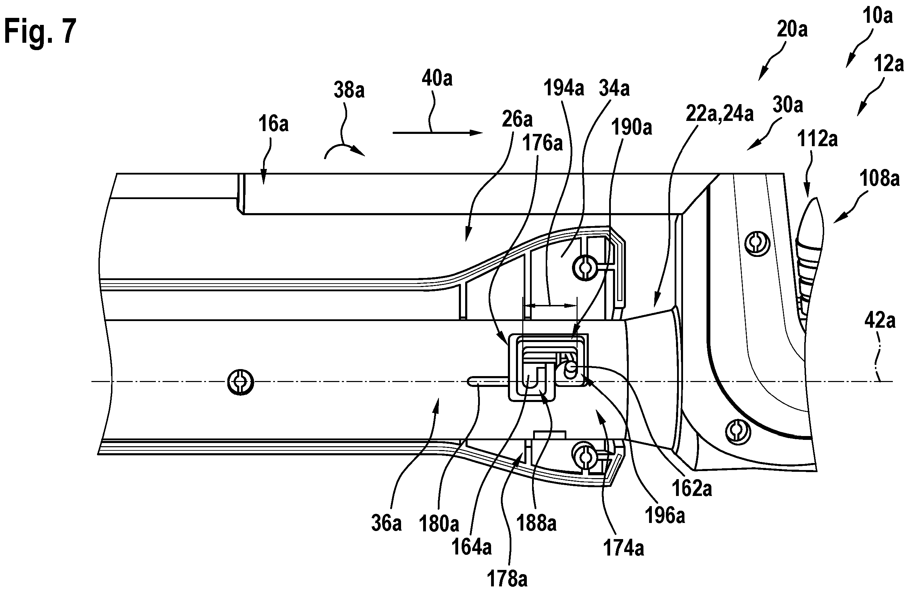

Die Schalteinheit 30a umfasst eine abgewinkelte Kulissenführung 174a (siehe auch Figuren 7, 11 und 12), welche von der Grundeinheit 22a im Bereich der Handgriffeinheit 26a begrenzt ist, wobei die Schalteinheit 30a das an dem Betätigungselement 34a fixierte Führungselement 162a umfasst, welches in der Kulissenführung 174a geführt ist. Vorzugsweise umfasst die Betätigungsvorrichtung 20a eine Lagereinheit 176a (siehe Figur 7), welche dazu vorgesehen ist, das Betätigungselement 34a bei einer Bewegung entlang der zumindest zwei unterschiedlichen Bewegungspfade 26a, 28a, bevorzugt getrennt von der Kulissenführung 174a, zu führen und/oder beweglich zu lagern. Vorzugsweise umfasst die Lagereinheit 176a zumindest eine Führungsausnehmung 178a und zumindest einen Führungsfortsatz 180a (siehe Figur 7). Die Führungsausnehmung 178a ist an einer dem Betätigungselement 34a zugewandten Außenseite des von dem Betätigungselement 34a umschlossenen Bereichs 36a der Grundeinheit 22a angeordnet. Der Führungsfortsatz 180a ist an der der Grundeinheit 22a zugewandten Innenseite des Betätigungselements 34a angeordnet. Vorzugsweise ist die Lagereinheit 176a dazu vorgesehen, das Betätigungselement 34a entlang der zumindest zwei unterschiedlichen Bewegungspfade 38a, 40a an der Grundeinheit 22a beweglich zu lagern, wobei vorzugsweise die Lagereinheit 176a weniger Spiel aufweist als das Führungselement 162a innerhalb der Kulissenführung 174a. Insbesondere ist die Lagereinheit 176a dazu vorgesehen, bei einer Betätigung des Betätigungselements 34a durch eine Bewegung entlang der Bewegungspfade 38a, 40a jeweils einen Anschlag für eine maximale Bewegung des Betätigungselements 34a auszubilden.

In Figur 5 ist ein schematischer Querschnitt des Werkzeugmaschinensystems 10a senkrecht zur Längsachse 42a der Werkzeugmaschine 12a in einem Bereich des Betätigungselements 34a, insbesondere durch den Zwischenbereich 146a des Betätigungselements 34a, gezeigt. Die Grundeinheit 22a weist in dem vom Betätigungselement 34a umschlossenen Bereich 36a der Grundeinheit 22a eine kreisrunde Grundform auf. Das Betätigungselement 34a weist in dem Zwischenbereich 146a eine eiförmige Grundform auf. Insbesondere ist das Betätigungselement 34a verschieden von einer kreisrunden zur Längsachse 42a des Betätigungselements 34a symmetrischen Form ausgebildet. Insbesondere weist die Grundform des Betätigungselements 34a in eine zur Unterseite 82a der Werkzeugmaschine 12a zeigende Richtung eine von einer kreisrunden Form verschiedene Wölbung auf. Vorteilhafterweise kann durch die Grundform des Betätigungselements 34a, vorzugsweise bei einem Umgreifen des Betätigungselements 34a von einer Oberseite der Werkzeugmaschine 12a aus, wobei insbesondere Finger eines Benutzers an der Unterseite 82a des Betätigungselements 34a angeordnet sind, ein erleichtertes Betätigen des Betätigungselements 34a auf dem der Rotationsbewegung folgenden Bewegungspfad 38a ermöglicht werden. Durch die Endbereiche 142a, 144a des Betätigungselements 34a und/oder die Außenflächen 148a zwischen dem Zwischenbereich 146a und den Endbereichen 142a, 144a kann vorteilhafterweise ein erleichtertes Betätigen des Betätigungselements 34a auf dem der Linearbewegung folgenden weiteren Bewegungspfad 40a ermöglicht werden. Bevorzugt weist das Betätigungselement 34a in dem Zwischenbereich 146a in einer senkrecht zur Längsachse 44a des Betätigungselements ausgerichteten Ebene eine Umfangserstreckung von höchstens 150 mm, vorzugsweise höchstens 136 mm und bevorzugt höchstens 130 mm, auf. Vorzugsweise beträgt ein Verhältnis von der Umfangserstreckung des Betätigungselements 34a in dem Zwischenbereich 146a/Hauptgriffbereich 92a zu einer, insbesondere senkrecht zur Längsachse 42a der Grundeinheit 22a ausgerichteten, Umfangserstreckung der Grundeinheit 22a in einem zumindest größtenteils von dem Betätigungselement 34a umschlossenen Bereich 36a der Grundeinheit 22a höchstens 1,6, vorzugsweise höchstens 1,5 und bevorzugt höchstens 1,45. Bevorzugt weist das Betätigungselement 34a, insbesondere in einem der zwei Endbereiche 142a, 144a und/oder in dem Zwischenbereich 146a, eine radiale Dicke von mindestens 0,5 cm, vorzugsweise mindestens 1 cm und bevorzugt mindestens 1,5 cm, und/oder von höchstens 4 cm, vorzugsweise höchstens 3 cm und bevorzugt höchstens 2,5 cm, auf.

In Figur 6 ist eine geschnittene Ansicht der Werkzeugmaschine 12a in einem Bereich der Schalteinheit 30a in einer perspektivischen Darstellung gezeigt. Die Schalteinheit 30a der Betätigungsvorrichtung 20a umfasst ein mit dem Betätigungselement 34a der Schalteinheit 30a wirkverbundenes Nockenelement 184a, das dazu vorgesehen ist, in Abhängigkeit von einer Bewegung des Betätigungselements 34a entlang des Bewegungspfads 38a des Betätigungselements 34a das Schaltelement 168a der Schalteinheit 30a zu betätigen, wobei das Schaltelement 30a dazu vorgesehen ist, in Abhängigkeit von einer Betätigung eine Energieversorgung der Antriebseinheit 32a der Werkzeugmaschine 12a freizuschalten. Alternativ ist denkbar, dass die Schalteinheit 30a derart ausgebildet ist, dass das Nockenelement 184a dazu vorgesehen ist, in Abhängigkeit von einer Bewegung des Betätigungselements 34a entlang des weiteren Bewegungspfads 40a des Betätigungselements 34a das Schaltelement 168a der Schalteinheit 30a zu betätigen. Insbesondere bildet das Unterbetätigungselement 164a der Schalteinheit 30a das Nockenelement 184a aus. Vorzugsweise ist das Nockenelement 184a als ein nockenartiger Fortsatz des Unterbetätigungselements 164a ausgebildet. Alternativ ist vorstellbar, dass das Nockenelement 184a an dem Unterbetätigungselement 164a und/oder an dem Betätigungselement 34a fixiert ist oder dass das Nockenelement 184a einteilig mit dem Betätigungselement 34a ausgebildet ist. Vorzugsweise ist das Nockenelement 184a in einem von einem Kopplungsbereich mit dem Betätigungselement 34a abgewandten Endbereich des Unterbetätigungselements 164a angeordnet. Das Nockenelement 184a erstreckt sich quer zu einer Längsachse 186a des Unterbetätigungselements 164a, insbesondere quer zu der Längsachse 42a der Grundeinheit 22a der stabgebundenen Werkzeugmaschine 12a. Vorzugsweise ist das Schaltelement 168a als ein Signalschaltelement, insbesondere als ein Signalschalter, ausgebildet. Insbesondere ist das Schaltelement 168a in Abhängigkeit von einer Betätigung durch das Nockenelement 184a dazu eingerichtet, zumindest ein, insbesondere elektrisches, Signal zur Freischaltung der Energieversorgung der Antriebseinheit 32a an die Elektronikeinheit 166a der Schalteinheit 30a zu senden. Vorzugsweise ist die Elektronikeinheit 166a dazu eingerichtet, in Abhängigkeit von dem Signal des Schaltelements 168a eine Übertragung von, insbesondere elektrischer, Energie von der Aufnahmevorrichtung 112a bzw. der Energieversorgungseinheit 108a der stabgebundenen Werkzeugmaschine 12a an die Antriebseinheit 32a, insbesondere an den Motor 52a der Antriebseinheit 32a, zu erlauben, beispielsweise durch Schließen eines Stromkreises, Schalten eines Relais o. dgl. Alternativ oder zusätzlich ist denkbar, dass das Schaltelement 168a direkt elektrisch, insbesondere signalübertragungstechnisch, mit der Antriebseinheit 32a, insbesondere mit dem Motor 52a, und/oder mit der Energieversorgungseinheit 108a verbunden ist. Das Schaltelement 168a ist insbesondere als ein invertierter Schalter ausgebildet, wobei vorzugsweise das Schaltelement 168a über das Nockenelement 184a in einem, insbesondere unbetätigten, Grundzustand des Betätigungselements 34a geschlossen ist, vorzugsweise über die Rückstellkraft, und bei einem Betätigen des Betätigungselements 34a geöffnet wird. Vorzugsweise ist die Energieversorgung der Antriebseinheit 32a in einem geöffneten Zustand des Schaltelements 168a freigegeben. Insbesondere ist die Energieversorgung der Antriebseinheit 32a in einem geschlossenen Zustand des Schaltelements 168a unterbrochen. Es sind aber auch andere Ausgestaltungen des Schaltelements 168a denkbar, beispielsweise als nicht-invertierter Schalter. Vorzugsweise beaufschlagt das Rückstellelement 172a der Schalteinheit 30a das Betätigungselement 34a, insbesondere das Unterbetätigungselement 164a, in der Grundposition des Betätigungselements 34a derart mit der Rückstellkraft, dass das Nockenelement 184a mit dem Schaltelement 168a in Kontakt steht. Insbesondere entspricht ein Kontakt des Schaltelements 168a mit dem Nockenelement 184a einem geschlossener Zustand des Schaltelements 168a. Vorzugsweise ist das Schaltelement 168a in dem geschlossenen Zustand dazu eingerichtet, eine Energieversorgung der Antriebseinheit 32a zu unterbinden, insbesondere der Elektronikeinheit 166a ein Signal entsprechend einer Unterbindung der Energieversorgung der Antriebseinheit 32a bereitzustellen. Insbesondere ist das Schaltelement 168a und/oder das Nockenelement 184a dazu vorgesehen, das Schaltelement 168a bei einer Bewegung des Betätigungselements 34a, insbesondere bei einem Betätigen, aus der Grundposition entlang des Bewegungspfads 38a in einen geöffneten Zustand zu überführen, wobei bevorzugt die Energieversorgung der Antriebseinheit 32a freigegeben wird. Das Schaltelement 168a ist entlang der Längsachse 186a des Unterbetätigungselements 164a in einem Bereich des Nockenelements 184a an einer Seite des Unterbetätigungselements 164a angeordnet. Das Schaltelement 168a ist derart angeordnet, dass das Schaltelement 168a bei einer Rotation des Unterbetätigungselements 164a zusammen mit dem Nockenelement 184a um die Längsachse 186a des Unterbetätigungselements 164a über das Nockenelement 184a betätigbar ist.

Die Schalteinheit 30a umfasst das als ein Proportional-Schalter ausgebildete weitere Schaltelement 170a, das dazu vorgesehen ist, proportional zu einer Bewegung des Betätigungselements 34a entlang des weiteren Bewegungspfads 40a zumindest ein Schaltsignal auszugeben, wobei das zumindest eine Schaltsignal vorzugsweise zu einer Ansteuerung der Antriebseinheit 32a, insbesondere des Motors 52a, der Werkzeugmaschine 12a vorgesehen ist. Das weitere Schaltelement 170a ist vorzugsweise auf der Längsachse 186a des Unterbetätigungselements 164a und/oder der Grundeinheit 22a angeordnet. Das Unterbetätigungselement 164a ist dazu vorgesehen, bei einer Bewegung des Betätigungselements 34a entlang des weiteren Bewegungspfads 40a entlang der Längsachse 186a des Unterbetätigungselements 164a und/oder der Grundeinheit 22a in Richtung des weiteren Schaltelements 170a bewegt zu werden. Vorzugsweise ist das Unterbetätigungselement 164a dazu vorgesehen, bei einer Bewegung entlang der Längsachse 186a des Unterbetätigungselements 164a und/oder der Grundeinheit 22a, insbesondere in Richtung des weiteren Schaltelements 170a, das weitere Schaltelement 170a zu betätigen, insbesondere in einen geschlossenen Zustand zu überführen. Vorzugsweise ist das Unterbetätigungselement 164a dazu vorgesehen, das weitere Schaltelement 170a proportional zu einer zurückgelegten Strecke entlang der Längsachse 186a des Unterbetätigungselements 164a und/oder der Grundeinheit 22a zu betätigen Insbesondere ist das weitere Schaltelement 170a dazu vorgesehen, das Schaltsignal in Abhängigkeit von/proportional zu einer durch das Unterbetätigungselement 164a bewirkten Schaltstellung des weiteren Schaltelements 170a, insbesondere zwischen einer vollständig geöffneten Stellung des weiteren Schaltelements 170a und einer vollständig geschlossenen Stellung des weiteren Schaltelements 170a, auszugeben. Vorzugsweise ist das weitere Schaltelement 170a dazu vorgesehen, das Schaltsignal über die Elektronikeinheit 166a der Schalteinheit 30a an die Antriebseinheit 30a, insbesondere den Motor 52a, zu übertragen. Bevorzugt ist die Antriebseinheit 32a, insbesondere der Motor 52a, dazu vorgesehen, eine Antriebskraft proportional zu dem Schaltsignal, insbesondere einem Wert des übertragenen Schaltsignals relativ zu einem maximal auszugebenen Schaltsignal des weiteren Schaltelements 170a, auszugeben und/oder zu erzeugen.

In Figur 7 ist eine Seitenansicht der Werkzeugmaschine 12a in einem Bereich der Kulissenführung 174a gezeigt, wobei insbesondere das Betätigungselement 34a parallel zur Bildebene geschnitten dargestellt ist. Die Kulissenführung 174a weist eine im Wesentlichen U-förmige Grundform auf. Bevorzugt sind die zumindest zwei unterschiedlichen Bewegungspfade 38a, 40a mechanisch durch die Kulissenführung 174a der Schalteinheit 30a vorgegeben. Vorzugsweise ist das Betätigungselement 34a, insbesondere über die Lagereinheit 176a, lediglich entlang der von der Führungsausnehmung 178a vorgegebenen Bewegungspfade 38a, 40a bewegbar, insbesondere in einer von der Führungsausnehmung 178a vorgegebenen Abfolge von Bewegungen. Alternativ ist vorstellbar, dass das Betätigungselement 34a entlang von einer Mehrzahl von Bewegungspfaden 38a, 40a bewegbar, insbesondere frei beweglich gelagert, ist und dass die zumindest zwei unterschiedlichen Bewegungspfade 38a, 40a elektronisch und/oder digital, insbesondere durch die Elektronikeinheit 166a, vorgegeben sind. Insbesondere ist denkbar, dass die Schalteinheit 30a zumindest ein Sensorelement umfasst (in Figuren nicht gezeigt), das dazu eingerichtet ist, Positionen des Betätigungselements 34a zu erfassen. Insbesondere kann in einer Speichereinheit der Elektronikeinheit 166a eine Abfolge von Positionen des Betätigungselements 34a entsprechend Bewegungen des Betätigungselements 34a entlang der zumindest zwei Bewegungspfade 38a, 40a hinterlegt sein. Insbesondere kann die Elektronikeinheit 166a in einem alternativen Ausführungsbeispiel dazu eingerichtet sein, eine Abfolge von von dem zumindest einen Sensorelement erfassten Positionen des Betätigungselements 34a mit der in der Speichereinheit hinterlegten Abfolge von Positionen zu vergleichen und insbesondere in Abhängigkeit von einer Übereinstimmung die Antriebseinheit 32a, insbesondere den Motor 52a, anzusteuern.

Bevorzugt folgt der weitere Bewegungspfad 40a einer Linearbewegung, insbesondere entlang der Längsachse 42a der Grundeinheit 22a. Vorzugsweise ist das Betätigungselement 34a in zumindest einer Rotationsstellung auf dem weiteren Bewegungspfad 40a linearverschieblich, insbesondere zumindest im Wesentlichen parallel zu der Längsachse 42a der Grundeinheit 22a linearverschieblich, gelagert. Alternativ oder zusätzlich ist vorstellbar, dass das Betätigungselement 34a quer, insbesondere zumindest im Wesentlichen senkrecht, zu der Längsachse 42a der Grundeinheit 22a längsverschieblich, insbesondere drückbar, gelagert ist. Bevorzugt ist das Betätigungselement 34a in Abhängigkeit von einer Linearbewegung, insbesondere entlang der Längsachse 42a der Grundeinheit 22a, in Richtung der Aufnahmevorrichtung 112a und/oder der Elektronikeinheit 166a, insbesondere in Richtung der Energieversorgungseinheit 108a, zu einer Ansteuerung der Antriebseinheit 32a, insbesondere zu einer Betätigung des Schaltelements 168a der Schalteinheit 30a, vorgesehen (vgl. Figur 6). Alternativ oder zusätzlich ist denkbar, dass das Betätigungselement 34a in Abhängigkeit von einer Linearbewegung, insbesondere entlang der Längsachse 42a der Grundeinheit 22a auf dem weiteren Bewegungspfad 40a, zu der weiteren Handgriffeinheit 28a hin zu einer Ansteuerung der Antriebseinheit 32a, insbesondere zu einer Betätigung des Schaltelements 168a, vorgesehen ist.

Vorzugsweise weist die Schalteinheit 30a zwei Kulissenführungen 174a auf, die insbesondere spiegelsymmetrisch um eine zumindest im Wesentlichen parallel zu der durch die Längsachse 42a der Grundeinheit 22a verlaufenden Symmetrieebene angeordnet sind. Alternativ ist vorstellbar, dass die Schalteinheit 30a eine einzige Kulissenführung 174a aufweist. Vorzugsweise sind die Kulissenführungen 174a als Ausnehmungen, insbesondere Schlitze, in zumindest einer Seitenwandung der Grundeinheit 22a ausgebildet. In Figur 7 ist beispielhaft eine einzelne Kulissenführung 174a dargestellt. Insbesondere weisen die Kulissenführungen 174a jeweils zumindest zwei Führungsschenkel 188a, 190a, auf, die unter einem Winkel von größer als 0° und kleiner als 180°, bevorzugt zumindest im Wesentlichen senkrecht, zueinander ausgerichtet sind. Vorzugsweise definiert zumindest ein erster Führungsschenkel 188a den Bewegungspfad 38a, insbesondere eine Rotationsbewegung des Betätigungselements 34a um die Längsachse 42a der Grundeinheit 22a. Der erste Führungsschenkel 188a erstreckt sich vorzugsweise zumindest im Wesentlichen senkrecht zu der Längsachse 42a der Grundeinheit 22a, insbesondere zumindest abschnittsweise um die Längsachse 42a der Grundeinheit 22a herum. Vorzugsweise definiert zumindest ein zweiter Führungsschenkel 190a den weiteren Bewegungspfad 40a, insbesondere eine Linearbewegung des Betätigungselements 34a parallel zur Längsachse 42a der Grundeinheit 22a. Der zweite Führungsschenkel 190a erstreckt sich insbesondere zumindest im Wesentlichen parallel zu der Längsachse 42a der Grundeinheit 22a. Vorzugsweise weist der zweite Führungsschenkel 190a eine maximale Längserstreckung 194a von mindestens 1 cm, vorzugsweise mindestens 1,2 cm und bevorzugt zumindest im Wesentlichen 1,35 cm. Bevorzugt erstreckt sich der erste Führungsschenkel 188a und/oder der Bewegungspfad 38a um mindestens 10°, vorzugsweise um mindestens 20° und bevorzugt um mindestens 30°, um die Längsachse 42a des Betätigungselements 34a und/oder der Grundeinheit 22a.

Das Führungselement 162a ist als ein Führungsstift ausgebildet. Das Führungselement 162a erstreckt sich insbesondere zumindest im Wesentlichen senkrecht zu der Längsachse 42a der Grundeinheit 22a durch die Grundeinheit 22a und insbesondere durch die zwei Kulissenführungen 174a. Alternativ ist vorstellbar, dass sich das Führungselement 162a abschnittsweise durch die Grundeinheit 22a und insbesondere durch eine einzelne Kulissenführung 174a erstreckt. Weiterhin alternativ ist vorstellbar, dass die Schalteinheit 30a zwei sich zumindest im Wesentlichen parallel, insbesondere koaxial, zueinander erstreckende Führungselemente aufweist, wobei sich jeweils eines der Führungselemente durch jeweils eine der Kulissenführungen 174a erstreckt. Vorzugsweise ist das Führungselement 162a an einer Innenseite, insbesondere auf einer der Grundeinheit 22a zugewandten Seite, des Betätigungselements 34a fixiert (hier nicht dargestellt). Insbesondere kann das Führungselement 162a stoffschlüssig mit dem Betätigungselement 34a verbunden, insbesondere einteilig mit dem Betätigungselement 34a ausgebildet, sein. Alternativ ist denkbar, dass das Führungselement 162a kraft- und/oder formschlüssig mit dem Betätigungselement 34a verbunden ist. Vorzugsweise ist das Führungselement 162a einteilig mit dem Unterbetätigungselement 164a der Schalteinheit 30a ausgebildet und/oder mit dem Unterbetätigungselement 164a mechanisch gekoppelt. Vorzugsweise ist das Unterbetätigungselement 164a zumindest durch das Führungselement 162a mechanisch mit dem Betätigungselement 34a verbunden. Insbesondere ist das Unterbetätigungselement 164a dazu vorgesehen, einer Bewegung des Betätigungselements 34a zu folgen. Insbesondere ist das Unterbetätigungselement 164a dazu vorgesehen, in Abhängigkeit von einer Bewegung des Betätigungselements 34a die Schaltelemente 168a, 170a zu betätigen. Vorzugsweise ist das Betätigungselement 34a zumindest zu einer mittelbaren Betätigung der Schaltelemente 168a, 170a über das Unterbetätigungselement 164a vorgesehen.

Bevorzugt weisen die Kulissenführungen 174a jeweils einen Fixiervorsprung 196a auf, an dem das Führungselement 162a ortsfest fixierbar ist. Insbesondere sind in einer ortsfest fixierten Stellung des Führungselements 162a das Betätigungselement 34a und das Unterbetätigungselement 164a ortsfest fixiert. Vorzugsweise ist der Fixiervorsprung 196a an einem Endbereich eines, im vorliegenden Ausführungsbeispiel beispielhaft des zweiten, Führungsschenkels 190a angeordnet, wobei eine Position des Führungselements 162a in dem Endbereich des zweiten Führungsschenkels 190a einer Ansteuerung der Antriebseinheit 32a, insbesondere einer Betätigung des weiteren Schaltelements 170a, entspricht. Vorzugsweise steuert die Schalteinheit 30a die Antriebseinheit 32a in der an dem Fixiervorsprung 196a ortsfest fixierten Stellung des Führungselements 162a derart an, dass die Bearbeitungswerkzeuge 46a, 48a in eine geschlossene Stellung, insbesondere frei von exponierten Schneidkanten, bewegt sind/werden. Insbesondere ist der Fixiervorsprung 196a zu einer ortsfesten Fixierung des Führungselements 162a in einer Verstaustellung der Bearbeitungswerkzeuge 46a, 48a vorgesehen. Der Fixiervorsprung 196a ist insbesondere dazu vorgesehen, einer auf das Betätigungselement 34a wirkenden Rückstellkraft, insbesondere durch das Rückstellelement 172a der Schalteinheit 30a, entgegenzuwirken.

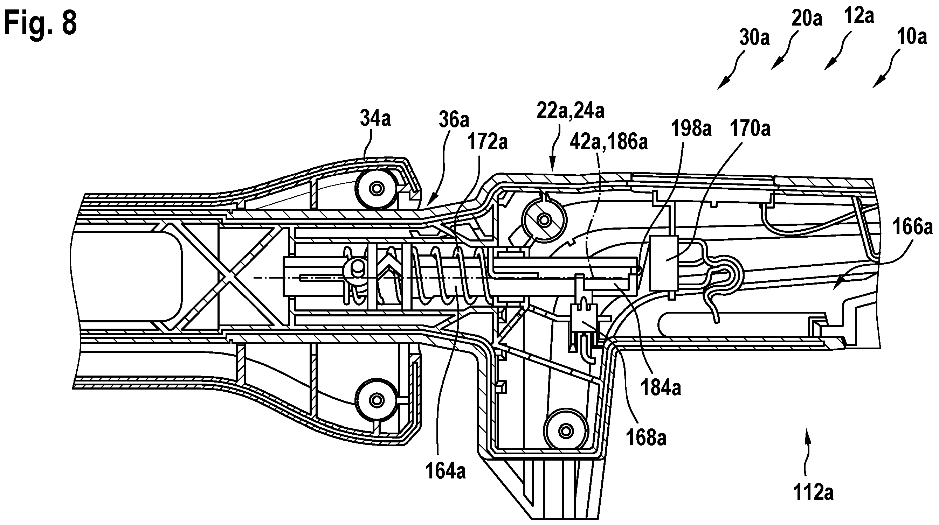

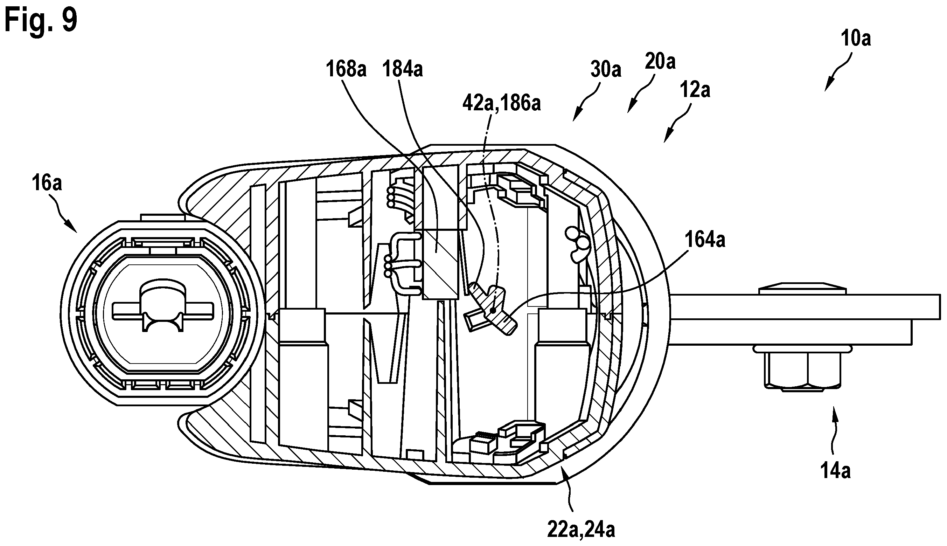

In den Figuren 8 und 9 ist jeweils schematisch ein Querschnitt der Werkzeugmaschine 12a im Bereich der Schaltelemente 168a, 170a der Schalteinheit 30a gezeigt. In Figur 8 ist ein Querschnitt der Werkzeugmaschine 12a parallel zur Längsachse 42a der Grundeinheit 22a durch das weitere Schaltelement 170a gezeigt. In Figur 9 ist ein Querschnitt der Werkzeugmaschine 12a senkrecht zur Längsachse 42a der Grundeinheit 22a durch das Schaltelement 168a und das Nockenelement 184a gezeigt. Das Unterbetätigungselement 164a bildet einen Betätigungsfortsatz 198a zu einer Betätigung des weiteren Schaltelements 170a aus (vgl. Figur 8), welcher sich insbesondere von einem Grundkörper des Unterbetätigungselements 164a aus zumindest im Wesentlichen parallel zur Längsachse 186a des Unterbetätigungselements 164a erstreckt. Der Betätigungsfortsatz 198a weist eine halbkugelförmige oder linsenförmige Grundform auf. Das Unterbetätigungselement 164a weist im Bereich der Schaltelemente 168a, 170a eine mehrschenklige, insbesondere dreischenklige, Grundform auf (vgl. Figur 9), wobei insbesondere die einzelnen Schenkel gleichmäßig um die Längsachse 186a des Unterbetätigungselements 164a verteilt angeordnet sind. Das Nockenelement 184a ist als ein angeformter Fortsatz ausgebildet, welcher sich insbesondere von der Längsachse 186a des Unterbetätigungselements 164a aus radial nach außen erstreckt.

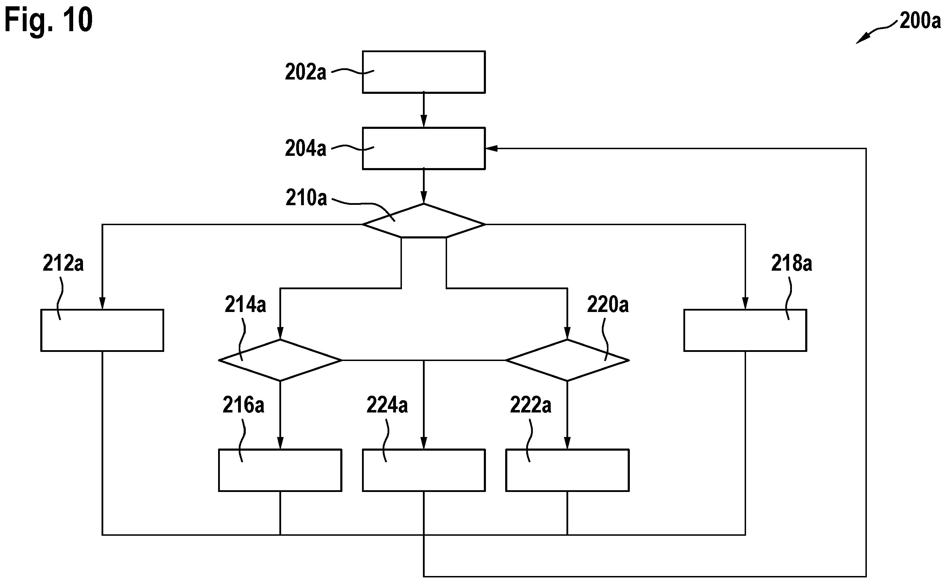

In Figur 10 ist schematisch ein beispielhafter Ablauf eines Verfahrens 200a zu einem Betätigen des Werkzeugmaschinensystems 10a mit der Werkzeugmaschine 12a mittels der Betätigungsvorrichtung 20a gezeigt. Vorzugsweise ist das Werkzeugmaschinensystem 10a, die Werkzeugmaschine 12a und/oder die Betätigungsvorrichtung 20a zu einer Durchführung des Verfahrens 200a vorgesehen. In zumindest einem Verfahrensschritt 202a des Verfahrens 200a wird mittels der Schalteinheit 30a der Betätigungsvorrichtung 20a über eine Betätigung des Betätigungselements 34a der Schalteinheit 30a entlang des Bewegungspfads 38a, welcher insbesondere einer Rotationsbewegung folgt, eine Energieversorgung der Antriebseinheit 32a der Werkzeugmaschine 12a freigegeben. Insbesondere wird in dem Verfahrensschritt 202a des Verfahrens 200a durch eine Bewegung des Betätigungselements 34a das Schaltelement 168a der Schalteinheit 30a über das Unterbetätigungselement 164 und das Nockenelement 184a betätigt, wobei vorzugsweise über die Elektronikeinheit 166a die Energieversorgung der Antriebseinheit 32a freigegeben wird. In zumindest einem weiteren Verfahrensschritt 204a des Verfahrens 200a wird mittels der Schalteinheit 30a in Abhängigkeit von einer, insbesondere der Betätigung zumindest im Wesentlichen direkt folgenden, weiteren Betätigung des Betätigungselements 34a entlang des von dem Bewegungspfad 38a verschiedenen und einer Linearbewegung folgenden weiteren Bewegungspfads 40a die Antriebseinheit 32a, insbesondere proportional zu einer entlang des weiteren Bewegungspfads 40a zurückgelegten Strecke des Betätigungselements 34a bei der weiteren Betätigung, zu einer Ausgabe einer Antriebskraft angesteuert.

Bevorzugt wird in zumindest einem Verfahrensschritt des Verfahrens 200a, insbesondere dem Verfahrensschritt 204a, in Abhängigkeit von zumindest einem Proportionalbetätigungssignal zumindest ein Sollzustand, insbesondere zumindest eine Sollposition, von der Bearbeitungseinheit 50a der stabgebundenen Werkzeugmaschine 12a, insbesondere von dem Bearbeitungswerkzeug 46a der Bearbeitungseinheit 50a, ermittelt, wobei in Abhängigkeit von dem Sollzustand, insbesondere unter Berücksichtigung zumindest eines Glättungsparameters, die Antriebseinheit 32a der stabgebundenen Werkzeugmaschine 12a zu einem Antrieb der Bearbeitungseinheit 50a angesteuert wird. Das Proportionalbetätigungssignal wird vorzugsweise von dem proportionalen weiteren Schaltelement 170a bereitgestellt. Der Sollzustand, insbesondere die Sollposition, der Bearbeitungseinheit 50a, insbesondere des Bearbeitungswerkzeugs 46a, ist insbesondere als ein theoretischer Wert ausgebildet, der in Abhängigkeit von dem Proportionalbetätigungssignal von der Elektronikeinheit 166a, insbesondere von einer als Mikrocontroller, FPGA oder Prozessor ausgebildeten Prozessoreinheit der Elektronikeinheit 166a, ermittelt wird. Insbesondere wird die Antriebseinheit 32a in Abhängigkeit von dem ermittelten Sollzustand von der Elektronikeinheit 166a, insbesondere von der Prozessoreinheit, angesteuert. Der zumindest eine Glättungsparameter ist vorzugsweise in einer Speichereinheit der Elektronikeinheit 166a hinterlegt. Insbesondere wird die Antriebseinheit 32a unter Berücksichtigung von zumindest zwei Glättungsparametern, insbesondere einem Empfindlichkeitsglättungsparameter und einem Bremsglättungsparameter, angesteuert. Vorzugsweise ist der Empfindlichkeitsglättungsparameter dazu vorgesehen, einer Empfindlichkeit des proportionalen weiteren Schaltelements 170a entgegenzuwirken, insbesondere zu einer Realisierung einer gleichmäßigen Ansteuerung der Antriebseinheit 32a. Vorzugsweise ist der Bremsglättungsparameter dazu vorgesehen, einer Überschreitung einer Zielstellung der Bearbeitungseinheit 50a, insbesondere des Bearbeitungswerkzeugs 46a, entgegenzuwirken, insbesondere eine Ansteuerung der Antriebseinheit 32a zu einer Entschleunigung einer Bewegung des Bearbeitungswerkzeugs 46a in einem Annäherungsbereich an die Zielstellung zu ermöglichen.

Vorzugsweise umfasst das Verfahren 200a, insbesondere der Verfahrensschritt 204a, eine Mehrzahl von Unterverfahrensschritten 210a, 212a, 214a, 216a, 218a, 220a, 222a, 224a. Insbesondere wird in dem Verfahrensschritt 204a der Sollzustand, insbesondere die Sollposition, der Bearbeitungseinheit 50a, insbesondere des Bearbeitungswerkzeugs 46a, ermittelt. Vorzugsweise wird in zumindest einem weiteren Unterverfahrensschritt 210a ein Ist-Zustand, insbesondere eine Ist-Position, der Bearbeitungseinheit 50a, insbesondere des Bearbeitungswerkzeugs 46a, mit einer Summe aus dem ermittelten Sollzustand und dem Empfindlichkeitsglättungsparameter verglichen. Vorzugsweise wird in zumindest einem weiteren Unterverfahrensschritt 212a die Antriebseinheit 32a in Abhängigkeit von einem Ist-Zustand, insbesondere von einer Ist-Position, der Bearbeitungseinheit 50a, insbesondere des Bearbeitungswerkzeugs 46a, größer als eine Summe aus dem ermittelten Sollzustand und dem Empfindlichkeitsglättungsparameter auf eine maximale Vorwärtsgeschwindigkeit geschaltet. Vorzugsweise ist die Antriebseinheit 32a auf einer maximalen Vorwärtsgeschwindigkeit dazu vorgesehen, das Bearbeitungswerkzeug 46a in kürzest möglicher Zeit in eine geschlossene Stellung der Bearbeitungswerkzeuge 46a, 48a zu bewegen. Der Ist-Zustand, insbesondere die Ist-Position, der Bearbeitungseinheit 50a, insbesondere des Bearbeitungswerkzeugs 46a, ist insbesondere ein tatsächlicher aktueller Wert.

Vorzugsweise wird in zumindest einem weiteren, insbesondere zu dem weiteren Unterverfahrensschritt 212a alternativen, Unterverfahrensschritt 214a in Abhängigkeit von einem Ist-Zustand, insbesondere von einer Ist-Position, der Bearbeitungseinheit 50a, insbesondere des Bearbeitungswerkzeugs 46a, kleiner als die Summe aus dem ermittelten Sollzustand und dem Empfindlichkeitsglättungsparameter und größer als eine Differenz aus dem ermittelten Sollzustand und dem Empfindlichkeitsglättungsparameter der Ist-Zustand, insbesondere die Ist-Position, der Bearbeitungseinheit 50a, insbesondere des Bearbeitungswerkzeugs 46a, mit einer Summe aus dem ermittelten Sollzustand und dem Bremsglättungsparameter verglichen. Vorzugsweise wird in zumindest einem weiteren Unterverfahrensschritt 216a die Antriebseinheit 32a in Abhängigkeit von einem Ist-Zustand, insbesondere von einer Ist-Position, der Bearbeitungseinheit 50a, insbesondere des Bearbeitungswerkzeugs 46a, größer als eine Summe aus dem ermittelten Sollzustand und dem Bremsglättungsparameter auf eine Vorwärtsgeschwindigkeit kleiner als eine maximale Vorwärtsgeschwindigkeit, insbesondere auf eine minimale Vorwärtsgeschwindigkeit, geschaltet.

Vorzugsweise wird in zumindest einem weiteren Unterverfahrensschritt 218a die Antriebseinheit 32a in Abhängigkeit von einem Ist-Zustand, insbesondere von einer Ist-Position, der Bearbeitungseinheit 50a, insbesondere des Bearbeitungswerkzeugs 46a, kleiner als eine Differenz aus dem ermittelten Sollzustand und dem Empfindlichkeitsglättungsparameter auf eine maximale Rückwärtsgeschwindigkeit geschaltet. Vorzugsweise ist die Antriebseinheit 32a auf einer maximalen Rückwärtsgeschwindigkeit dazu vorgesehen, das Bearbeitungswerkzeug 46a in kürzest möglicher Zeit in eine geöffnete Stellung zu bewegen. Vorzugsweise wird in zumindest einem weiteren, insbesondere zu dem weiteren Unterverfahrensschritt 218a alternativen, Unterverfahrensschritt 220a in Abhängigkeit von einem Ist-Zustand, insbesondere von einer Ist-Position, der Bearbeitungseinheit 50a, insbesondere des Bearbeitungswerkzeugs 46a, größer als die Differenz aus dem ermittelten Sollzustand und dem Empfindlichkeitsglättungsparameter und kleiner als die Summe aus dem ermittelten Sollzustand und dem Empfindlichkeitsglättungsparameter der Ist-Zustand, insbesondere die Ist-Position, der Bearbeitungseinheit 50a, insbesondere des Bearbeitungswerkzeugs 46a, mit einer Differenz aus dem ermittelten Sollzustand und dem Bremsglättungsparameter verglichen.

Vorzugsweise wird in zumindest einem weiteren, insbesondere zu dem weiteren Unterverfahrensschritt 220a alternativen, Unterverfahrensschritt 222a die Antriebseinheit 32a in Abhängigkeit von einem Ist-Zustand, insbesondere von einer Ist-Position, der Bearbeitungseinheit 50a, insbesondere des Bearbeitungswerkzeugs 46a, kleiner als eine Differenz aus dem ermittelten Sollzustand und dem Bremsglättungsparameter auf eine Rückwärtsgeschwindigkeit kleiner als eine maximale Rückwärtsgeschwindigkeit, insbesondere auf eine minimale Rückwärtsgeschwindigkeit, geschaltet. Vorzugsweise wird in zumindest einem weiteren, insbesondere zu den weiteren Unterverfahrensschritten 220a, 222a alternativen, Unterverfahrensschritt 224a die Antriebseinheit 32a in Abhängigkeit von einem Ist-Zustand, insbesondere von einer Ist-Position, der Bearbeitungseinheit 50a, insbesondere des Bearbeitungswerkzeugs 46a, kleiner als eine Summe aus dem ermittelten Sollzustand und dem Bremsglättungsparameter und größer als eine Differenz aus dem ermittelten Sollzustand und dem Bremsglättungsparameter auf einen Stillstand geschaltet. Insbesondere wird das Verfahren 200a, insbesondere der Verfahrensschritt 204a, schleifenartig wiederholt, insbesondere bis zu einem Abschalten der stabgebundenen Werkzeugmaschine 12a.

Hinsichtlich weiterer Verfahrensschritte des Verfahrens 200a zum Betrieb der stabgebundenen Werkzeugmaschine 12a darf auf die vorhergehende Beschreibung des Werkzeugmaschinensystems 10a und/oder der stabgebundenen Werkzeugmaschine 12a verwiesen werden, da diese Beschreibung analog auch auf das Verfahren 200a zu lesen ist und somit alle Merkmale hinsichtlich des Werkzeugmaschinensystems 10a und/oder der stabgebundenen Werkzeugmaschine 12a auch in Bezug auf das Verfahren 200a als offenbart gelten.

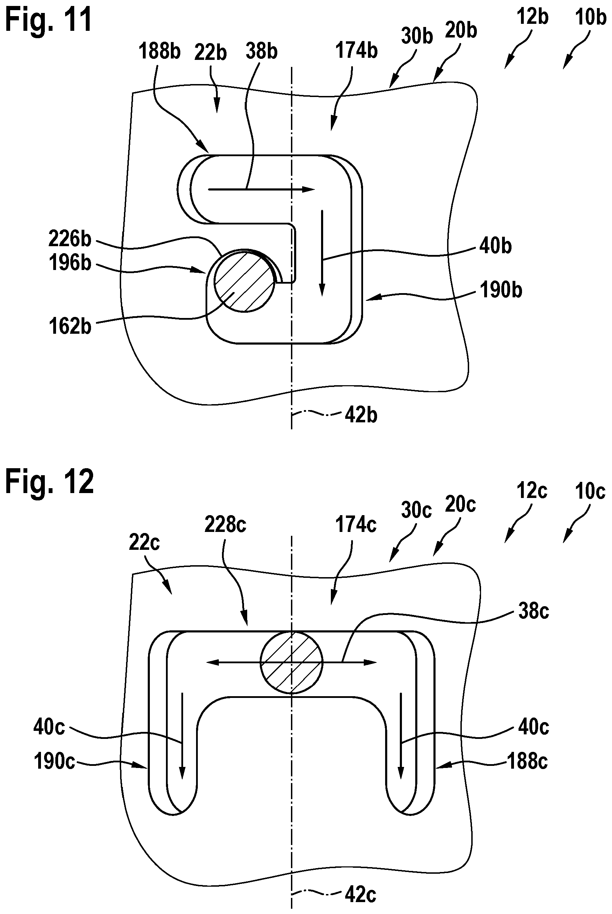

In den Figuren 11 bis 13 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 10, verwiesen werden kann. Zur Unterscheidung der Ausführungsbeispiele ist der Buchstabe a den Bezugszeichen des Ausführungsbeispiels in den Figuren 1 bis 10 nachgestellt. In den Ausführungsbeispielen der Figuren 11 bis 13 ist der Buchstabe a durch die Buchstaben b bis d ersetzt.

In Figur 11 ist eine alternative Ausgestaltung einer Kulissenführung 174b einer Schalteinheit 30b einer Betätigungsvorrichtung 20b einer, insbesondere stabgebundenen Werkzeugmaschine 12b eines Werkzeugmaschinensystems 10b gezeigt. Die Betätigungsvorrichtung 20b umfasst eine zumindest im Wesentlichen stabförmige Grundeinheit 22b, die Schalteinheit 30b zu einer Steuerung von zumindest einer Funktion der Werkzeugmaschine 12b und zwei, insbesondere zumindest im Wesentlichen koaxial zueinander angeordnete, beabstandet voneinander angeordnete Handgriffeinheiten (in Figur 11 nicht gezeigt). Die zwei Handgriffeinheiten sind jeweils dazu vorgesehen, von zumindest einer Hand eines Benutzers zumindest größtenteils umgriffen zu werden, wobei die zwei Handgriffeinheiten jeweils an der Grundeinheit 22b angeordnet sind oder zumindest teilweise als Teil der Grundeinheit 22b ausgebildet sind. Eine Handgriffeinheit der zwei Handriffeinheiten ist als Betätigungselement der Schalteinheit ausgebildet, welches relativ zur Grundeinheit 22b und/oder relativ zu einer weiteren Handgriffeinheit der zwei Handgriffeinheiten entlang von zumindest zwei unterschiedlichen Bewegungspfaden 38b, 40b beweglich gelagert ist, wobei zumindest ein Bewegungspfad 38b einer Rotationsbewegung, insbesondere um eine Längsachse 42b der Grundeinheit 22b und/oder um eine Längsachse des Betätigungselements, folgt. Die in der Figur 11 zumindest teilweise dargestellte Betätigungsvorrichtung 20b weist eine zumindest im Wesentlichen analoge Ausgestaltung zu der in der Beschreibung der Figuren 1 bis 10 beschriebenen Betätigungsvorrichtung 20a auf, so dass bezüglich einer Ausgestaltung der in der Figur 11 dargestellten Betätigungsvorrichtung 20b zumindest im Wesentlichen auf die Beschreibung der Figuren 1 bis 10 verwiesen werden kann. Im Unterschied zu der in der Beschreibung der Figuren 1 bis 10 beschriebenen Betätigungsvorrichtung 20a weist die Kulissenführung 174b der in der Figur 11 dargestellten Betätigungsvorrichtung 20b vorzugsweise einen Fixiervorsprung 196b auf, welcher sich angrenzend an einen zweiten Führungsschenkel 190b der Kulissenführung 174b L-förmig erst um die Längsachse 42b der Grundeinheit 22b und anschließend in eine zumindest im Wesentlichen parallel zur Längsachse 42b der Grundeinheit 22b ausgerichtete Richtung erstreckt. Insbesondere bildet der Fixiervorsprung 196b eine Ratsausnehmung 226b für ein in der Kulissenführung 174b gelagertes Führungselement 162b der Schalteinheit 30b aus. Insbesondere ist das Führungselement 162b dazu vorgesehen, bei einer anschließend an die Bewegung entlang eines weiteren Bewegungspfads 40b der zwei Bewegungspfade 38b, 40b des Betätigungselements, welcher einer Linearbewegung folgt und/oder entlang des zweiten Führungsschenkels 190b erfolgenden Betätigung des Betätigungselements um die Längsachse 42b der Grundeinheit 22b durch einen Benutzer in den Fixiervorsprung 196b hineinbewegt zu werden. Vorzugsweise umfasst die Schalteinheit 30b ein Rückstellelement, welches dazu vorgesehen ist, das Führungselement 162b in die Rastausnehmung 226b des Fixiervorsprungs 196b zu bewegen. Vorzugsweise sind die Kulissenführung 174b und das Führungselement 162b dazu vorgesehen, zu einem Zurückführen des Betätigungselements, insbesondere des Führungselements 162b , in eine Grundposition, insbesondere an einen Anfang des Bewegungspfads 38b des Betätigungselements und/oder eines ersten Führungsschenkels 188b der Kulissenführung 174b zumindest im Wesentlichen parallel zur Längsachse 42b der Grundeinheit 22b gegen eine Rückstellkraft des Rückstellelements aus der Rastausnehmung 226b bewegt zu werden.

In Figur 12 ist eine weitere alternative Ausgestaltung einer Kulissenführung 174c einer Schalteinheit 30c einer Betätigungsvorrichtung 20c einer, insbesondere stabgebundenen Werkzeugmaschine 12c eines Werkzeugmaschinensystems 10c gezeigt. Die Betätigungsvorrichtung 20c umfasst eine zumindest im Wesentlichen stabförmige Grundeinheit 22c, die Schalteinheit 30c zu einer Steuerung von zumindest einer Funktion der Werkzeugmaschine 12c und zwei, insbesondere zumindest im Wesentlichen koaxial zueinander angeordnete, beabstandet voneinander angeordnete Handgriffeinheiten (in Figur 12 nicht gezeigt). Die zwei Handgriffeinheiten sind jeweils dazu vorgesehen, von zumindest einer Hand eines Benutzers zumindest größtenteils umgriffen zu werden, wobei die zwei Handgriffeinheiten jeweils an der Grundeinheit 22c angeordnet sind oder zumindest teilweise als Teil der Grundeinheit 22c ausgebildet sind. Eine Handgriffeinheit der zwei Handriffeinheiten ist als Betätigungselement der Schalteinheit 30c ausgebildet, welches relativ zur Grundeinheit 22c und/oder relativ zu einer weiteren Handgriffeinheit der zwei Handgriffeinheiten entlang von zumindest zwei unterschiedlichen Bewegungspfaden 38c, 40c beweglich gelagert ist, wobei zumindest ein Bewegungspfad 38c, 40c einer Rotationsbewegung, insbesondere um eine Längsachse 42c der Grundeinheit 22c und/oder um eine Längsachse des Betätigungselements, folgt. Die in der Figur 12 zumindest teilweise dargestellte Betätigungsvorrichtung 20c weist eine zumindest im Wesentlichen analoge Ausgestaltung zu der in der Beschreibung der Figuren 1 bis 10 beschriebenen Betätigungsvorrichtung 20a auf, so dass bezüglich einer Ausgestaltung der in der Figur 12 dargestellten Betätigungsvorrichtung 20c zumindest im Wesentlichen auf die Beschreibung der Figuren 1 bis 10 verwiesen werden kann. Im Unterschied zu der in der Beschreibung der Figuren 1 bis 10 beschriebenen Betätigungsvorrichtung 20a weist die Kulissenführung 174c der in der Figur 12 dargestellten Betätigungsvorrichtung 20c vorzugsweise eine senkrecht zur Längsachse 42c der Grundeinheit 22c gedrehte U-förmige Grundform auf. Insbesondere weist die U-förmige Kulissenführung 174c drei Führungsschenkel 188c, 190c, 228c auf. Vorzugsweise erstrecken sich zumindest ein erster Führungsschenkel 188c und ein zweiter Führungsschenkel 190c der drei Führungsschenkel 188c, 190c, 228c zumindest im Wesentlichen parallel zueinander, insbesondere parallel zu der Längsachse 42c der Grundeinheit 22c. Vorzugsweise verbindet ein dritter Führungsschenkel 228c der drei Führungsschenkel 188c, 190c, 228c, der sich insbesondere zumindest im Wesentlichen senkrecht zu dem ersten Führungsschenkel 188c und zu dem zweiten Führungsschenkel 190c erstreckt, den ersten Führungsschenkel 188c mit dem zweiten Führungsschenkel 190c. Bevorzugt ist ein Führungselement 162c der Schalteinheit 30c in dem ersten Führungsschenkel 188c und in dem zweiten Führungsschenkel 190c in Abhängigkeit von einer Linearbewegung eines Betätigungselements und in dem dritten Führungsschenkel 228c in Abhängigkeit von einer Rotationsbewegung des Betätigungselements bewegbar (Betätigungselement in Figur 12 nicht gezeigt). Vorzugsweise gibt die U-förmige Kulissenführung 174c zwei mögliche Rotationsrichtungen des Betätigungselements, insbesondere im und gegen den Uhrzeigersinn um die Längsachse 42c der Grundeinheit 22c, vor, entlang derer das Betätigungselement an einen Ausgangspunkt der Linearbewegung und/oder zu einer Betätigung von zumindest einem Schaltelement der Schalteinheit 30c bewegbar ist. Alternativ ist vorstellbar, dass das Führungselement 162c in dem ersten Führungsschenkel 188c und in dem zweiten Führungsschenkel 190c in Abhängigkeit von einer Rotationsbewegung des Betätigungselements und in dem dritten Führungsschenkel 228c in Abhängigkeit von einer Linearbewegung des Betätigungselements bewegbar ist.

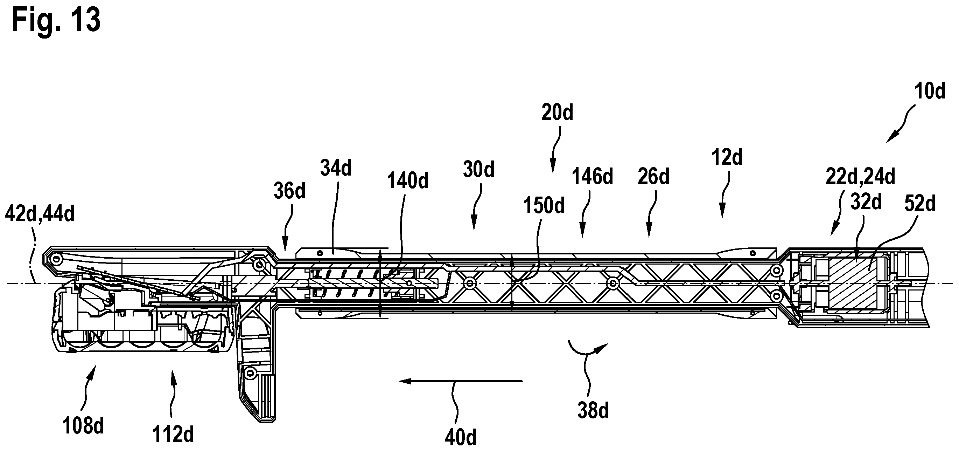

In Figur 13 ist eine alternative Ausgestaltung eines Betätigungselements 34d einer Schalteinheit 30d einer Betätigungsvorrichtung 20d einer, insbesondere stabgebundenen, Werkzeugmaschine 12d eines Werkzeugmaschinensystems 10d gezeigt. Die Betätigungsvorrichtung 20d umfasst eine zumindest im Wesentlichen stabförmige Grundeinheit 22d, die Schalteinheit 30d zu einer Steuerung von zumindest einer Funktion der Werkzeugmaschine 12d und zwei, insbesondere zumindest im Wesentlichen koaxial zueinander angeordnete, beabstandet voneinander angeordnete Handgriffeinheiten 26d, wobei insbesondere in Figur 13 lediglich eine Handgriffeinheit 26d der zwei Handgriffeinheiten 26d gezeigt ist. Die zwei Handgriffeinheiten 26d sind jeweils dazu vorgesehen, von zumindest einer Hand eines Benutzers zumindest größtenteils umgriffen zu werden, wobei die zwei Handgriffeinheiten 26d jeweils an der Grundeinheit 22d angeordnet sind oder zumindest teilweise als Teil der Grundeinheit 22d ausgebildet sind. Eine, insbesondere die in Figur 13 gezeigte, Handgriffeinheit 26d der zwei Handriffeinheiten 26d ist durch das Betätigungselement 34d der Schalteinheit 30d ausgebildet, welches relativ zur Grundeinheit 22d und/oder relativ zu einer weiteren Handgriffeinheit der zwei Handgriffeinheiten 26d entlang von zumindest zwei unterschiedlichen Bewegungspfaden 38d, 40d beweglich gelagert ist, wobei zumindest ein Bewegungspfad 38d einer Rotationsbewegung, insbesondere um eine Längsachse 42d der Grundeinheit 22d und/oder um eine Längsachse 44d des Betätigungselements 34d, folgt. Die in der Figur 13 zumindest teilweise dargestellte Betätigungsvorrichtung 20d weist eine zumindest im Wesentlichen analoge Ausgestaltung zu der in der Beschreibung der Figuren 1 bis 10 beschriebenen Betätigungsvorrichtung 20a auf, so dass bezüglich einer Ausgestaltung der in der Figur 13 dargestellten Betätigungsvorrichtung 20d zumindest im Wesentlichen auf die Beschreibung der Figuren 1 bis 10 verwiesen werden kann. Im Unterschied zu der in der Beschreibung der Figuren 1 bis 10 beschriebenen Betätigungsvorrichtung 20a weist das Betätigungselement 34d der in der Figur 13 dargestellten Betätigungsvorrichtung 20d vorzugsweise eine zu der Längsachse 42d der Grundeinheit 22d und/oder zu einer Mittelachse eines von dem Betätigungselement 34d umschlossenen Bereichs 36d der Grundeinheit 22d symmetrische Grundform auf. Die Grundform des Betätigungselements 34d ist in einem Zwischenbereich 146d des Betätigungselements 34d als ein Hohlzylinder ausgebildet. Insbesondere liegt das Betätigungselement 34d über eine Innenfläche des Betätigungselements 34d, insbesondere die eine Längsachse 44d des Betätigungselements 34d, zumindest teilweise, insbesondere zumindest größtenteils, an einer Außenfläche der Grundeinheit 22d in dem von dem Betätigungselement 34d umschlossenen Bereich 36d der Grundeinheit 22d an. Bevorzugt ist die Grundform des Betätigungselements 34d um die Längsachse 42d der Grundeinheit 22d zumindest im Wesentlichen hantelförmig ausgebildet. Im Vergleich zu dem in den Figuren 1 bis 10 beschriebenen Betätigungselement 34a weist das in der Figur 13 gezeigte Betätigungselement 34d insbesondere eine kleinere maximale Quererstreckung 140d senkrecht zur Längsachse 44d des Betätigungselements 34d sowie eine kleinere maximale Quererstreckung 150d im Zwischenbereich 146d auf. Vorteilhafterweise kann eine schlankere Handgriffeinheit 26d ermöglicht werden. Es sind aber auch andere Ausgestaltungen des Betätigungselements 34d denkbar, beispielsweise mit einer zumindest eine oder mehrere Ausnehmungen umfassenden Grundform. Dadurch kann beispielsweise ein vorteilhaft geringes Gewicht und vorteilhaft geringe Materialkosten des Betätigungselements 34d erreicht werden. Beispielsweise ist denkbar, dass das Betätigungselement 34d, vorzugsweise alternativ oder zusätzlich zu rutschhemmenden Mitteln an einer Außenseite des Betätigungselements 34d, beispielsweise entlang einer Längserstreckung des Betätigungselements 34d und/oder quer zur Längserstreckung des Betätigungselements 34d, zumindest eine oder mehrere Ausnehmungen zu einem Angreifen einer Hand eines Benutzers umfasst. Es ist denkbar, dass sich die Ausnehmung(en) lediglich teilweise oder vollständig über eine radiale Dicke des Betätigungselements 34d erstrecken.

## Patentansprüche

1. Betätigungsvorrichtung für eine, insbesondere stabgebundene, Werkzeugmaschine (12a; 12b; 12c; 12d), insbesondere für einen Hochentaster, mit zumindest einer, insbesondere zumindest teilweise als Gehäuse (24a; 24d) ausgebildeten, zumindest im Wesentlichen stabförmigen Grundeinheit (22a; 22b; 22c; 22d), mit zumindest zwei, insbesondere zumindest im Wesentlichen koaxial zueinander angeordneten, beabstandet voneinander angeordneten Handgriffeinheiten (26a, 28a; 26d, 28d), die jeweils dazu vorgesehen sind, von zumindest einer Hand eines Benutzers zumindest größtenteils umgriffen zu werden, wobei die zwei Handgriffeinheiten (26a, 28a; 26d, 28d) jeweils an der Grundeinheit (22a; 22b; 22c; 22d) angeordnet sind oder zumindest teilweise als Teil der Grundeinheit (22a; 22b; 22c; 22d) ausgebildet sind, und mit zumindest einer Schalteinheit (30a; 30b; 30c; 30d) zu einer Steuerung von zumindest einer Funktion der Werkzeugmaschine (12a; 12b; 12c; 12d), wobei zumindest eine Handgriffeinheit (26a; 26d) der zwei Handriffeinheiten (26a, 28a; 26d, 28d) als Betätigungselement (34a; 34d) der Schalteinheit (30a; 30b; 30c; 30d) ausgebildet ist, welches relativ zur Grundeinheit (22a; 22b; 22c; 22d) und/oder relativ zu einer weiteren Handgriffeinheit (28a; 28d) der zwei Handgriffeinheiten (26a, 28a; 26d, 28d) entlang von zumindest zwei unterschiedlichen Bewegungspfaden (38a, 40a; 38b, 40b; 38c, 40c; 38d, 40d) beweglich gelagert ist, wobei zumindest ein Bewegungspfad (38a; 38b; 38c; 38d) einer Rotationsbewegung folgt, **dadurch gekennzeichnet, dass** die zumindest eine Handgriffeinheit (26a; 26d) der zwei Handriffeinheiten (26a, 28a; 26d, 28d) die Grundeinheit (22a; 22b; 22c; 22d) röhrenartig umschließt und/oder dass der zumindest eine Bewegungspfad (38a; 38b; 38c; 38d) einer Rotationsbewegung um eine Längsachse (42a; 42b; 42c; 42d) der Grundeinheit (22a; 22b; 22c; 22d) und/oder um eine Längsachse (44a; 44d) des Betätigungselements (34a; 34d) folgt.

2. Betätigungsvorrichtung nach Anspruch 1, **dadurch gekennzeichnet, dass** zumindest ein weiterer Bewegungspfad (40a; 40b; 40c; 40d) der zumindest zwei unterschiedlichen Bewegungspfade (38a, 40a; 38b, 40b; 38c, 40c; 38d, 40d) einer Linearbewegung folgt, welche zumindest im Wesentlichen parallel zu einer Längsachse (42a; 42b; 42c; 42d) der Grundeinheit (22a; 22b; 22c; 22d) und/oder des Betätigungselements (34a; 34d) ausgerichtet ist und welche bevorzugt als Zug- und/oder Druckbewegung ausgebildet ist.

3. Betätigungsvorrichtung nach Anspruch 1 oder 2, **dadurch gekennzeichnet, dass** die Schalteinheit (30a; 30b; 30c; 30d) zumindest ein Rückstellelement (172a) umfasst, das dazu vorgesehen ist, das Betätigungselement (34a; 34d) gegen zumindest eine Bewegung entlang zumindest einem Bewegungspfad (38a, 40a; 38b, 40b; 38c, 40c; 38d, 40d) der zumindest zwei Bewegungspfade (38a, 40a; 38b, 40b; 38c, 40c; 38d, 40d) mit einer Rückstellkraft zu beaufschlagen.

4. Betätigungsvorrichtung nach einem der vorhergehenden Ansprüche, **gekennzeichnet durch** zumindest eine Verbindungsvorrichtung (66a) zu einer Aufnahme zumindest eines Werkzeugsaufsatzes (14a) und/oder eines Verlängerungsstücks oder Adapterstücks (16a), wobei die zumindest eine Handgriffeinheit (26a; 26d) der zumindest zwei Handgriffeinheiten (26a, 28a; 26d, 28d), welche als Betätigungselement (34a; 34d) der Schalteinheit (30a; 30b; 30c; 30d) ausgebildet ist, von der Verbindungsvorrichtung (66a) aus betrachtet hinter der weiteren Handgriffeinheit (28a; 28d) der zumindest zwei Handgriffeinheiten (26a, 28a; 26d, 28d) an der Grundeinheit (22a; 22b; 22c; 22d) angeordnet ist.

5. Betätigungsvorrichtung nach einem der vorhergehenden Ansprüche,
**dadurch gekennzeichnet, dass** das Betätigungselement (34a; 34d) die Grundeinheit (22a; 22b; 22c; 22d) in zumindest einer senkrecht zu einer Längsachse (42a; 42b; 42c; 42d) der Grundeinheit (22a; 22b; 22c; 22d) ausgerichteten Ebene um die Längsachse (42a; 42b; 42c; 42d) der Grundeinheit (22a; 22b; 22c; 22d) zumindest größtenteils, insbesondere hülsenartig, umschließt.

6. Betätigungsvorrichtung nach einem der vorhergehenden Ansprüche,
**dadurch gekennzeichnet, dass** das Betätigungselement (34a; 34d) eine maximale Längserstreckung (138a) aufweist, welche, insbesondere in einem an der Grundeinheit (22a; 22b; 22c; 22d) angeordneten Zustand des Betätigungselements (34a; 34d), zumindest im Wesentlichen parallel zu einer Längsachse (42a; 42b; 42c; 42d) der Grundeinheit (22a; 22b; 22c; 22d) ausgerichtet ist, wobei die maximale Längserstreckung (138a) des Betätigungselements (34a; 34d) mindestens zweimal, vorzugsweise mindestens drei- bis sechsmal, so groß ist wie eine maximale Quererstreckung (140a, 156a) des Betätigungselements (34a; 34d), welche insbesondere zumindest im Wesentlichen senkrecht zur maximalen Längserstreckung (138a) des Betätigungselements (34a; 34d) ausgerichtet ist.

7. Betätigungsvorrichtung nach einem der vorhergehenden Ansprüche,
**dadurch gekennzeichnet, dass** das Betätigungselement (34a; 34d) in zumindest einer eine Längsachse (44a; 44d) des Betätigungselements (34a; 34d) umfassenden Schnittebene, insbesondere an zumindest einer Seite von der Längsachse (44a; 44d) des Betätigungselements (34a; 34d) aus betrachtet oder spiegelsymmetrisch zur Längsachse (44a; 44d) des Betätigungselements (34a; 34d), eine zumindest im Wesentlichen hantelförmige Grundform aufweist.

8. Betätigungsvorrichtung nach einem der vorhergehenden Ansprüche,
**dadurch gekennzeichnet, dass** die Schalteinheit (30a; 30b; 30c; 30d) zumindest eine abgewinkelte, vorzugsweise L- oder U-förmige, Kulissenführung (174a; 174b; 174c) umfasst, welche von der Grundeinheit (22a; 22b; 22c; 22d) im Bereich der zumindest einen Handgriffeinheit (26a; 26d) begrenzt wird, wobei die Schalteinheit (30a; 30b; 30c; 30d) zumindest ein an dem Betätigungselement (34a; 34d) fixiertes Führungselement (162a; 162b; 162c) umfasst, welches in der Kulissenführung (174a; 174b; 174c) geführt ist.

9. Betätigungsvorrichtung nach einem der vorhergehenden Ansprüche,
**dadurch gekennzeichnet, dass** die Schalteinheit (30a; 30b; 30c; 30d) zumindest ein, insbesondere als ein Proportional-Schalter ausgebildetes, Schaltelement (170a) umfasst, das dazu vorgesehen ist, proportional zu zumindest einer Bewegung des Betätigungselements (34a; 34d) entlang zumindest eines, insbesondere parallel zu einer Längsachse (42a; 42b; 42c; 42d) der Grundeinheit (22a; 22b; 22c; 22d) und/oder des Betätigungselements (34a; 34d) ausgerichteten, Bewegungspfads (40a; 40b; 40c; 40d) der zumindest zwei Bewegungspfade (38a, 40a; 38b, 40b; 38c, 40c; 38d, 40d) zumindest ein Schaltsignal auszugeben, wobei das zumindest eine Schaltsignal vorzugsweise zu einer Ansteuerung einer Antriebseinheit (32a) der Werkzeugmaschine (12a; 12b; 12c; 12d) vorgesehen ist.

10. Werkzeugmaschinensystem mit zumindest einer, insbesondere stabgebundenen, Werkzeugmaschine (12a; 12b; 12c; 12d), bevorzugt einem Hochentaster, wobei die Werkzeugmaschine (12a; 12b; 12c; 12d) zumindest eine Betätigungsvorrichtung (20a; 20b; 20c; 20d) nach einem der vorhergehenden Ansprüche umfasst.

11. Werkzeugmaschinensystem nach Anspruch 10, **dadurch gekennzeichnet, dass** die Werkzeugmaschine (12a; 12b; 12c; 12d) zumindest eine Antriebseinheit (32a) umfasst, wobei eine Schalteinheit (30a; 30b; 30c; 30d) der Betätigungsvorrichtung (20a; 20b; 20c; 20d) zumindest ein mit einem Betätigungselement (34a; 34d) der Schalteinheit (30a; 30b; 30c; 30d) wirkverbundenes Nockenelement (184a) umfasst, das dazu vorgesehen ist, in Abhängigkeit von einer Bewegung des Betätigungselements (34a; 34d), insbesondere entlang eines Bewegungspfads (38a; 38b; 38c; 38d) von zumindest zwei unterschiedlichen Bewegungspfaden (38a, 40a; 38b, 40b; 38c, 40c; 38d, 40d) des Betätigungselements (34a; 34d), zumindest ein Schaltelement (168a) der Schalteinheit (30a; 30b; 30c; 30d) zu betätigen, wobei das Schaltelement (168a) dazu vorgesehen ist, in Abhängigkeit von einer Betätigung eine Energieversorgung der Antriebseinheit (32a) der Werkzeugmaschine (12a; 12b; 12c; 12d) freizuschalten.

12. Werkzeugmaschinensystem nach Anspruch 10 oder 11, **gekennzeichnet durch** zumindest ein Verlängerungsstück oder Adapterstück (16a) und zumindest eine Haltevorrichtung (18a) zu einem Verstauen des Verlängerungsstücks oder Adapterstücks (16a) an der Werkzeugmaschine (12a; 12b; 12c; 12d), insbesondere einer Grundeinheit (22a; 22b; 22c; 22d) der Betätigungsvorrichtung (20a; 20b; 20c; 20d), wobei die Haltevorrichtung (18a) zumindest zwei Befestigungs- oder Fixierungselemente (100a, 102a, 122a, 124a) umfasst, wobei zumindest eine Handgriffeinheit (26a; 26d) der Betätigungsvorrichtung (20a; 20b; 20c; 20d), welche als Betätigungselement (34a; 34d) einer Schalteinheit (30a; 30b; 30c; 30d) der Betätigungsvorrichtung (20a; 20b; 20c; 20d) ausgebildet ist, entlang einer Längsachse (42a; 42b; 42c; 42d) einer Grundeinheit (22a; 22b; 22c; 22d) der Betätigungsvorrichtung (20a; 20b; 20c; 20d) zwischen den zwei Befestigungs- oder Fixierungselementen (100a, 102a, 122a, 124a) angeordnet ist.

13. Werkzeugmaschinensystem nach einem der Ansprüche 10 bis 12, **gekennzeichnet durch** zumindest ein Verlängerungsstück oder Adapterstück (16a) und zumindest eine Haltevorrichtung (18a) zu einem Verstauen des Verlängerungsstücks oder Adapterstücks (16a) an der Werkzeugmaschine (12a; 12b; 12c; 12d), insbesondere einer Grundeinheit (22a; 22b; 22c; 22d) der Betätigungsvorrichtung (20a; 20b; 20c; 20d), wobei in einem an der Werkzeugmaschine (12a; 12b; 12c; 12d) verstauten Zustand des Verlängerungsstücks oder Adapterstücks (16a) ein Verhältnis von einem minimalen Abstand (86a) zwischen dem Verlängerungsstück oder Adapterstück (16a) und zumindest einer Handgriffeinheit (26a; 26d) der Betätigungsvorrichtung (20a; 20b; 20c; 20d), welche als das Betätigungselement (34a; 34d) ausgebildet ist, vorzugsweise eines Hauptgriffbereichs (92a; 92d) des Betätigungselements (34a; 34d), und einer maximalen Quererstreckung (140a, 156a) des Betätigungselements (34a; 34d), welche insbesondere senkrecht zu einer Längsachse (44a; 44d) des Betätigungselements (34a; 34d) ausgerichtet ist, mindestens 0,35 beträgt.

14. Verfahren zu einem Betätigen eines Werkzeugmaschinensystems (10a; 10b; 10c; 10d) mit einer, insbesondere stabgebundenen, Werkzeugmaschine (12a; 12b; 12c; 12d), vorzugsweise einem Hochentaster, nach einem der Ansprüche 10 bis 13, insbesondere mittels einer Betätigungsvorrichtung (20a; 20b; 20c; 20d) nach einem der Ansprüche 1 bis 9, **dadurch gekennzeichnet, dass** in zumindest einem Verfahrensschritt (202a) mittels einer Schalteinheit (30a; 30b; 30c; 30d) einer Betätigungsvorrichtung (20a; 20b; 20c; 20d) der Werkzeugmaschine (12a; 12b; 12c; 12d) über eine Betätigung eines Betätigungselements (34a; 34d) der Schalteinheit (30a; 30b; 30c; 30d) entlang eines Bewegungspfads (38a; 38b; 38c; 38d), welcher einer Rotationsbewegung um eine Längsachse (42a; 42b; 42c; 42d) einer Grundeinheit (22a; 22b; 22c; 22d) und/oder um eine Längsachse (44a; 44d) des Betätigungselements (34a; 34d) folgt, eine Energieversorgung einer Antriebseinheit (32a) der Werkzeugmaschine (12a; 12b; 12c; 12d) freigegeben wird, wobei in zumindest einem weiteren Verfahrensschritt (204a) mittels der Schalteinheit (30a; 30b; 30c; 30d) in Abhängigkeit von einer, insbesondere der Betätigung zumindest im Wesentlichen direkt folgenden, weiteren Betätigung des Betätigungselements (34a; 34d) entlang eines weiteren, von dem Bewegungspfad (38a; 38b; 38c; 38d) verschiedenen weiteren Bewegungspfads (40a; 40b; 40c; 40d), welcher einer Linearbewegung entlang einer Längsachse (42a; 42b; 42c; 42d) einer Grundeinheit (22a; 22b; 22c; 22d) und/oder entlang einer Längsachse (44a; 44d) des Betätigungselements (34a; 34d) folgt, die Antriebseinheit (32a) zu einer Ausgabe einer Antriebskraft angesteuert wird.

## Claims

1. Actuating device for a machine tool (12a; 12b; 12c; 12d), in particular rod-borne, in particular for a pole-mounted pruner, having at least one at least substantially rod-shaped basic unit (22a; 22b; 22c; 22d), in particular configured at least partially as a housing (24a; 24d), having at least two hand grip units (26a, 28a; 26d, 28d), in particular arranged at least substantially coaxially to each other, spaced apart from each other, each of which is provided at least to a large extent to be gripped by at least one hand of a user, wherein the two hand grip units (26a, 28a; 26d, 28d) are each arranged on the base unit (22a; 22b; 22c; 22d) or are at least partially formed as part of the basic unit (22a; 22b; 22c; 22d), and with at least one switching unit (30a; 30b; 30c; 30d) for controlling at least one function of the machine tool (12a; 12b; 12c; 12d), wherein at least one hand grip unit (26a; 26d) of the two hand grip units (26a, 28a; 26d, 28d) is formed as an actuating element (34a; 34d) of the switching unit (30a; 30b; 30c; 30d), which is mounted movably relative to the base unit (22a; 22b; 22c; 22d) and/or relative to a further hand grip unit (28a; 28d) of the two hand grip units (26a, 28a; 26d, 28d) along at least two different movement paths (38a, 40a; 38b, 40b; 38c, 40c; 38d, 40d), wherein at least one movement path (38a; 38b; 38c; 38d) follows a rotational movement, **characterized in that** the at least one hand grip unit (26a; 26d) of the two hand grip units (26a, 28a; 26d, 28d) encloses the base unit (22a; 22b; 22c; 22d) in a tube-like manner, and/or **in that** the at least one movement path (38a; 38b; 38c; 38d) follows a rotational movement about a longitudinal axis (42a; 42b; 42c; 42d) of the base unit (22a; 22b; 22c; 22d) and/or about a longitudinal axis (44a; 44d) of the actuating element (34a; 34d).

2. Actuating device according to Claim 1, **characterized in that** at least one further movement path (40a; 40b; 40c; 40d) of the at least two different movement paths (38a, 40a; 38b, 40b; 38c, 40c; 38d, 40d) follows a linear movement which is oriented at least substantially parallel to a longitudinal axis (42a; 42b; 42c; 42d) of the base unit (22a; 22b; 22c; 22d) and/or of the actuating element (34a; 34d) and which is preferably designed as a pulling and/or pushing movement.

3. Actuating device according to Claim 1 or 2, **characterized in that** the switching unit (30a; 30b; 30c; 30d) comprises at least one restoring element (172a), which is provided to load the actuating element (34a; 34d) with a restoring force counter to at least one movement along at least one movement path (38a, 40a; 38b, 40b; 38c, 40c; 38d, 40d) of the at least two movement paths (38a, 40a; 38b, 40b; 38c, 40c; 38d, 40d).

4. Actuating device according to one of the preceding claims, **characterized by** at least one connecting device (66a) for receiving at least one tool attachment (14a) and/or an extension piece or adapter piece (16a), wherein the at least one hand grip unit (26a; 26d) of the at least two hand grip units (26a, 28a; 26d, 28d), which is configured as an actuating element (34a; 34d) of the switching unit (30a; 30b; 30c; 30d) is formed, is arranged on the base unit (22a; 22b; 22c; 22d) behind the further hand grip unit (28a; 28d) of at least two hand grip units (26a, 28a; 26d, 28d) as viewed from the connecting device (66a).

5. Actuating device according to one of the preceding claims, **characterized in that** the actuating element (34a; 34d) encloses the base unit (22a; 22b; 22c; 22d) at least for the most part around the longitudinal axis (42a; 42b; 42c; 42d) of the base unit (22a; 22b; 22c; 22d), in particular in a sleeve-like manner, in at least one plane oriented perpendicularly with respect to a longitudinal axis (42a; 42b; 42c; 42d) of the base unit (22a; 22b; 22c; 22d).

6. Actuating device according to one of the preceding claims, **characterized in that** the actuating element (34a; 34d) has a maximum longitudinal extent (138a), which, in particular in a state of the actuating element (34a; 34d) arranged on the base unit (22a; 22b; 22c; 22d), is oriented at least substantially parallel to a longitudinal axis (42a; 42b; 42c; 42d) of the base unit (22a; 22b; 22c; 22d), wherein the maximum longitudinal extent (138a) of the actuating element (34a; 34d) is at least twice, preferably at least three to six times, as large as a maximum transverse extent (140a, 156a) of the actuating element (34a; 34d), which is in particular oriented at least substantially perpendicularly with respect to the maximum longitudinal extent (138a) of the actuating element (34a; 34d).

7. Actuating device according to one of the preceding claims, **characterized in that** the actuating element (34a; 34d) has an at least substantially dumbbell-shaped basic shape in at least one sectional plane which includes a longitudinal axis (44a; 44d) of the actuating element (34a; 34d), in particular on at least one side as viewed from the longitudinal axis (44a; 44d) of the actuating element (34a; 34d) or mirror-symmetrically with respect to the longitudinal axis (44a; 44d) of the actuating element (34a; 34d).

8. Actuating device according to one of the preceding claims, **characterized in that** the switching unit (30a; 30b; 30c; 30d) comprises at least one angled, preferably L-shaped or U-shaped, slotted guide (174a; 174b; 174c), which is delimited by the base unit (22a; 22b; 22c; 22d) in the region of at least one hand grip unit (26a; 26d), wherein the switching unit (30a; 30b; 30c; 30d) comprises at least one guide element (162a; 162b; 162c) which is fixed to the actuating element (34a; 34d) and is guided in the slotted guide (174a; 174b; 174c).

9. Actuating device according to one of the preceding claims, **characterized in that** the switching unit (30a; 30b; 30c; 30d) comprises at least one switching element (170a) which is configured, in particular, as a proportional switch and is provided to output at least one switching signal proportional to at least one movement of the actuating element (34a; 34d) along at least one movement path (40a; 40b; 40c; 40d), oriented in particular parallel to a longitudinal axis (42a; 42b; 42c; 42d) of the base unit (22a; 22b; 22c; 22d) and/or the actuating element (34a; 34d), of the at least two movement paths (38a, 40a; 38b, 40b; 38c, 40c; 38d, 40d), wherein the at least one switching signal is preferably provided for actuating a drive unit (32a) of the machine tool (12a; 12b; 12c; 12d).

10. Machine tool system comprising at least one machine tool (12a; 12b; 12c; 12d), in particular rod-borne, preferably a pole-mounted pruner, wherein the machine tool (12a; 12b; 12c; 12d) comprises at least one actuating device (20a; 20b; 20c; 20d) according to one of the preceding claims.

11. Machine tool system according to Claim 10, **characterized in that** the machine tool (12a; 12b; 12c; 12d) comprises at least one drive unit (32a), wherein a switching unit (30a; 30b; 30c; 30d) of the actuating device (20a; 20b; 20c; 20d) comprises at least one cam element (184a) which is operatively connected to an actuating element (34a; 34d) of the switching unit (30a; 30b; 30c; 30d) and is provided to actuate at least one switching element (168a) of the switching unit (30a; 30b; 30c; 30d) in a manner dependent on a movement of the actuating element (34a; 34d), in particular along one movement path (38a; 38b; 38c; 38d) of at least two different movement paths (38a, 40a; 38b, 40b; 38c, 40c; 38d, 40d) of the actuating element (34a; 34d), wherein the switching element (168a) is provided to activate a power supply of the drive unit (32a) of the machine tool (12a; 12b; 12c; 12d) in a manner dependent on an actuation.

12. Machine tool system according to Claim 10 or 11, **characterized by** at least one extension piece or adapter piece (16a) and at least one holding device (18a) for stowing the extension piece or adapter piece (16a) on the machine tool (12a; 12b; 12c; 12d), in particular a base unit (22a; 22b; 22c; 22d) of the actuating device (20a; 20b; 20c; 20d), wherein the holding device (18a) comprises at least two fastening or fixing elements (100a, 102a, 122a, 124a), wherein at least one hand grip unit (26a; 26d) of the actuating device (20a; 20b; 20c; 20d), which is formed as an actuating element (34a; 34d) of a switching unit (30a; 30b; 30c; 30d) of the actuating device (20a; 20b; 20c; 20d), is arranged along a longitudinal axis (42a; 42b; 42c; 42d) of a base unit (22a; 22b; 22c; 22d) of the actuating device (20a; 20b; 20c; 20d) between the two fastening or fixing elements (100a, 102a, 122a, 124a).

13. Machine tool system according to one of Claims 10 to 12, **characterized by** at least one extension piece or adapter piece (16a) and at least one holding device (18a) for stowing the extension piece or adapter piece (16a) on the machine tool (12a; 12b; 12c; 12d), in particular a base unit (22a; 22b; 22c; 22d) of the actuating device (20a; 20b; 20c; 20d), wherein in a state of the extension piece or adapter piece (16a) stowed on the machine tool (12a; 12b; 12c; 12d), a ratio of a minimum distance (86a) between the extension piece or adapter piece (16a) and at least one hand grip unit (26a; 26d) of the actuating device (20a; 20b; 20c; 20d), which is configured as the actuating element (34a; 34d), preferably of a main grip region (92a; 92d) of the actuating element (34a; 34d), and a maximum transverse extent (140a, 156a) of the actuating element (34a; 34d), which is oriented in particular perpendicularly with respect to a longitudinal axis (44a; 44d) of the actuating element (34a; 34d), is at least 0.35.

14. Method for actuating a machine tool system (10a; 10b; 10c; 10d) with a machine tool (12a; 12b; 12c; 12d), in particular rod-borne, preferably a pole-mounted pruner, according to one of Claims 10 to 13, in particular by means of an actuating device (20a; 20b; 20c; 20d) according to one of Claims 1 to 9, **characterized in that**, in at least one method step (202a), a power supply of a drive unit (32a) of the machine tool (12a; 12b; 12c; 12d) is activated by means of a switching unit (30a; 30b; 30c; 30d) of an actuating device (20a; 20b; 20c; 20d) of the machine tool (12a; 12b; 12c; 12d) via an actuation of an actuating element (34a; 34d) of the switching unit (30a; 30b; 30c; 30d) along a movement path (38a; 38b; 38c; 38d) which follows a rotational movement around a longitudinal axis (42a; 42b; 42c; 42d) of a base unit (22a; 22b; 22c; 22d) and/or around a longitudinal axis (44a; 44d) of the actuating element (34a; 34d), wherein, in at least one further method step (204a), the drive unit (32a) is actuated to output a driving force by means of the switching unit (30a; 30b; 30c; 30d) in a manner dependent on a further actuation, in particular at least substantially directly following the actuation, of the actuating element (34a; 34d) along a further movement path (40a; 40b; 40c; 40d) which is different from the movement path (38a; 38b; 38c; 38d) and follows a linear movement along a longitudinal axis (42a; 42b; 42c; 42d) of a base unit (22a; 22b; 22c; 22d) and/or along a longitudinal axis (44a; 44d) of the actuating element (34a; 34d).

## Revendications

1. Dispositif d'actionnement pour une machine-outil (12a ; 12b ; 12c ; 12d), en particulier sur tige, en particulier pour une élagueuse sur perche, avec au moins une unité de base (22a ; 22b ; 22c ; 22d) au moins sensiblement en forme de tige, réalisée en particulier au moins en partie comme un boîtier (24a ; 24d), avec au moins deux unités de poignée (26a, 28a ; 26d, 28d) disposées à distance l'une de l'autre, disposées en particulier au moins sensiblement coaxialement l'une par rapport à l'autre, lesquelles sont respectivement prévues pour être au moins en grande partie saisies par au moins une main d'un utilisateur, les deux unités de poignée (26a, 28a ; 26d, 28d) étant disposées chacune sur l'unité de base (22a ; 22b ; 22c ; 22d) ou étant réalisées au moins en partie comme une partie de l'unité de base (22a ; 22b ; 22c ; 22d), et avec au moins une unité de commutation (30a ; 30b ; 30c ; 30d) pour commander au moins une fonction de la machine-outil (12a ; 12b ; 12c ; 12d), au moins une unité de poignée (26a ; 26d) des deux unités de poignée (26a, 28a ; 26d, 28d) étant réalisée comme un élément d'actionnement (34a ; 34d) de l'unité de commutation (30a ; 30b ; 30c ; 30d), lequel est monté de manière mobile le long d'au moins deux trajets de déplacement (38a, 40a ; 38b, 40b ; 38c, 40c ; 38d, 40d) différents par rapport à l'unité de base (22a ; 22b ; 22c ; 22d) et/ou par rapport à une autre unité de poignée (28a ; 28d) des deux unités de poignée (26a, 28a ; 26d, 28d), au moins un trajet de déplacement (38a ; 38b ; 38c ; 38d) suivant un déplacement par rotation, **caractérisé en ce que** l'au moins une unité de poignée (26a ; 26d) des deux unités de poignée (26a, 28a ; 26d, 28d) entoure à la manière d'un tube l'unité de base (22a ; 22b ; 22c ; 22d), et/ou que l'au moins un trajet de déplacement (38a ; 38b ; 38c ; 38d) suit un déplacement par rotation autour d'un axe longitudinal (42a ; 42b ; 42c ; 42d) de l'unité de base (22a ; 22b ; 22c ; 22d) et/ou autour d'un axe longitudinal (44a ; 44d) de l'élément d'actionnement (34a ; 34d).

2. Dispositif d'actionnement selon la revendication 1, **caractérisé en ce qu'**au moins un autre trajet de déplacement (40a ; 40b ; 40c ; 40d) des au moins deux trajets de déplacement (38a, 40a ; 38b, 40b ; 38c, 40c ; 38d, 40d) suit un déplacement linéaire, qui est orienté au moins sensiblement parallèlement à un axe longitudinal (42a ; 42b ; 42c ; 42d) de l'unité de base (22a ; 22b ; 22c ; 22d) et/ou de l'élément d'actionnement (34a ; 34d) et qui est réalisé de manière préférée comme un déplacement par traction et/ou par pression.

3. Dispositif d'actionnement selon la revendication 1 ou 2, **caractérisé en ce que** l'unité de commutation (30a ; 30b ; 30c ; 30d) comprend au moins un élément de rappel (172a), qui est prévu pour soumettre l'élément d'actionnement (34a ; 34d) à l'action d'une force de rappel à l'encontre d'au moins un déplacement le long d'au moins un trajet de déplacement (38a, 40a ; 38b, 40b ; 38c, 40c ; 38d, 40d) des au moins deux trajets de déplacement (38a, 40a ; 38b, 40b ; 38c, 40c ; 38d, 40d).

4. Dispositif d'actionnement selon l'une des revendications précédentes, **caractérisé par** au moins un dispositif de liaison (66a) destiné à recevoir au moins un accessoire (14a) d'outil et/ou une rallonge ou un adaptateur (16a), l'au moins une unité de poignée (26a ; 26d) des au moins deux unités de poignée (26a, 28a ; 26d, 28d), qui est réalisée comme un élément d'actionnement (34a ; 34d) de l'unité de commutation (30a ; 30b ; 30c ; 30d), étant disposée, vue depuis le dispositif de liaison (66a), derrière l'autre unité de poignée (28a ; 28d) des au moins deux unités de poignée (26a, 28a ; 26d, 28d) sur l'unité de base (22a ; 22b ; 22c ; 22d).

5. Dispositif d'actionnement selon l'une des revendications précédentes, **caractérisé en ce que** l'élément d'actionnement (34a ; 34d) entoure, au moins en grande partie, en particulier à la manière d'un manchon, l'unité de base (22a ; 22b ; 22c ; 22d) dans au moins un plan orienté perpendiculairement à un axe longitudinal (42a ; 42b ; 42c ; 42d) de l'unité de base (22a ; 22b ; 22c ; 22d) autour de l'axe longitudinal (42a ; 42b ; 42c ; 42d) de l'unité de base (22a ; 22b ; 22c ; 22d).

6. Dispositif d'actionnement selon l'une des revendications précédentes, **caractérisé en ce que** l'élément d'actionnement (34a ; 34d) présente une extension longitudinale maximale (138a), qui est orientée, en particulier dans un état de l'élément d'actionnement (34a ; 34d) disposé sur l'unité de base (22a ; 22b ; 22c ; 22d), au moins sensiblement parallèlement à un axe longitudinal (42a ; 42b ; 42c ; 42d) de l'unité de base (22a ; 22b ; 22c ; 22d), l'extension longitudinale maximale (138a) de l'élément d'actionnement (34a ; 34d) étant au moins deux fois, de préférence au moins trois à six fois plus grande qu'une extension transversale maximale (140a, 156a) de l'élément d'actionnement (34a ; 34d), qui est orientée en particulier au moins sensiblement perpendiculairement à l'extension longitudinale maximale (138a) de l'élément d'actionnement (34a ; 34d).

7. Dispositif d'actionnement selon l'une des revendications précédentes, **caractérisé en ce que** l'élément d'actionnement (34a ; 34d) présente une forme de base au moins sensiblement en forme d'haltère dans au moins un plan de coupe comprenant un axe longitudinal (44a ; 44d) de l'élément d'actionnement (34a ; 34d), en particulier sur au moins un côté vu depuis l'axe longitudinal (44a ; 44d) de l'élément d'actionnement (34a ; 34d) ou en symétrie en miroir par rapport à l'axe longitudinal (44a ; 44d) de l'élément d'actionnement (34a ; 34d).

8. Dispositif d'actionnement selon l'une des revendications précédentes, **caractérisé en ce que** l'unité de commutation (30a ; 30b ; 30c ; 30d) comprend au moins une coulisse de guidage (174a ; 174b ; 174c) coudée, de préférence en forme de L ou de U, laquelle est délimitée par l'unité de base (22a ; 22b ; 22c ; 22d) dans la zone de l'au moins une unité de poignée (26a ; 26d), l'unité de commutation (30a ; 30b ; 30c ; 30d) comprenant au moins un élément de guidage (162a ; 162b ; 162c) bloqué sur l'élément d'actionnement (34a ; 34d), lequel est guidé dans la coulisse de guidage (174a ; 174b ; 174c).

9. Dispositif d'actionnement selon l'une des revendications précédentes, **caractérisé en ce que** l'unité de commutation (30a ; 30b ; 30c ; 30d) comprend au moins un élément de commutation (170a) réalisé en particulier comme un commutateur proportionnel, qui est prévu pour délivrer au moins un signal de commutation proportionnellement à au moins un déplacement de l'élément d'actionnement (34a ; 34d) le long d'au moins un trajet de déplacement (40a ; 40b ; 40c ; 40d) des au moins deux trajets de déplacement (38a, 40a ; 38b, 40b ; 38c, 40c ; 38d, 40d) orienté en particulier parallèlement à un axe longitudinal (42a ; 42b ; 42c ; 42d) de l'unité de base (22a ; 22b ; 22c ; 22d) et/ou de l'élément d'actionnement (34a ; 34d), l'au moins un signal de commutation étant prévu de préférence pour piloter une unité d'entraînement (32a) de la machine-outil (12a ; 12b ; 12c ; 12d).

10. Système de machine-outil avec au moins une machine-outil (12a ; 12b ; 12c ; 12d), en particulier sur tige, de manière préférée une élagueuse sur perche, la machine-outil (12a ; 12b ; 12c ; 12d) comprenant au moins un dispositif d'actionnement (20a ; 20b ; 20c ; 20d) selon l'une des revendications précédentes.

11. Système de machine-outil selon la revendication 10, **caractérisé en ce que** la machine-outil (12a ; 12b ; 12c ; 12d) comprend au moins une unité d'entraînement (32a), une unité de commutation (30a ; 30b ; 30c ; 30d) du dispositif d'actionnement (20a ; 20b ; 20c ; 20d) comprenant au moins un élément de came (184a) relié de manière fonctionnelle à un élément d'actionnement (34a ; 34d) de l'unité de commutation (30a ; 30b ; 30c ; 30d), lequel est prévu pour actionner au moins un élément de commutation (168a) de l'unité de commutation (30a ; 30b ; 30c ; 30d) en fonction d'un déplacement de l'élément d'actionnement (34a ; 34d), en particulier le long d'un trajet de déplacement (38a ; 38b ; 38c ; 38d) d'au moins deux trajets de déplacement (38a, 40a ; 38b, 40b ; 38c, 40c ; 38d, 40d) différents de l'élément d'actionnement (34a ; 34d), l'élément de commutation (168a) étant prévu pour déverrouiller une alimentation en énergie de l'unité d'entraînement (32a) de la machine-outil (12a ; 12b ; 12c ; 12d) en fonction d'un actionnement.

12. Système de machine-outil selon la revendication 10 ou 11, **caractérisé par** au moins une rallonge ou un adaptateur (16a) et au moins un dispositif de maintien (18a) destiné à ranger la rallonge ou l'adaptateur (16a) sur la machine-outil (12a ; 12b ; 12c ; 12d), en particulier une unité de base (22a ; 22b ; 22c ; 22d) du dispositif d'actionnement (20a ; 20b ; 20c ; 20d), le dispositif de maintien (18a) comprenant au moins deux éléments de fixation ou de blocage (100a, 102a, 122a, 124a), au moins une unité de poignée (26a ; 26d) du dispositif d'actionnement (20a ; 20b ; 20c ; 20d), laquelle est réalisée comme un élément d'actionnement (34a ; 34d) d'une unité de commutation (30a ; 30b ; 30c ; 30d) du dispositif d'actionnement (20a ; 20b ; 20c ; 20d), étant disposée entre les deux éléments de fixation ou de blocage (100a, 102a, 122a, 124a) le long d'un axe longitudinal (42a ; 42b ; 42c ; 42d) d'une unité de base (22a ; 22b ; 22c ; 22d) du dispositif d'actionnement (20a ; 20b ; 20c ; 20d).

13. Système de machine-outil selon l'une des revendications 10 à 12, **caractérisé par** au moins une rallonge ou un adaptateur (16a) et au moins un dispositif de maintien (18a) destiné à ranger la rallonge ou l'adaptateur (16a) sur la machine-outil (12a ; 12b ; 12c ; 12d), en particulier une unité de base (22a ; 22b ; 22c ; 22d) du dispositif d'actionnement (20a ; 20b ; 20c ; 20d), un rapport entre une distance minimale (86a) entre la rallonge ou l'adaptateur (16a) et au moins une unité de poignée (26a ; 26d) du dispositif d'actionnement (20a ; 20b ; 20c ; 20d), laquelle est réalisée comme l'élément d'actionnement (34a ; 34d), de préférence d'une zone de préhension principale (92a ; 92d) de l'élément d'actionnement (34a ; 34d), et une extension transversale maximale (140a, 156a) de l'élément d'actionnement (34a ; 34d), laquelle est orientée en particulier perpendiculairement à un axe longitudinale (44a ; 44d) de l'élément d'actionnement (34a ; 34d), étant égal au moins à 0,35 dans un état de la rallonge ou de l'adaptateur (16a) rangé sur la machine-outil (12a ; 12b ; 12c ; 12d).

14. Procédé d'actionnement d'un système de machine-outil (10a ; 10b ; 10c ; 10d) avec une machine-outil (12a ; 12b ; 12c ; 12d), en particulier sur tige, de préférence une élagueuse sur perche, selon l'une des revendications 10 à 13, en particulier au moyen d'un dispositif d'actionnement (20a ; 20b ; 20c ; 20d) selon l'une des revendications 1 à 9, **caractérisé en ce que** dans au moins une étape de procédé (202a), une alimentation en énergie d'une unité d'entraînement (32a) de la machine-outil (12a ; 12b ; 12c ; 12d) est débloquée au moyen d'une unité de commutation (30a ; 30b ; 30c ; 30d) d'un dispositif d'actionnement (20a ; 20b ; 20c ; 20d) de la machine-outil (12a ; 12b ; 12c ; 12d) par un actionnement de l'élément d'actionnement (34a ; 34d) de l'unité de commutation (30a ; 30b ; 30c ; 30d) le long d'un trajet de déplacement (38a ; 38b ; 38c ; 38d), qui suit un déplacement par rotation autour d'un axe longitudinal (42a ; 42b ; 42c ; 42d) d'une unité de base (22a ; 22b ; 22c ; 22d) et/ou autour d'un axe longitudinal (44a ; 44d) de l'élément d'actionnement (34a ; 34d), l'unité d'entraînement (32a) étant pilotée pour délivrer une force d'entraînement, dans au moins une autre étape de procédé (204a), au moyen de l'unité de commutation (30a ; 30b ; 30c ; 30d) en fonction d'un autre actionnement de l'élément d'actionnement (34a ; 34d), en particulier suivant au moins sensiblement directement l'actionnement le long d'un autre trajet de déplacement (40a; 40b ; 40c ; 40d) différent du trajet de déplacement (38a ; 38b ; 38c ; 38d) , lequel suit un déplacement linéaire le long d'un axe longitudinal (42a ; 42b ; 42c ; 42d) d'une unité de base (22a ; 22b ; 22c ; 22d) et/ou le long d'un axe longitudinal (44a ; 44d) de l'élément d'actionnement (34a ; 34d).
